# EUROPEAN PATENT SPECIFICATION

(11) **EP 3 745 242 B1**
(45) Date of publication and mention of the grant of the patent: **22.01.2025**
(21) Application number: 20162888.0
(22) Date of filing: 13.03.2020
(51) Int. Cl.: G06F 3/0482, G06F 3/04883, G06F 3/16, G06F 9/451

(54) **USER ACTIVITY SHORTCUT SUGGESTIONS**
VORSCHLÄGE FÜR BENUTZERAKTIVITÄTSKÜRZEL
SUGGESTIONS DE RACCOURCIS D'ACTIVITÉ D'UTILISATEUR

(30) Priority: 31.05.2019 US 201962855631 P; 02.08.2019 DK PA201970494; 04.10.2019 US 201916592906
(43) Date of publication of application: 02.12.2020
(73) Proprietor: Apple Inc., Cupertino, CA 95014 (US)
(72) Inventor: BLATZ, John L, Cupertino, CA 95014 (US); MOON, Jay, Cupertino, CA 95014 (US); MALTA, Andrew William, Cupertino, CA 95014 (US); RAMASWAMY, Pallavika, Cupertino, CA 95014 (US); WEINSTEIN, Ari, Cupertino, CA 95014 (US)
(74) Representative: COPA Copenhagen Patents

(56) References cited:
- US-A1- 2017 005 818
- US-A1- 2019 079 476
- GADGET HACKS: "Tasker Too Complicated? Give MacroDroid a Try [How-To]", YOUTUBE, 28 May 2016 (2016-05-28), pages 1 pp., XP054980673, Retrieved from the Internet <URL:https://www.youtube.com/watch?v=8YL9cWCykKc> [retrieved on 20200709]
- ANONYMOUS: "How can I use voice or phrases as triggers to Macrodroid ? - MacroDroid Forums", 9 May 2018 (2018-05-09), XP055712798, Retrieved from the Internet <URL:https://www.tapatalk.com/groups/macrodroid/how-can-i-use-voice-or-phrases-as-triggers-to-macr-t4845.html> [retrieved on 20200708]
- ANDROID AUTHORITY: "How to use Tasker : A Beginner's Guide", YOUTUBE, 1 May 2013 (2013-05-01), pages 1 pp., XP054980674, Retrieved from the Internet <URL:https://www.youtube.com/watch?v=rDpdS_YWzFc> [retrieved on 20200709]
- POCKETABLES.COM: "AutoRemote example profile", YOUTUBE, 26 June 2013 (2013-06-26), pages 1 pp., XP054980678, Retrieved from the Internet <URL:https://www.youtube.com/watch?v=kC_zhUnNZj8> [retrieved on 20200709]
- AUTOMATE YOUR LIFE: "How to Setup Google Home Routines - A Google Home Routines Walkthrough", YOUTUBE, 12 August 2018 (2018-08-12), pages 1 pp., XP054980677, Retrieved from the Internet <URL:https://www.youtube.com/watch?v=pXokZHP9kZg> [retrieved on 20200709]
- ANONYMOUS: "Context-sensitive user interface - Wikipedia", 7 April 2019 (2019-04-07), pages 1 - 3, XP055928495, Retrieved from the Internet <URL:https://web.archive.org/web/20190407003349/https://en.wikipedia.org/wiki/Context-sensitive_user_interface> [retrieved on 20220607]

## Description

### FIELD

This relates generally to digital assistants and, more specifically, to providing shortcut suggestions for a user activity using a digital assistant.

### BACKGROUND

Intelligent automated assistants (or digital assistants) can provide a beneficial interface between human users and electronic devices. Such assistants can allow users to interact with devices or systems using natural language in spoken and/or text forms. For example, a user can provide a speech input containing a user request to a digital assistant operating on an electronic device. The digital assistant can interpret the user's intent from the speech input and operationalize the user's intent into tasks. The tasks can then be performed by executing one or more services of the electronic device, and a relevant output responsive to the user request can be returned to the user. In some cases, however, a user may want the digital assistant to perform multiple tasks, for instance, when the user is engaged in a specific user activity. Further, in many instances digital assistants fail to provide an intuitive system for performing multiple tasks at the same time, without requiring the user to use multiple interfaces and confirm multiple tasks or parameters. The following references correspond to relevant prior art related to the current invention: The youtube videos *Gadget Hacks: "Tasker Too Complicated? Give MacroDroid a Try [How-To],* (https://www.youtube.com/watch?v=8YL9cWCykKc), and *Android Authority: "How to use Tasker : A Beginner's Guide"* (https:Hwww.youtube.com/watch?v=rDpdS_YWzFc) disclose different ways for creating task macros. They show how tasks can be linked to triggers related to specific rules and conditions.

### SUMMARY

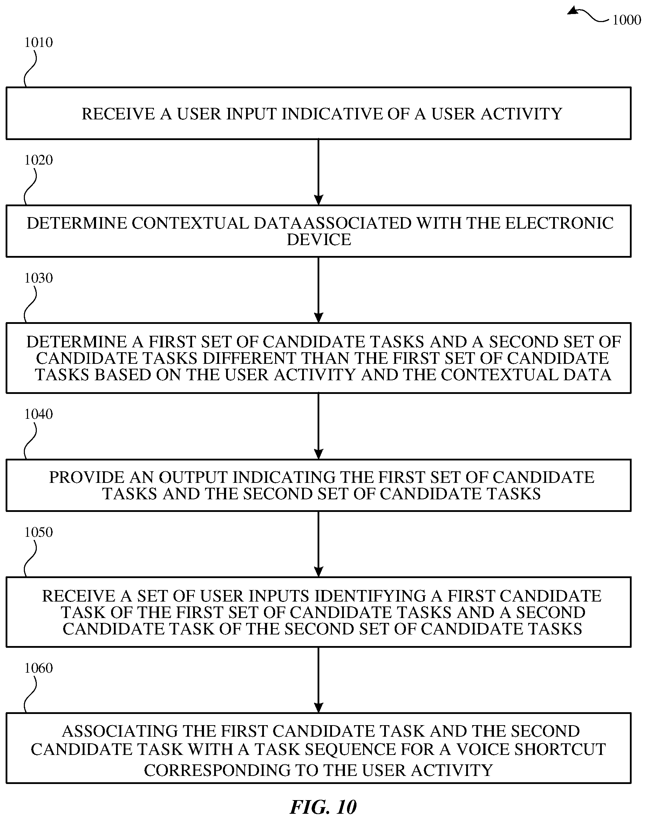

The present invention is defined by the independent claims. The dependent claims define further advantageous embodiments. Embodiments of the invention are also described below with reference to Figure 10. It shall also be noted that the references made through this description to an "embodiment", "example", "aspect" or "configuration" may point to alternative aspects related to the invention but do not necessarily correspond to real realisations of it. The actual embodiments of the invention fall within the scope of the appended claims. It is to be understood that other examples can be practiced, and various modifications and structural changes can be made to these actual embodiments of the invention without departing from the scope of the claims, as would be understood by one of ordinary skill in the art.

The current invention involves the selection of first and second tasks by a user and their association to a voice shortcut allowing a user to accurately and efficiently generate user-specific task sequences to perform tasks during the user activity on the electronic device. For example, allowing a user to associate tasks with task sequences for voice shortcuts in this manner allows a user to perform multiple tasks during a user activity by providing a simple voice shortcut, thereby increasing the efficiency of executing tasks with the electronic device. Thus, associating tasks with the task sequence for the voice shortcut in the manner described provides for more efficient use of the electronic device (e.g., by allowing the user to execute many tasks at once without requiring interacting with several different user interfaces), which, additionally, reduces power usage and improves battery life of the device by enabling the user to use the device more quickly and efficiently.

### BRIEF DESCRIPTION OF THE DRAWINGS

FIG. 1 is a block diagram illustrating a system and environment for implementing a digital assistant, according to various examples.
FIG. 2A is a block diagram illustrating a portable multifunction device implementing the client-side portion of a digital assistant, according to various examples.
FIG. 2B is a block diagram illustrating exemplary components for event handling, according to various examples.
FIG. 3 illustrates a portable multifunction device implementing the client-side portion of a digital assistant, according to various examples.
FIG. 4 is a block diagram of an exemplary multifunction device with a display and a touch-sensitive surface, according to various examples.
FIG. 5A illustrates an exemplary user interface for a menu of applications on a portable multifunction device, according to various examples.
FIG. 5B illustrates an exemplary user interface for a multifunction device with a touch-sensitive surface that is separate from the display, according to various examples.
FIG. 6A illustrates a personal electronic device, according to various examples.
FIG. 6B is a block diagram illustrating a personal electronic device, according to various examples.
FIGS. 6C-6D illustrate exemplary components of a personal electronic device having a touch-sensitive display and intensity sensors in accordance with some embodiments.
FIGS. 6E-6H illustrate exemplary components and user interfaces of a personal electronic device in accordance with some embodiments.
FIG. 7A is a block diagram illustrating a digital assistant system or a server portion thereof, according to various examples.
FIG. 7B illustrates the functions of the digital assistant shown in FIG. 7A, according to various examples.
FIG. 7C illustrates a portion of an ontology, according to various examples.
FIGS. 8A-8G illustrate exemplary user interfaces for associating tasks with a task sequence for a voice shortcut corresponding to a user activity, according to various examples.
FIGS 9A-9C is a flow diagram illustrating a process for associating tasks with a task sequence for a voice shortcut corresponding to a user activity
FIG. 10 is a flow diagram illustrating a process for associating tasks with a task sequence for a voice shortcut corresponding to a user activity, according to the current invention.

### DETAILED DESCRIPTION

In the following description of examples, reference is made to the accompanying drawings in which are shown by way of illustration specific examples that can be practiced. It is to be understood that other examples can be used and structural changes can be made without departing from the scope of the invention, as defined by the appended claims..

The present disclosure generally relates to associating tasks with voice shortcuts corresponding to user activities based on the user activity and contextual data associated with the user activity. For example, the present disclosure contemplates receiving a first user input indicative of a user activity, determining contextual data associated with the user activity, determining, based on the user activity and the contextual data, a first set of candidate tasks and a second set of candidate tasks different from the first set of candidate tasks, providing an output indicating the first set of candidate tasks and the second set of candidate tasks, receiving a set of user inputs identifying a first candidate task of the first set of candidate tasks and a second candidate task of the second set of candidate tasks, and associating the first candidate task and the second candidate task with a voice shortcut corresponding to the user activity. In this manner, voice shortcuts that allow for efficient execution of multiple tasks during a user activity can be generated.

Although the following description uses terms "first," "second," etc. to describe various elements, these elements should not be limited by the terms. These terms are only used to distinguish one element from another. For example, a first input could be termed a second input, and, similarly, a second input could be termed a first input, without departing from the scope of the various described examples. The first input and the second input are both inputs and, in some cases, are separate and different inputs.

The terminology used in the description of the various described examples herein is for the purpose of describing particular examples only and is not intended to be limiting. As used in the description of the various described examples and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context.

### 1. System and Environment

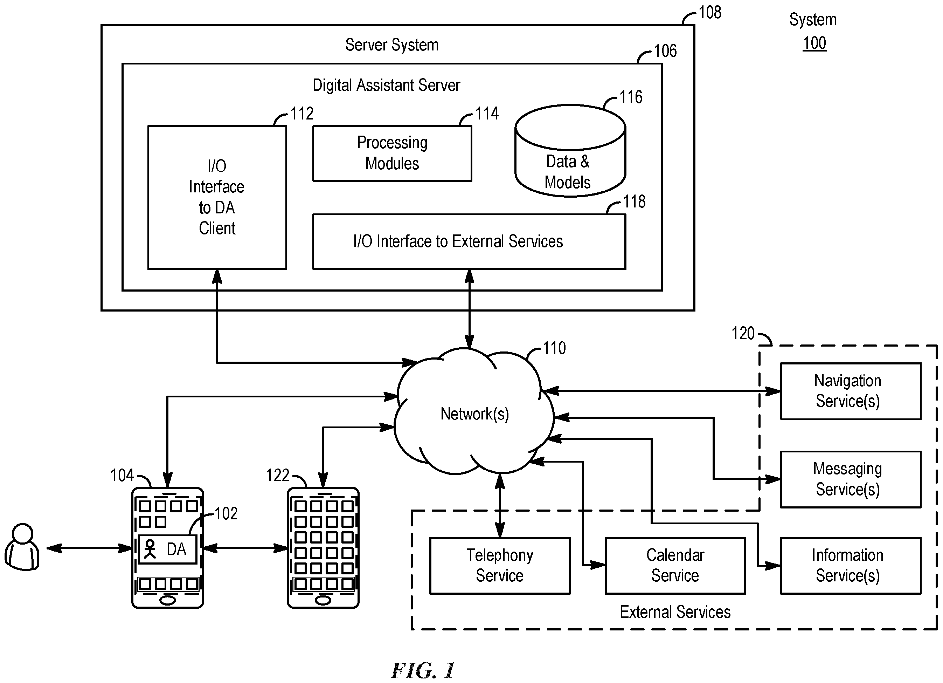

FIG. 1 illustrates a block diagram of system 100 according to various examples. In some examples, system 100 implements a digital assistant. The terms "digital assistant," "virtual assistant," "intelligent automated assistant," or "automatic digital assistant" refer to any information processing system that interprets natural language input in spoken and/or textual form to infer user intent, and performs actions based on the inferred user intent. For example, to act on an inferred user intent, the system performs one or more of the following: identifying a task flow with steps and parameters designed to accomplish the inferred user intent, inputting specific requirements from the inferred user intent into the task flow; executing the task flow by invoking programs, methods, services, APIs, or the like; and generating output responses to the user in an audible (e.g., speech) and/or visual form.

Specifically, a digital assistant is capable of accepting a user request at least partially in the form of a natural language command, request, statement, narrative, and/or inquiry. Typically, the user request seeks either an informational answer or performance of a task by the digital assistant. A satisfactory response to the user request includes a provision of the requested informational answer, a performance of the requested task, or a combination of the two. For example, a user asks the digital assistant a question, such as "Where am I right now?" Based on the user's current location, the digital assistant answers, "You are in Central Park near the west gate." The user also requests the performance of a task, for example, "Please invite my friends to my girlfriend's birthday party next week." In response, the digital assistant can acknowledge the request by saying "Yes, right away," and then send a suitable calendar invite on behalf of the user to each of the user's friends listed in the user's electronic address book. During performance of a requested task, the digital assistant sometimes interacts with the user in a continuous dialogue involving multiple exchanges of information over an extended period of time. There are numerous other ways of interacting with a digital assistant to request information or performance of various tasks. In addition to providing verbal responses and taking programmed actions, the digital assistant also provides responses in other visual or audio forms, e.g., as text, alerts, music, videos, animations, etc.

As shown in FIG. 1, in some examples, a digital assistant is implemented according to a client-server model. The digital assistant includes client-side portion 102 (hereafter "DA client 102") executed on user device 104 and server-side portion 106 (hereafter "DA server 106") executed on server system 108. DA client 102 communicates with DA server 106 through one or more networks 110. DA client 102 provides client-side functionalities such as user-facing input and output processing and communication with DA server 106. DA server 106 provides server-side functionalities for any number of DA clients 102 each residing on a respective user device 104.

In some examples, DA server 106 includes client-facing I/O interface 112, one or more processing modules 114, data and models 116, and I/O interface to external services 118. The client-facing I/O interface 112 facilitates the client-facing input and output processing for DA server 106. One or more processing modules 114 utilize data and models 116 to process speech input and determine the user's intent based on natural language input. Further, one or more processing modules 114 perform task execution based on inferred user intent. In some examples, DA server 106 communicates with external services 120 through network(s) 110 for task completion or information acquisition. I/O interface to external services 118 facilitates such communications.

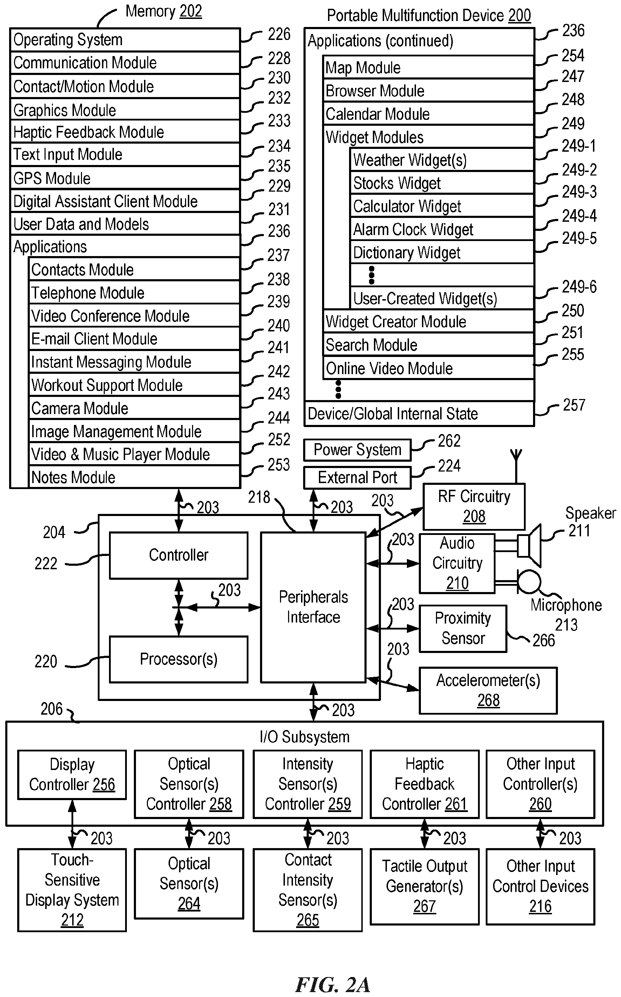

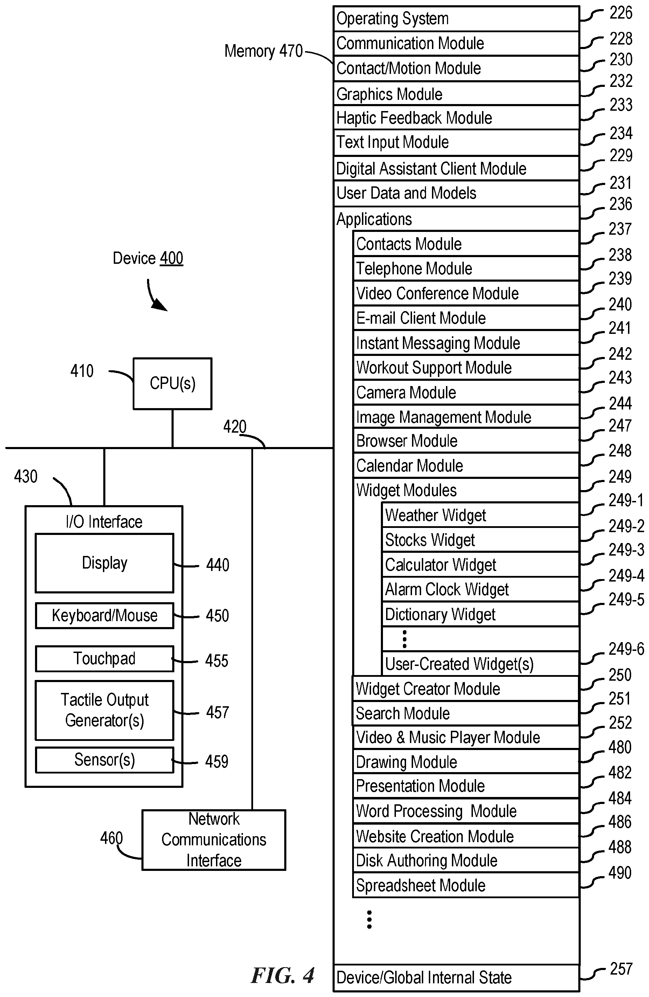

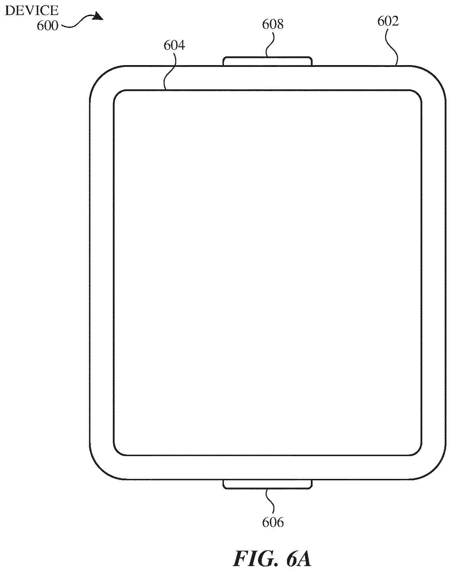

User device 104 can be any suitable electronic device. In some examples, user device 104 is a portable multifunctional device (e.g., device 200, described below with reference to FIG. 2A), a multifunctional device (e.g., device 400, described below with reference to FIG. 4), or a personal electronic device (e.g., device 600, described below with reference to FIG. 6A-B.) A portable multifunctional device is, for example, a mobile telephone that also contains other functions, such as PDA and/or music player functions. Specific examples of portable multifunction devices include the Apple Watch^{®}, iPhone^{®}, iPod Touch^{®}, and iPad^{®} devices from Apple Inc. of Cupertino, California. Other examples of portable multifunction devices include, without limitation, earphones/headphones, speakers, and laptop or tablet computers. Further, in some examples, user device 104 is a non-portable multifunctional device. In particular, user device 104 is a desktop computer, a game console, a speaker, a television, or a television set-top box. In some examples, user device 104 includes a touch-sensitive surface (e.g., touch screen displays and/or touchpads). Further, user device 104 optionally includes one or more other physical user-interface devices, such as a physical keyboard, a mouse, and/or a joystick. Various examples of electronic devices, such as multifunctional devices, are described below in greater detail.

Examples of communication network(s) 110 include local area networks (LAN) and wide area networks (WAN), e.g., the Internet. Communication network(s) 110 is implemented using any known network protocol, including various wired or wireless protocols, such as, for example, Ethernet, Universal Serial Bus (USB), FIREWIRE, Global System for Mobile Communications (GSM), Enhanced Data GSM Environment (EDGE), code division multiple access (CDMA), time division multiple access (TDMA), Bluetooth, Wi-Fi, voice over Internet Protocol (VoIP), Wi-MAX, or any other suitable communication protocol.

Server system 108 is implemented on one or more standalone data processing apparatus or a distributed network of computers. In some examples, server system 108 also employs various virtual devices and/or services of third-party service providers (e.g., third-party cloud service providers) to provide the underlying computing resources and/or infrastructure resources of server system 108.

In some examples, user device 104 communicates with DA server 106 via second user device 122. Second user device 122 is similar or identical to user device 104. For example, second user device 122 is similar to devices 200, 400, or 600 described below with reference to FIGS. 2A, 4, and 6A-B. User device 104 is configured to communicatively couple to second user device 122 via a direct communication connection, such as Bluetooth, NFC, BTLE, or the like, or via a wired or wireless network, such as a local Wi-Fi network. In some examples, second user device 122 is configured to act as a proxy between user device 104 and DA server 106. For example, DA client 102 of user device 104 is configured to transmit information (e.g., a user request received at user device 104) to DA server 106 via second user device 122. DA server 106 processes the information and returns relevant data (e.g., data content responsive to the user request) to user device 104 via second user device 122.

In some examples, user device 104 is configured to communicate abbreviated requests for data to second user device 122 to reduce the amount of information transmitted from user device 104. Second user device 122 is configured to determine supplemental information to add to the abbreviated request to generate a complete request to transmit to DA server 106. This system architecture can advantageously allow user device 104 having limited communication capabilities and/or limited battery power (e.g., a watch or a similar compact electronic device) to access services provided by DA server 106 by using second user device 122, having greater communication capabilities and/or battery power (e.g., a mobile phone, laptop computer, tablet computer, or the like), as a proxy to DA server 106. While only two user devices 104 and 122 are shown in FIG. 1, it should be appreciated that system 100, in some examples, includes any number and type of user devices configured in this proxy configuration to communicate with DA server system 106.

Although the digital assistant shown in FIG. 1 includes both a client-side portion (e.g., DA client 102) and a server-side portion (e.g., DA server 106), in some examples, the functions of a digital assistant are implemented as a standalone application installed on a user device. In addition, the divisions of functionalities between the client and server portions of the digital assistant can vary in different implementations. For instance, in some examples, the DA client is a thin-client that provides only user-facing input and output processing functions, and delegates all other functionalities of the digital assistant to a backend server.

### 2. Electronic Devices

Attention is now directed toward embodiments of electronic devices for implementing the client-side portion of a digital assistant. FIG. 2A is a block diagram illustrating portable multifunction device 200 with touch-sensitive display system 212 in accordance with some embodiments. Touch-sensitive display 212 is sometimes called a "touch screen" for convenience and is sometimes known as or called a "touch-sensitive display system." Device 200 includes memory 202 (which optionally includes one or more computer-readable storage mediums), memory controller 222, one or more processing units (CPUs) 220, peripherals interface 218, RF circuitry 208, audio circuitry 210, speaker 211, microphone 213, input/output (I/O) subsystem 206, other input control devices 216, and external port 224. Device 200 optionally includes one or more optical sensors 264. Device 200 optionally includes one or more contact intensity sensors 265 for detecting intensity of contacts on device 200 (e.g., a touch-sensitive surface such as touch-sensitive display system 212 of device 200). Device 200 optionally includes one or more tactile output generators 267 for generating tactile outputs on device 200 (e.g., generating tactile outputs on a touch-sensitive surface such as touch-sensitive display system 212 of device 200 or touchpad 455 of device 400). These components optionally communicate over one or more communication buses or signal lines 203.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 200 is only one example of a portable multifunction device, and that device 200 optionally has more or fewer components than shown, optionally combines two or more components, or optionally has a different configuration or arrangement of the components. The various components shown in FIG. 2A are implemented in hardware, software, or a combination of both hardware and software, including one or more signal processing and/or application-specific integrated circuits.

Memory 202 includes one or more computer-readable storage mediums. The computer-readable storage mediums are, for example, tangible and non-transitory. Memory 202 includes high-speed random access memory and also includes non-volatile memory, such as one or more magnetic disk storage devices, flash memory devices, or other non-volatile solid-state memory devices. Memory controller 222 controls access to memory 202 by other components of device 200.

In some examples, a non-transitory computer-readable storage medium of memory 202 is used to store instructions (e.g., for performing aspects of processes described below) for use by or in connection with an instruction execution system, apparatus, or device, such as a computer-based system, processor-containing system, or other system that can fetch the instructions from the instruction execution system, apparatus, or device and execute the instructions. In other examples, the instructions (e.g., for performing aspects of the processes described below) are stored on a non-transitory computer-readable storage medium (not shown) of the server system 108 or are divided between the non-transitory computer-readable storage medium of memory 202 and the non-transitory computer-readable storage medium of server system 108.

Peripherals interface 218 is used to couple input and output peripherals of the device to CPU 220 and memory 202. The one or more processors 220 run or execute various software programs and/or sets of instructions stored in memory 202 to perform various functions for device 200 and to process data. In some embodiments, peripherals interface 218, CPU 220, and memory controller 222 are implemented on a single chip, such as chip 204. In some other embodiments, they are implemented on separate chips.

RF (radio frequency) circuitry 208 receives and sends RF signals, also called electromagnetic signals. RF circuitry 208 converts electrical signals to/from electromagnetic signals and communicates with communications networks and other communications devices via the electromagnetic signals. RF circuitry 208 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 208 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 208 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

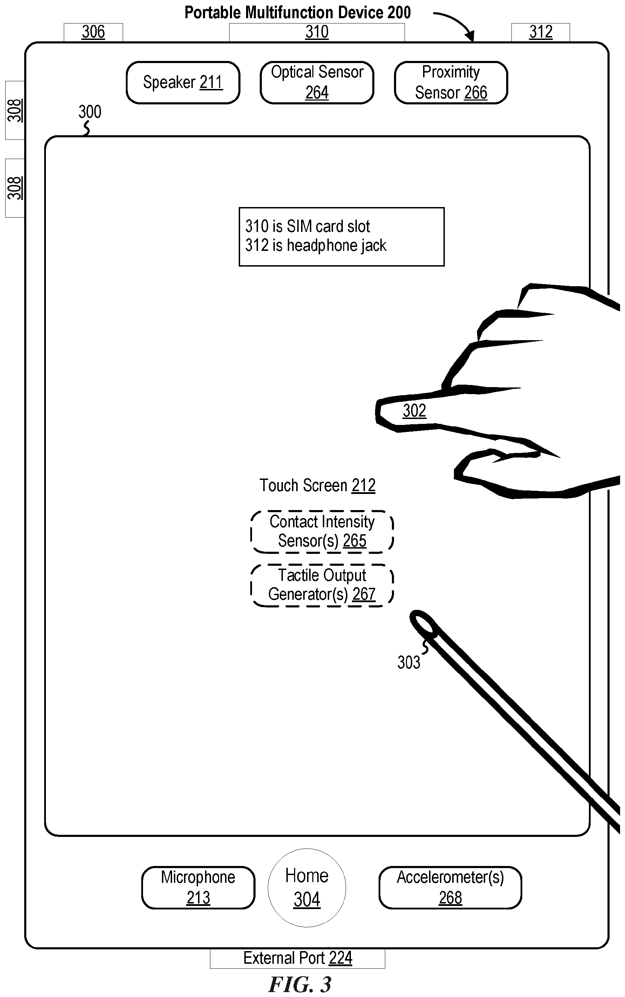

Audio circuitry 210, speaker 211, and microphone 213 provide an audio interface between a user and device 200. Audio circuitry 210 receives audio data from peripherals interface 218, converts the audio data to an electrical signal, and transmits the electrical signal to speaker 211. Speaker 211 converts the electrical signal to human-audible sound waves. Audio circuitry 210 also receives electrical signals converted by microphone 213 from sound waves. Audio circuitry 210 converts the electrical signal to audio data and transmits the audio data to peripherals interface 218 for processing. Audio data are retrieved from and/or transmitted to memory 202 and/or RF circuitry 208 by peripherals interface 218. In some embodiments, audio circuitry 210 also includes a headset jack (e.g., 312, FIG. 3). The headset jack provides an interface between audio circuitry 210 and removable audio input/output peripherals, such as output-only headphones or a headset with both output (e.g., a headphone for one or both ears) and input (e.g., a microphone).

I/O subsystem 206 couples input/output peripherals on device 200, such as touch screen 212 and other input control devices 216, to peripherals interface 218. I/O subsystem 206 optionally includes display controller 256, optical sensor controller 258, intensity sensor controller 259, haptic feedback controller 261, and one or more input controllers 260 for other input or control devices. The one or more input controllers 260 receive/send electrical signals from/to other input control devices 216. The other input control devices 216 optionally include physical buttons (e.g., push buttons, rocker buttons, etc.), dials, slider switches, joysticks, click wheels, and so forth. In some alternate embodiments, input controller(s) 260 are, optionally, coupled to any (or none) of the following: a keyboard, an infrared port, a USB port, and a pointer device such as a mouse. The one or more buttons (e.g., 308, FIG. 3) optionally include an up/down button for volume control of speaker 211 and/or microphone 213. The one or more buttons optionally include a push button (e.g., 306, FIG. 3).

A quick press of the push button optionally disengages a lock of touch screen 212 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849. A longer press of the push button (e.g., 306) optionally turns power to device 200 on or off. The user is able to customize a functionality of one or more of the buttons. Touch screen 212 is used to implement virtual or soft buttons and one or more soft keyboards.

Touch-sensitive display 212 provides an input interface and an output interface between the device and a user. Display controller 256 receives and/or sends electrical signals from/to touch screen 212. Touch screen 212 displays visual output to the user. The visual output optionally includes graphics, text, icons, video, and any combination thereof (collectively termed "graphics"). In some embodiments, some or all of the visual output optionally corresponds to user-interface objects.

Touch screen 212 has a touch-sensitive surface, sensor, or set of sensors that accepts input from the user based on haptic and/or tactile contact. Touch screen 212 and display controller 256 (along with any associated modules and/or sets of instructions in memory 202) detect contact (and any movement or breaking of the contact) on touch screen 212 and convert the detected contact into interaction with user-interface objects (e.g., one or more soft keys, icons, web pages, or images) that are displayed on touch screen 212. In an exemplary embodiment, a point of contact between touch screen 212 and the user corresponds to a finger of the user.

Touch screen 212 optionally uses LCD (liquid crystal display) technology, LPD (light emitting polymer display) technology, or LED (light emitting diode) technology, although other display technologies may be used in other embodiments. Touch screen 212 and display controller 256 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 212. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 212 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1. However, touch screen 212 displays visual output from device 200, whereas touch-sensitive touchpads do not provide visual output.

A touch-sensitive display in some embodiments of touch screen 212 is as described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006.

Touch screen 212 has, for example, a video resolution in excess of 100 dpi. In some embodiments, the touch screen has a video resolution of approximately 160 dpi. The user optionally makes contact with touch screen 212 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 200 optionally includes a touchpad (not shown) for activating or deactivating particular functions. In some embodiments, the touchpad is a touch-sensitive area of the device that, unlike the touch screen, does not display visual output. The touchpad is, optionally, a touch-sensitive surface that is separate from touch screen 212 or an extension of the touch-sensitive surface formed by the touch screen.

Device 200 also includes power system 262 for powering the various components. Power system 262 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 200 optionally also includes one or more optical sensors 264. FIG. 2A shows an optical sensor coupled to optical sensor controller 258 in I/O subsystem 206. Optical sensor 264 includes charge-coupled device (CCD) or complementary metal-oxide semiconductor (CMOS) phototransistors. Optical sensor 264 optionally receives light from the environment, projected through one or more lenses, and converts the light to data representing an image. In conjunction with imaging module 243 (also called a camera module), optical sensor 264 captures still images or video. In some embodiments, an optical sensor is located on the back of device 200, opposite touch screen display 212 on the front of the device so that the touch screen display is used as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 264 can be changed by the user (e.g., by rotating the lens and the sensor in the device housing) so that a single optical sensor 264 is used along with the touch screen display for both video conferencing and still and/or video image acquisition.

Device 200 optionally also includes one or more depth camera sensors 275. FIG. 2A shows a depth camera sensor coupled to depth camera controller 269 in I/O subsystem 206. Depth camera sensor 275 receives data from the environment to create a three dimensional model of an object (e.g., a face) within a scene from a viewpoint (e.g., a depth camera sensor). In some embodiments, in conjunction with imaging module 243 (also called a camera module), depth camera sensor 275 is optionally used to determine a depth map of different portions of an image captured by the imaging module 243. In some embodiments, a depth camera sensor is located on the front of device 200 so that the user's image with depth information is, optionally, obtained for video conferencing while the user views the other video conference participants on the touch screen display and to capture selfies with depth map data. In some embodiments, the depth camera sensor 275 is located on the back of device, or on the back and the front of the device 200. In some embodiments, the position of depth camera sensor 275 can be changed by the user (e.g., by rotating the lens and the sensor in the device housing) so that a depth camera sensor 275 is used along with the touch screen display for both video conferencing and still and/or video image acquisition.

In some embodiments, a depth map (e.g., depth map image) contains information (e.g., values) that relates to the distance of objects in a scene from a viewpoint (e.g., a camera, an optical sensor, a depth camera sensor). In one embodiment of a depth map, each depth pixel defines the position in the viewpoint's Z-axis where its corresponding two-dimensional pixel is located. In some embodiments, a depth map is composed of pixels wherein each pixel is defined by a value (e.g., 0 - 255). For example, the "0" value represents pixels that are located at the most distant place in a "three dimensional" scene and the "255" value represents pixels that are located closest to a viewpoint (e.g., a camera, an optical sensor, a depth camera sensor) in the "three dimensional" scene. In other embodiments, a depth map represents the distance between an object in a scene and the plane of the viewpoint. In some embodiments, the depth map includes information about the relative depth of various features of an object of interest in view of the depth camera (e.g., the relative depth of eyes, nose, mouth, ears of a user's face). In some embodiments, the depth map includes information that enables the device to determine contours of the object of interest in a z direction.

Device 200 optionally also includes one or more contact intensity sensors 265. FIG. 2A shows a contact intensity sensor coupled to intensity sensor controller 259 in I/O subsystem 206. Contact intensity sensor 265 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 265 receives contact intensity information (e.g., pressure information or a proxy for pressure information) from the environment. In some embodiments, at least one contact intensity sensor is collocated with, or proximate to, a touch-sensitive surface (e.g., touch-sensitive display system 212). In some embodiments, at least one contact intensity sensor is located on the back of device 200, opposite touch screen display 212, which is located on the front of device 200.

Device 200 optionally also includes one or more proximity sensors 266. FIG. 2A shows proximity sensor 266 coupled to peripherals interface 218. Alternately, proximity sensor 266 is, optionally, coupled to input controller 260 in I/O subsystem 206. Proximity sensor 266 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals". In some embodiments, the proximity sensor turns off and disables touch screen 212 when the multifunction device is placed near the user's ear (e.g., when the user is making a phone call).

Device 200 optionally also includes one or more tactile output generators 267. FIG. 2A shows a tactile output generator coupled to haptic feedback controller 261 in I/O subsystem 206. Tactile output generator 267 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 265 receives tactile feedback generation instructions from haptic feedback module 233 and generates tactile outputs on device 200 that are capable of being sensed by a user of device 200. In some embodiments, at least one tactile output generator is collocated with, or proximate to, a touch-sensitive surface (e.g., touch-sensitive display system 212) and, optionally, generates a tactile output by moving the touch-sensitive surface vertically (e.g., in/out of a surface of device 200) or laterally (e.g., back and forth in the same plane as a surface of device 200). In some embodiments, at least one tactile output generator sensor is located on the back of device 200, opposite touch screen display 212, which is located on the front of device 200.

Device 200 optionally also includes one or more accelerometers 268. FIG. 2A shows accelerometer 268 coupled to peripherals interface 218. Alternately, accelerometer 268 is, optionally, coupled to an input controller 260 in I/O subsystem 206. Accelerometer 268 performs, for example, as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer". In some embodiments, information is displayed on the touch screen display in a portrait view or a landscape view based on an analysis of data received from the one or more accelerometers. Device 200 optionally includes, in addition to accelerometer(s) 268, a magnetometer (not shown) and a GPS (or GLONASS or other global navigation system) receiver (not shown) for obtaining information concerning the location and orientation (e.g., portrait or landscape) of device 200.

In some embodiments, the software components stored in memory 202 include operating system 226, communication module (or set of instructions) 228, contact/motion module (or set of instructions) 230, graphics module (or set of instructions) 232, text input module (or set of instructions) 234, Global Positioning System (GPS) module (or set of instructions) 235, Digital Assistant Client Module 229, and applications (or sets of instructions) 236. Further, memory 202 stores data and models, such as user data and models 231. Furthermore, in some embodiments, memory 202 (FIG. 2A) or 470 (FIG. 4) stores device/global internal state 257, as shown in FIGS. 2A and 4. Device/global internal state 257 includes one or more of: active application state, indicating which applications, if any, are currently active; display state, indicating what applications, views or other information occupy various regions of touch screen display 212; sensor state, including information obtained from the device's various sensors and input control devices 216; and location information concerning the device's location and/or attitude.

Operating system 226 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 228 facilitates communication with other devices over one or more external ports 224 and also includes various software components for handling data received by RF circuitry 208 and/or external port 224. External port 224 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Contact/motion module 230 optionally detects contact with touch screen 212 (in conjunction with display controller 256) and other touch-sensitive devices (e.g., a touchpad or physical click wheel). Contact/motion module 230 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 230 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 230 and display controller 256 detect contact on a touchpad.

In some embodiments, contact/motion module 230 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 200). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 230 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 232 includes various known software components for rendering and displaying graphics on touch screen 212 or other display, including components for changing the visual impact (e.g., brightness, transparency, saturation, contrast, or other visual property) of graphics that are displayed. As used herein, the term "graphics" includes any object that can be displayed to a user, including ,without limitation, text, web pages, icons (such as user-interface objects including soft keys), digital images, videos, animations, and the like.

In some embodiments, graphics module 232 stores data representing graphics to be used. Each graphic is, optionally, assigned a corresponding code. Graphics module 232 receives, from applications etc., one or more codes specifying graphics to be displayed along with, if necessary, coordinate data and other graphic property data, and then generates screen image data to output to display controller 256.

Haptic feedback module 233 includes various software components for generating instructions used by tactile output generator(s) 267 to produce tactile outputs at one or more locations on device 200 in response to user interactions with device 200.

Text input module 234, which is, in some examples, a component of graphics module 232, provides soft keyboards for entering text in various applications (e.g., contacts 237, email 240, IM 241, browser 247, and any other application that needs text input).

GPS module 235 determines the location of the device and provides this information for use in various applications (e.g., to telephone 238 for use in location-based dialing; to camera 243 as picture/video metadata; and to applications that provide location-based services such as weather widgets, local yellow page widgets, and map/navigation widgets).

Digital assistant client module 229 includes various client-side digital assistant instructions to provide the client-side functionalities of the digital assistant. For example, digital assistant client module 229 is capable of accepting voice input (e.g., speech input), text input, touch input, and/or gestural input through various user interfaces (e.g., microphone 213, accelerometer(s) 268, touch-sensitive display system 212, optical sensor(s) 264, other input control devices 216, etc.) of portable multifunction device 200. Digital assistant client module 229 is also capable of providing output in audio (e.g., speech output), visual, and/or tactile forms through various output interfaces (e.g., speaker 211, touch-sensitive display system 212, tactile output generator(s) 267, etc.) of portable multifunction device 200. For example, output is provided as voice, sound, alerts, text messages, menus, graphics, videos, animations, vibrations, and/or combinations of two or more of the above. During operation, digital assistant client module 229 communicates with DA server 106 using RF circuitry 208.

User data and models 231 include various data associated with the user (e.g., user-specific vocabulary data, user preference data, user-specified name pronunciations, data from the user's electronic address book, to-do lists, shopping lists, etc.) to provide the client-side functionalities of the digital assistant. Further, user data and models 231 include various models (e.g., speech recognition models, statistical language models, natural language processing models, ontology, task flow models, service models, etc.) for processing user input and determining user intent.

In some examples, digital assistant client module 229 utilizes the various sensors, subsystems, and peripheral devices of portable multifunction device 200 to gather additional information from the surrounding environment of the portable multifunction device 200 to establish a context associated with a user, the current user interaction, and/or the current user input. In some examples, digital assistant client module 229 provides the contextual information or a subset thereof with the user input to DA server 106 to help infer the user's intent. In some examples, the digital assistant also uses the contextual information to determine how to prepare and deliver outputs to the user. Contextual information is referred to as context data.

**In** some examples, the contextual information that accompanies the user input includes sensor information, e.g., lighting, ambient noise, ambient temperature, images or videos of the surrounding environment, etc. In some examples, the contextual information can also include the physical state of the device, e.g., device orientation, device location, device temperature, power level, speed, acceleration, motion patterns, cellular signals strength, etc. In some examples, information related to the software state of DA server 106, e.g., running processes, installed programs, past and present network activities, background services, error logs, resources usage, etc., and of portable multifunction device 200 is provided to DA server 106 as contextual information associated with a user input.

**In** some examples, the digital assistant client module 229 selectively provides information (e.g., user data 231) stored on the portable multifunction device 200 in response to requests from DA server 106. In some examples, digital assistant client module 229 also elicits additional input from the user via a natural language dialogue or other user interfaces upon request by DA server 106. Digital assistant client module 229 passes the additional input to DA server 106 to help DA server 106 in intent deduction and/or fulfillment of the user's intent expressed in the user request.

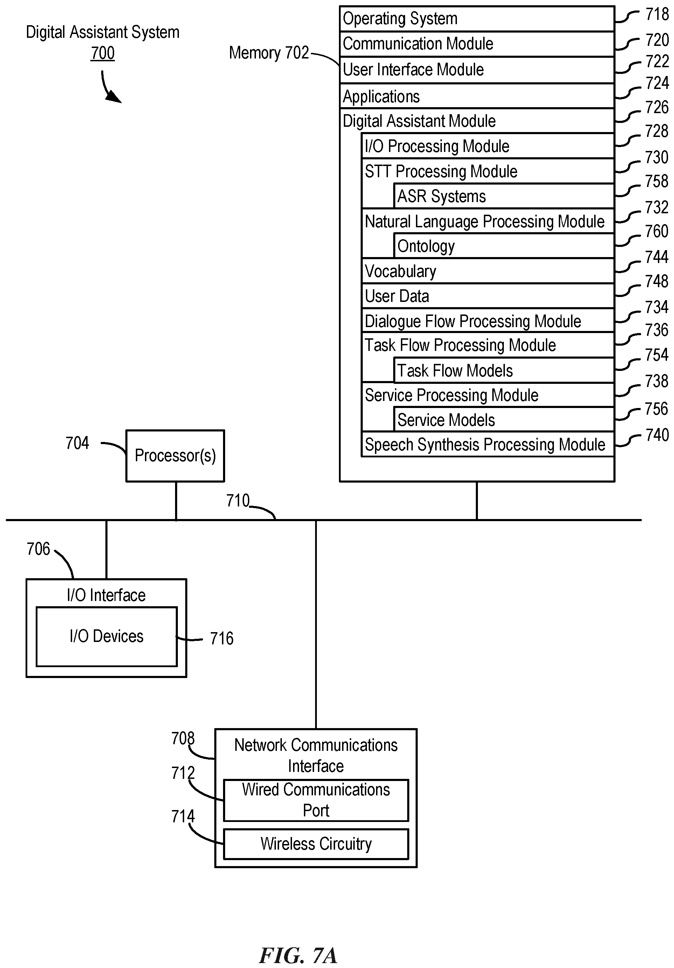

A more detailed description of a digital assistant is described below with reference to FIGs. 7A-C. It should be recognized that digital assistant client module 229 can include any number of the sub-modules of digital assistant module 726 described below.

Applications 236 optionally include the following modules (or sets of instructions), or a subset or superset thereof:
- Contacts module 237 (sometimes called an address book or contact list);
- Telephone module 238;
- Video conference module 239;
- E-mail client module 240;
- Instant messaging (IM) module 241;
- Workout support module 242;
- Camera module 243 for still and/or video images;
- Image management module 244;
- Video player module;
- Music player module;
- Browser module 247;
- Calendar module 248;
- Widget modules 249, which includes, in some examples, one or more of: weather widget 249-1, stocks widget 249-2, calculator widget 249-3, alarm clock widget 249-4, dictionary widget 249-5, and other widgets obtained by the user, as well as user-created widgets 249-6;
- Widget creator module 250 for making user-created widgets 249-6;
- Search module 251;
- Video and music player module 252, which merges video player module and music player module;
- Notes module 253;
- Map module 254; and/or
- Online video module 255.

Examples of other applications 236 that are stored in memory 202 include other word processing applications, other image editing applications, drawing applications, presentation applications, JAVA-enabled applications, encryption, digital rights management, voice recognition, and voice replication.

In conjunction with touch screen 212, display controller 256, contact/motion module 230, graphics module 232, and text input module 234, contacts module 237 are, optionally, used to manage an address book or contact list (e.g., stored in application internal state 292 of contacts module 237 in memory 202 or memory 470), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 238, video conference module 239, e-mail 240, or IM 241; and so forth.

In conjunction with RF circuitry 208, audio circuitry 210, speaker 211, microphone 213, touch screen 212, display controller 256, contact/motion module 230, graphics module 232, and text input module 234, telephone module 238 are used to enter a sequence of characters corresponding to a telephone number, access one or more telephone numbers in contacts module 237, modify a telephone number that has been entered, dial a respective telephone number, conduct a conversation, and disconnect or hang up when the conversation is completed. As noted above, the wireless communication uses any of a plurality of communications standards, protocols, and technologies.

In conjunction with RF circuitry 208, audio circuitry 210, speaker 211, microphone 213, touch screen 212, display controller 256, optical sensor 264, optical sensor controller 258, contact/motion module 230, graphics module 232, text input module 234, contacts module 237, and telephone module 238, video conference module 239 includes executable instructions to initiate, conduct, and terminate a video conference between a user and one or more other participants in accordance with user instructions.

In conjunction with RF circuitry 208, touch screen 212, display controller 256, contact/motion module 230, graphics module 232, and text input module 234, e-mail client module 240 includes executable instructions to create, send, receive, and manage e-mail in response to user instructions. In conjunction with image management module 244, e-mail client module 240 makes it very easy to create and send e-mails with still or video images taken with camera module 243.

In conjunction with RF circuitry 208, touch screen 212, display controller 256, contact/motion module 230, graphics module 232, and text input module 234, the instant messaging module 241 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 208, touch screen 212, display controller 256, contact/motion module 230, graphics module 232, text input module 234, GPS module 235, map module 254, and music player module, workout support module 242 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 212, display controller 256, optical sensor(s) 264, optical sensor controller 258, contact/motion module 230, graphics module 232, and image management module 244, camera module 243 includes executable instructions to capture still images or video (including a video stream) and store them into memory 202, modify characteristics of a still image or video, or delete a still image or video from memory 202.

In conjunction with touch screen 212, display controller 256, contact/motion module 230, graphics module 232, text input module 234, and camera module 243, image management module 244 includes executable instructions to arrange, modify (e.g., edit), or otherwise manipulate, label, delete, present (e.g., in a digital slide show or album), and store still and/or video images.

In conjunction with RF circuitry 208, touch screen 212, display controller 256, contact/motion module 230, graphics module 232, and text input module 234, browser module 247 includes executable instructions to browse the Internet in accordance with user instructions, including searching, linking to, receiving, and displaying web pages or portions thereof, as well as attachments and other files linked to web pages.

In conjunction with RF circuitry 208, touch screen 212, display controller 256, contact/motion module 230, graphics module 232, text input module 234, e-mail client module 240, and browser module 247, calendar module 248 includes executable instructions to create, display, modify, and store calendars and data associated with calendars (e.g., calendar entries, to-do lists, etc.) in accordance with user instructions.

In conjunction with RF circuitry 208, touch screen 212, display controller 256, contact/motion module 230, graphics module 232, text input module 234, and browser module 247, widget modules 249 are mini-applications that can be downloaded and used by a user (e.g., weather widget 249-1, stocks widget 249-2, calculator widget 249-3, alarm clock widget 249-4, and dictionary widget 249-5) or created by the user (e.g., user-created widget 249-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 208, touch screen 212, display controller 256, contact/motion module 230, graphics module 232, text input module 234, and browser module 247, the widget creator module 250 are used by a user to create widgets (e.g., turning a user-specified portion of a web page into a widget).

In conjunction with touch screen 212, display controller 256, contact/motion module 230, graphics module 232, and text input module 234, search module 251 includes executable instructions to search for text, music, sound, image, video, and/or other files in memory 202 that match one or more search criteria (e.g., one or more user-specified search terms) in accordance with user instructions.

In conjunction with touch screen 212, display controller 256, contact/motion module 230, graphics module 232, audio circuitry 210, speaker 211, RF circuitry 208, and browser module 247, video and music player module 252 includes executable instructions that allow the user to download and play back recorded music and other sound files stored in one or more file formats, such as MP3 or AAC files, and executable instructions to display, present, or otherwise play back videos (e.g., on touch screen 212 or on an external, connected display via external port 224). In some embodiments, device 200 optionally includes the functionality of an MP3 player, such as an iPod (trademark of Apple Inc.).

In conjunction with touch screen 212, display controller 256, contact/motion module 230, graphics module 232, and text input module 234, notes module 253 includes executable instructions to create and manage notes, to-do lists, and the like in accordance with user instructions.

In conjunction with RF circuitry 208, touch screen 212, display controller 256, contact/motion module 230, graphics module 232, text input module 234, GPS module 235, and browser module 247, map module 254 are used to receive, display, modify, and store maps and data associated with maps (e.g., driving directions, data on stores and other points of interest at or near a particular location, and other location-based data) in accordance with user instructions.

In conjunction with touch screen 212, display controller 256, contact/motion module 230, graphics module 232, audio circuitry 210, speaker 211, RF circuitry 208, text input module 234, e-mail client module 240, and browser module 247, online video module 255 includes instructions that allow the user to access, browse, receive (e.g., by streaming and/or download), play back (e.g., on the touch screen or on an external, connected display via external port 224), send an e-mail with a link to a particular online video, and otherwise manage online videos in one or more file formats, such as H.264. In some embodiments, instant messaging module 241, rather than e-mail client module 240, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs, procedures, or modules, and thus various subsets of these modules can be combined or otherwise rearranged in various embodiments. For example, video player module can be combined with music player module into a single module (e.g., video and music player module 252, FIG. 2A). In some embodiments, memory 202 optionally stores a subset of the modules and data structures identified above. Furthermore, memory 202 optionally stores additional modules and data structures not described above.

In some embodiments, device 200 is a device where operation of a predefined set of functions on the device is performed exclusively through a touch screen and/or a touchpad. By using a touch screen and/or a touchpad as the primary input control device for operation of device 200, the number of physical input control devices (such as push buttons, dials, and the like) on device 200 is, optionally, reduced.

The predefined set of functions that are performed exclusively through a touch screen and/or a touchpad optionally include navigation between user interfaces. In some embodiments, the touchpad, when touched by the user, navigates device 200 to a main, home, or root menu from any user interface that is displayed on device 200. In such embodiments, a "menu button" is implemented using a touchpad. In some other embodiments, the menu button is a physical push button or other physical input control device instead of a touchpad.

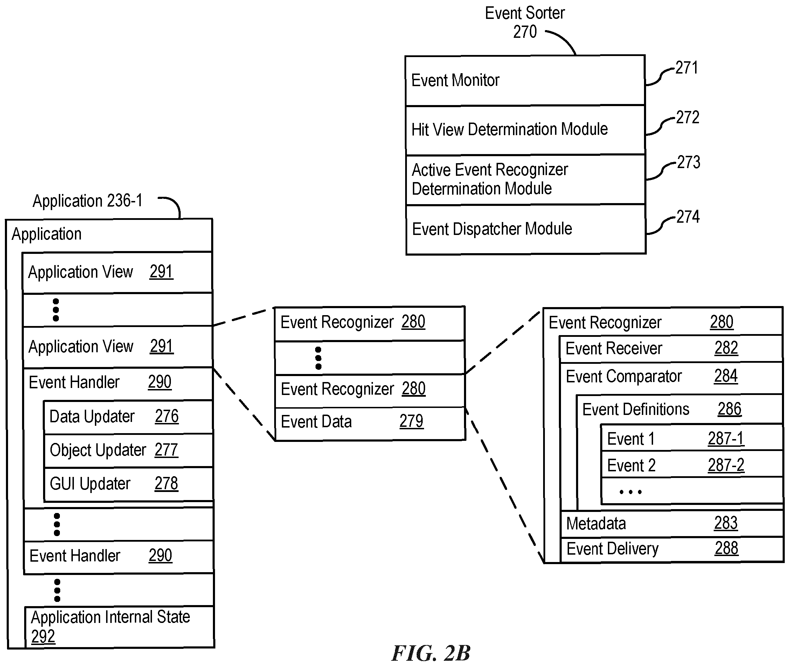

FIG. 2B is a block diagram illustrating exemplary components for event handling in accordance with some embodiments. In some embodiments, memory 202 (FIG. 2A) or 470 (FIG. 4) includes event sorter 270 (e.g., in operating system 226) and a respective application 236-1 (e.g., any of the aforementioned applications 237-251, 255, 480-490).

Event sorter 270 receives event information and determines the application 236-1 and application view 291 of application 236-1 to which to deliver the event information. Event sorter 270 includes event monitor 271 and event dispatcher module 274. In some embodiments, application 236-1 includes application internal state 292, which indicates the current application view(s) displayed on touch-sensitive display 212 when the application is active or executing. In some embodiments, device/global internal state 257 is used by event sorter 270 to determine which application(s) is (are) currently active, and application internal state 292 is used by event sorter 270 to determine application views 291 to which to deliver event information.

In some embodiments, application internal state 292 includes additional information, such as one or more of: resume information to be used when application 236-1 resumes execution, user interface state information that indicates information being displayed or that is ready for display by application 236-1, a state queue for enabling the user to go back to a prior state or view of application 236-1, and a redo/undo queue of previous actions taken by the user.

Event monitor 271 receives event information from peripherals interface 218. Event information includes information about a sub-event (e.g., a user touch on touch-sensitive display 212, as part of a multi-touch gesture). Peripherals interface 218 transmits information it receives from I/O subsystem 206 or a sensor, such as proximity sensor 266, accelerometer(s) 268, and/or microphone 213 (through audio circuitry 210). Information that peripherals interface 218 receives from I/O subsystem 206 includes information from touch-sensitive display 212 or a touch-sensitive surface.

In some embodiments, event monitor 271 sends requests to the peripherals interface 218 at predetermined intervals. In response, peripherals interface 218 transmits event information. In other embodiments, peripherals interface 218 transmits event information only when there is a significant event (e.g., receiving an input above a predetermined noise threshold and/or for more than a predetermined duration).

In some embodiments, event sorter 270 also includes a hit view determination module 272 and/or an active event recognizer determination module 273.

Hit view determination module 272 provides software procedures for determining where a sub-event has taken place within one or more views when touch-sensitive display 212 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected correspond to programmatic levels within a programmatic or view hierarchy of the application. For example, the lowest level view in which a touch is detected is called the hit view, and the set of events that are recognized as proper inputs is determined based, at least in part, on the hit view of the initial touch that begins a touch-based gesture.

Hit view determination module 272 receives information related to sub events of a touch-based gesture. When an application has multiple views organized in a hierarchy, hit view determination module 272 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 272, the hit view typically receives all sub-events related to the same touch or input source for which it was identified as the hit view.

Active event recognizer determination module 273 determines which view or views within a view hierarchy should receive a particular sequence of sub-events. In some embodiments, active event recognizer determination module 273 determines that only the hit view should receive a particular sequence of sub-events. In other embodiments, active event recognizer determination module 273 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 274 dispatches the event information to an event recognizer (e.g., event recognizer 280). In embodiments including active event recognizer determination module 273, event dispatcher module 274 delivers the event information to an event recognizer determined by active event recognizer determination module 273. In some embodiments, event dispatcher module 274 stores in an event queue the event information, which is retrieved by a respective event receiver 282.

In some embodiments, operating system 226 includes event sorter 270. Alternatively, application 236-1 includes event sorter 270. In yet other embodiments, event sorter 270 is a stand-alone module, or a part of another module stored in memory 202, such as contact/motion module 230.

In some embodiments, application 236-1 includes a plurality of event handlers 290 and one or more application views 291, each of which includes instructions for handling touch events that occur within a respective view of the application's user interface. Each application view 291 of the application 236-1 includes one or more event recognizers 280. Typically, a respective application view 291 includes a plurality of event recognizers 280. In other embodiments, one or more of event recognizers 280 are part of a separate module, such as a user interface kit (not shown) or a higher level object from which application 236-1 inherits methods and other properties. In some embodiments, a respective event handler 290 includes one or more of: data updater 276, object updater 277, GUI updater 278, and/or event data 279 received from event sorter 270. Event handler 290 utilizes or calls data updater 276, object updater 277, or GUI updater 278 to update the application internal state 292. Alternatively, one or more of the application views 291 include one or more respective event handlers 290. Also, in some embodiments, one or more of data updater 276, object updater 277, and GUI updater 278 are included in a respective application view 291.

A respective event recognizer 280 receives event information (e.g., event data 279) from event sorter 270 and identifies an event from the event information. Event recognizer 280 includes event receiver 282 and event comparator 284. In some embodiments, event recognizer 280 also includes at least a subset of: metadata 283, and event delivery instructions 288 (which include sub-event delivery instructions).

Event receiver 282 receives event information from event sorter 270. The event information includes information about a sub-event, for example, a touch or a touch movement. Depending on the sub-event, the event information also includes additional information, such as location of the sub-event. When the sub-event concerns motion of a touch, the event information also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 284 compares the event information to predefined event or sub-event definitions and, based on the comparison, determines an event or sub event, or determines or updates the state of an event or sub-event. In some embodiments, event comparator 284 includes event definitions 286. Event definitions 286 contain definitions of events (e.g., predefined sequences of sub-events), for example, event 1 (287-1), event 2 (287-2), and others. In some embodiments, sub-events in an event (287) include, for example, touch begin, touch end, touch movement, touch cancellation, and multiple touching. In one example, the definition for event 1 (287-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (287-2) is a dragging on a displayed object. The dragging, for example, comprises a touch (or contact) on the displayed object for a predetermined phase, a movement of the touch across touch-sensitive display 212, and liftoff of the touch (touch end). In some embodiments, the event also includes information for one or more associated event handlers 290.

In some embodiments, event definition 287 includes a definition of an event for a respective user-interface object. In some embodiments, event comparator 284 performs a hit test to determine which user-interface object is associated with a sub-event. For example, in an application view in which three user-interface objects are displayed on touch-sensitive display 212, when a touch is detected on touch-sensitive display 212, event comparator 284 performs a hit test to determine which of the three user-interface objects is associated with the touch (sub-event). If each displayed object is associated with a respective event handler 290, the event comparator uses the result of the hit test to determine which event handler 290 should be activated. For example, event comparator 284 selects an event handler associated with the sub-event and the object triggering the hit test.

In some embodiments, the definition for a respective event (287) also includes delayed actions that delay delivery of the event information until after it has been determined whether the sequence of sub-events does or does not correspond to the event recognizer's event type.

When a respective event recognizer 280 determines that the series of sub-events do not match any of the events in event definitions 286, the respective event recognizer 280 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 280 includes metadata 283 with configurable properties, flags, and/or lists that indicate how the event delivery system should perform sub-event delivery to actively involved event recognizers. In some embodiments, metadata 283 includes configurable properties, flags, and/or lists that indicate how event recognizers interact, or are enabled to interact, with one another. In some embodiments, metadata 283 includes configurable properties, flags, and/or lists that indicate whether sub-events are delivered to varying levels in the view or programmatic hierarchy.

In some embodiments, a respective event recognizer 280 activates event handler 290 associated with an event when one or more particular sub-events of an event are recognized. In some embodiments, a respective event recognizer 280 delivers event information associated with the event to event handler 290. Activating an event handler 290 is distinct from sending (and deferred sending) sub-events to a respective hit view. In some embodiments, event recognizer 280 throws a flag associated with the recognized event, and event handler 290 associated with the flag catches the flag and performs a predefined process.

In some embodiments, event delivery instructions 288 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 276 creates and updates data used in application 236-1. For example, data updater 276 updates the telephone number used in contacts module 237, or stores a video file used in video player module. In some embodiments, object updater 277 creates and updates objects used in application 236-1. For example, object updater 277 creates a new user-interface object or updates the position of a user-interface object. GUI updater 278 updates the GUI. For example, GUI updater 278 prepares display information and sends it to graphics module 232 for display on a touch-sensitive display.

In some embodiments, event handler(s) 290 includes or has access to data updater 276, object updater 277, and GUI updater 278. In some embodiments, data updater 276, object updater 277, and GUI updater 278 are included in a single module of a respective application 236-1 or application view 291. In other embodiments, they are included in two or more software modules.

It shall be understood that the foregoing discussion regarding event handling of user touches on touch-sensitive displays also applies to other forms of user inputs to operate multifunction devices 200 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 3 illustrates a portable multifunction device 200 having a touch screen 212 in accordance with some embodiments. The touch screen optionally displays one or more graphics within user interface (UI) 300. In this embodiment, as well as others described below, a user is enabled to select one or more of the graphics by making a gesture on the graphics, for example, with one or more fingers 302 (not drawn to scale in the figure) or one or more styluses 303 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 200. In some implementations or circumstances, inadvertent contact with a graphic does not select the graphic. For example, a swipe gesture that sweeps over an application icon optionally does not select the corresponding application when the gesture corresponding to selection is a tap.

Device 200 optionally also includes one or more physical buttons, such as "home" or menu button 304. As described previously, menu button 304 is used to navigate to any application 236 in a set of applications that is executed on device 200. Alternatively, in some embodiments, the menu button is implemented as a soft key in a GUI displayed on touch screen 212.

In one embodiment, device 200 includes touch screen 212, menu button 304, push button 306 for powering the device on/off and locking the device, volume adjustment button(s) 308, subscriber identity module (SIM) card slot 310, headset jack 312, and docking/charging external port 224. Push button 306 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 200 also accepts verbal input for activation or deactivation of some functions through microphone 213. Device 200 also, optionally, includes one or more contact intensity sensors 265 for detecting intensity of contacts on touch screen 212 and/or one or more tactile output generators 267 for generating tactile outputs for a user of device 200.

FIG. 4 is a block diagram of an exemplary multifunction device with a display and a touch-sensitive surface in accordance with some embodiments. Device 400 need not be portable. In some embodiments, device 400 is a laptop computer, a desktop computer, a tablet computer, a multimedia player device, a navigation device, an educational device (such as a child's learning toy), a gaming system, or a control device (e.g., a home or industrial controller). Device 400 typically includes one or more processing units (CPUs) 410, one or more network or other communications interfaces 460, memory 470, and one or more communication buses 420 for interconnecting these components. Communication buses 420 optionally include circuitry (sometimes called a chipset) that interconnects and controls communications between system components. Device 400 includes input/output (I/O) interface 430 comprising display 440, which is typically a touch screen display. I/O interface 430 also optionally includes a keyboard and/or mouse (or other pointing device) 450 and touchpad 455, tactile output generator 457 for generating tactile outputs on device 400 (e.g., similar to tactile output generator(s) 267 described above with reference to FIG. 2A), sensors 459 (e.g., optical, acceleration, proximity, touch-sensitive, and/or contact intensity sensors similar to contact intensity sensor(s) 265 described above with reference to FIG. 2A). Memory 470 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 470 optionally includes one or more storage devices remotely located from CPU(s) 410. In some embodiments, memory 470 stores programs, modules, and data structures analogous to the programs, modules, and data structures stored in memory 202 of portable multifunction device 200 (FIG. 2A), or a subset thereof. Furthermore, memory 470 optionally stores additional programs, modules, and data structures not present in memory 202 of portable multifunction device 200. For example, memory 470 of device 400 optionally stores drawing module 480, presentation module 482, word processing module 484, website creation module 486, disk authoring module 488, and/or spreadsheet module 490, while memory 202 of portable multifunction device 200 (FIG. 2A) optionally does not store these modules.

Each of the above-identified elements in FIG. 4 is, in some examples, stored in one or more of the previously mentioned memory devices. Each of the above-identified modules corresponds to a set of instructions for performing a function described above. The above-identified modules or programs (e.g., sets of instructions) need not be implemented as separate software programs, procedures, or modules, and thus various subsets of these modules are combined or otherwise rearranged in various embodiments. In some embodiments, memory 470 stores a subset of the modules and data structures identified above. Furthermore, memory 470 stores additional modules and data structures not described above.

Attention is now directed towards embodiments of user interfaces that are, optionally, implemented on, for example, portable multifunction device 200.

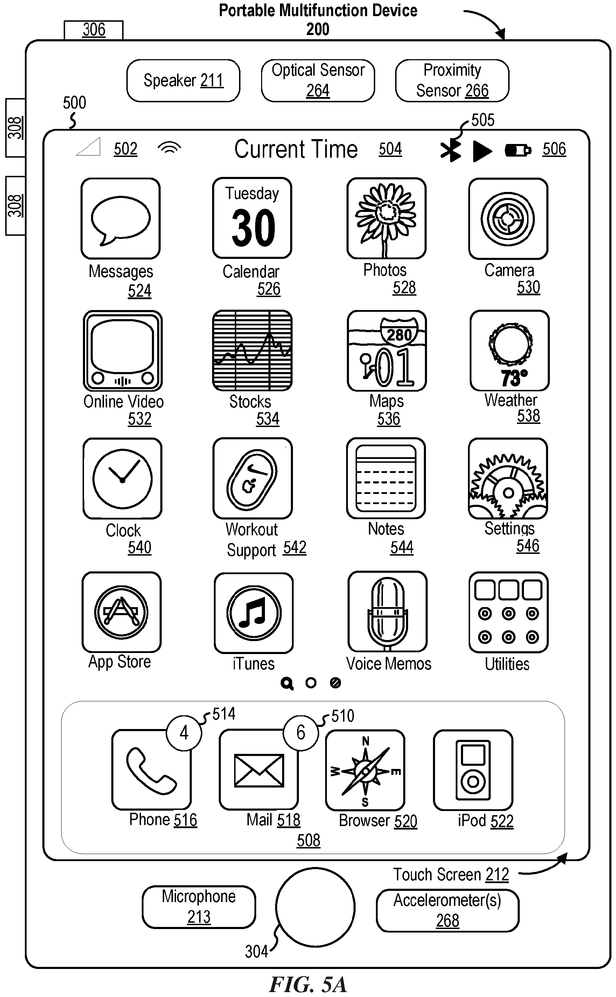

FIG. 5A illustrates an exemplary user interface for a menu of applications on portable multifunction device 200 in accordance with some embodiments. Similar user interfaces are implemented on device 400. In some embodiments, user interface 500 includes the following elements, or a subset or superset thereof:

Signal strength indicator(s) 502 for wireless communication(s), such as cellular and Wi-Fi signals;
- Time 504;
- Bluetooth indicator 505;
- Battery status indicator 506;
- Tray 508 with icons for frequently used applications, such as:
   o Icon 516 for telephone module 238, labeled "Phone," which optionally includes an indicator 514 of the number of missed calls or voicemail messages;
   o Icon 518 for e-mail client module 240, labeled "Mail," which optionally includes an indicator 510 of the number of unread e-mails;
   o Icon 520 for browser module 247, labeled "Browser;" and
   o Icon 522 for video and music player module 252, also referred to as iPod (trademark of Apple Inc.) module 252, labeled "iPod;" and
- Icons for other applications, such as:
   o Icon 524 for IM module 241, labeled "Messages;"
   o Icon 526 for calendar module 248, labeled "Calendar;"
   o Icon 528 for image management module 244, labeled "Photos;"
   o Icon 530 for camera module 243, labeled "Camera;"
   o Icon 532 for online video module 255, labeled "Online Video;"
   o Icon 534 for stocks widget 249-2, labeled "Stocks;"
   o Icon 536 for map module 254, labeled "Maps;"
   o Icon 538 for weather widget 249-1, labeled "Weather;"
   ∘ Icon 540 for alarm clock widget 249-4, labeled "Clock;"
   ∘ Icon 542 for workout support module 242, labeled "Workout Support;"
   ∘ Icon 544 for notes module 253, labeled "Notes;" and
   ∘ Icon 546 for a settings application or module, labeled "Settings," which provides access to settings for device 200 and its various applications 236.

It should be noted that the icon labels illustrated in FIG. 5A are merely exemplary. For example, icon 522 for video and music player module 252 is optionally labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

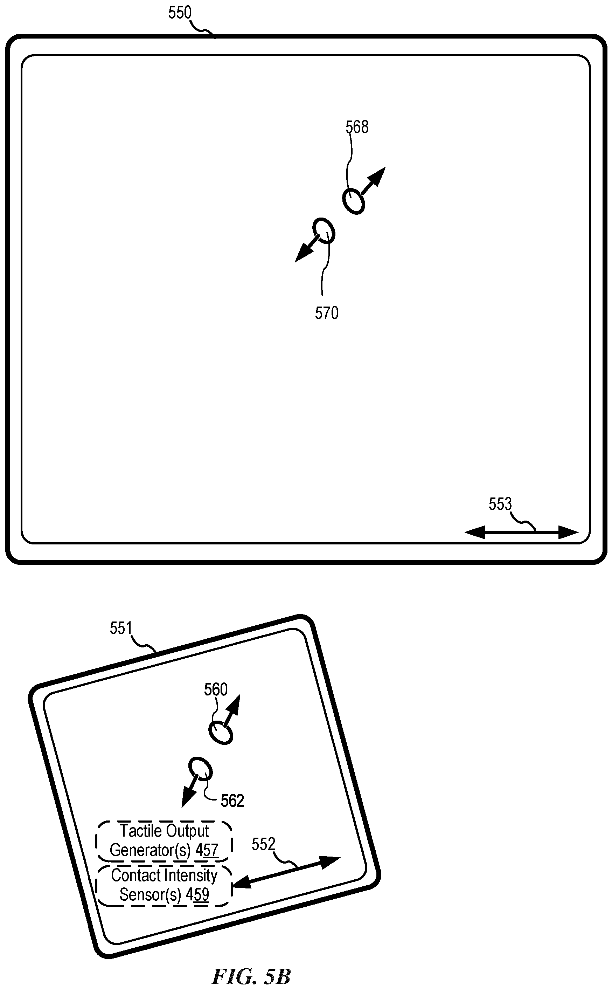

FIG. 5B illustrates an exemplary user interface on a device (e.g., device 400, FIG. 4) with a touch-sensitive surface 551 (e.g., a tablet or touchpad 455, FIG. 4) that is separate from the display 550 (e.g., touch screen display 212). Device 400 also, optionally, includes one or more contact intensity sensors (e.g., one or more of sensors 457) for detecting intensity of contacts on touch-sensitive surface 551 and/or one or more tactile output generators 459 for generating tactile outputs for a user of device 400.

Although some of the examples which follow will be given with reference to inputs on touch screen display 212 (where the touch-sensitive surface and the display are combined), in some embodiments, the device detects inputs on a touch-sensitive surface that is separate from the display, as shown in FIG. 5B. In some embodiments, the touch-sensitive surface (e.g., 551 in FIG. 5B) has a primary axis (e.g., 552 in FIG. 5B) that corresponds to a primary axis (e.g., 553 in FIG. 5B) on the display (e.g., 550). In accordance with these embodiments, the device detects contacts (e.g., 560 and 562 in FIG. 5B) with the touch-sensitive surface 551 at locations that correspond to respective locations on the display (e.g., in FIG. 5B, 560 corresponds to 568 and 562 corresponds to 570). In this way, user inputs (e.g., contacts 560 and 562, and movements thereof) detected by the device on the touch-sensitive surface (e.g., 551 in FIG. 5B) are used by the device to manipulate the user interface on the display (e.g., 550 in FIG. 5B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

FIG. 6A illustrates exemplary personal electronic device 600. Device 600 includes body 602. In some embodiments, device 600 includes some or all of the features described with respect to devices 200 and 400 (e.g., FIGS. 2A-4). In some embodiments, device 600 has touch-sensitive display screen 604, hereafter touch screen 604. Alternatively, or in addition to touch screen 604, device 600 has a display and a touch-sensitive surface. As with devices 200 and 400, in some embodiments, touch screen 604 (or the touch-sensitive surface) has one or more intensity sensors for detecting intensity of contacts (e.g., touches) being applied. The one or more intensity sensors of touch screen 604 (or the touch-sensitive surface) provide output data that represents the intensity of touches. The user interface of device 600 responds to touches based on their intensity, meaning that touches of different intensities can invoke different user interface operations on device 600.

Techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, published as WIPO Publication No. WO/2013/169849, and International Patent Application Serial No. PCT/US2013/069483, titled "Device, Method, and Graphical User Interface for Transitioning Between Touch Input to Display Output Relationships," filed November 11, 2013, published as WIPO Publication No. WO/2014/105276.

In some embodiments, device 600 has one or more input mechanisms 606 and 608. Input mechanisms 606 and 608, if included, can be physical. Examples of physical input mechanisms include push buttons and rotatable mechanisms. In some embodiments, device 600 has one or more attachment mechanisms. Such attachment mechanisms, if included, can permit attachment of device 600 with, for example, hats, eyewear, earrings, necklaces, shirts, jackets, bracelets, watch straps, chains, trousers, belts, shoes, purses, backpacks, and so forth. These attachment mechanisms permit device 600 to be worn by a user.

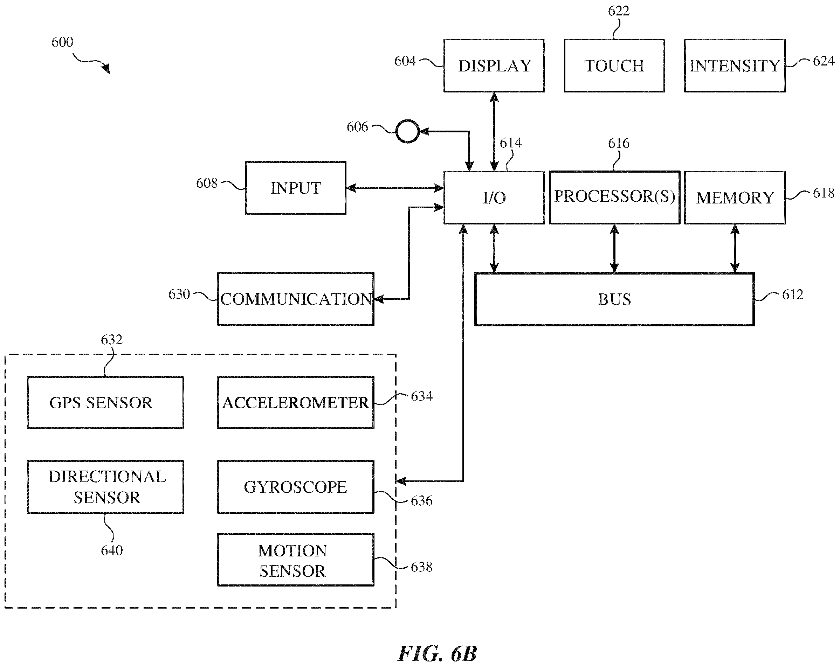

FIG. 6B depicts exemplary personal electronic device 600. In some embodiments, device 600 optionally includes some or all of the components described with respect to FIGS. 2A, 2B, and 4. Device 600 has bus 612 that operatively couples I/O section 614 with one or more computer processors 616 and memory 618. I/O section 614 is connected to display 604, which can have touch-sensitive component 622 and, optionally, touch-intensity sensitive component 624. In addition, I/O section 614 is connected with communication unit 630 for receiving application and operating system data, using Wi-Fi, Bluetooth, near field communication (NFC), cellular, and/or other wireless communication techniques. Device 600 includes input mechanisms 606 and/or 608. Input mechanism 606 is, optionally, a rotatable input device or a depressible and rotatable input device, for example. Input mechanism 608 is, optionally, a button, in some examples.

Input mechanism 608 is, optionally, a microphone, in some examples. Personal electronic device 600 optionally includes various sensors, such as GPS sensor 632, accelerometer 634, directional sensor 640 (e.g., compass), gyroscope 636, motion sensor 638, and/or a combination thereof, all of which are, optionally, operatively connected to I/O section 614.

Memory 618 of personal electronic device 600 is a non-transitory computer-readable storage medium, for storing computer-executable instructions, which, when executed by one or more computer processors 616, for example, cause the computer processors to perform the techniques and processes described below. The computer-executable instructions, for example, are also stored and/or transported within any non-transitory computer-readable storage medium for use by or in connection with an instruction execution system, apparatus, or device, such as a computer-based system, processor-containing system, or other system that can fetch the instructions from the instruction execution system, apparatus, or device and execute the instructions. In some examples, the storage medium is a non-transitory computer-readable storage medium. The non-transitory computer-readable storage medium any type of storage including but not limited to, magnetic, optical, and/or semiconductor storages. Examples of such storage include magnetic disks, optical discs based on CD, DVD, or Blu-ray technologies, as well as persistent solid-state memory such as flash, solid-state drives, and the like. Personal electronic device 600 is not limited to the components and configuration of FIG. 6B, but can include other or additional components in multiple configurations.

As used here, the term "affordance" refers to a user-interactive graphical user interface object that is, optionally, displayed on the display screen of devices 200, 400, 600 and/or 800 (FIGS. 2A, 4, 6A-B, and 8A-F). For example, an image (e.g., icon), a button, and text (e.g., hyperlink) each optionally constitutes an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 455 in FIG. 4 or touch-sensitive surface 551 in FIG. 5B) while the cursor is over a particular user interface element (e.g., a button, window, slider or other user interface element), the particular user interface element is adjusted in accordance with the detected input. In some implementations that include a touch screen display (e.g., touch-sensitive display system 212 in FIG. 2A or touch screen 212 in FIG. 5A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation) rather than being used to determine whether to perform a first operation or a second operation.

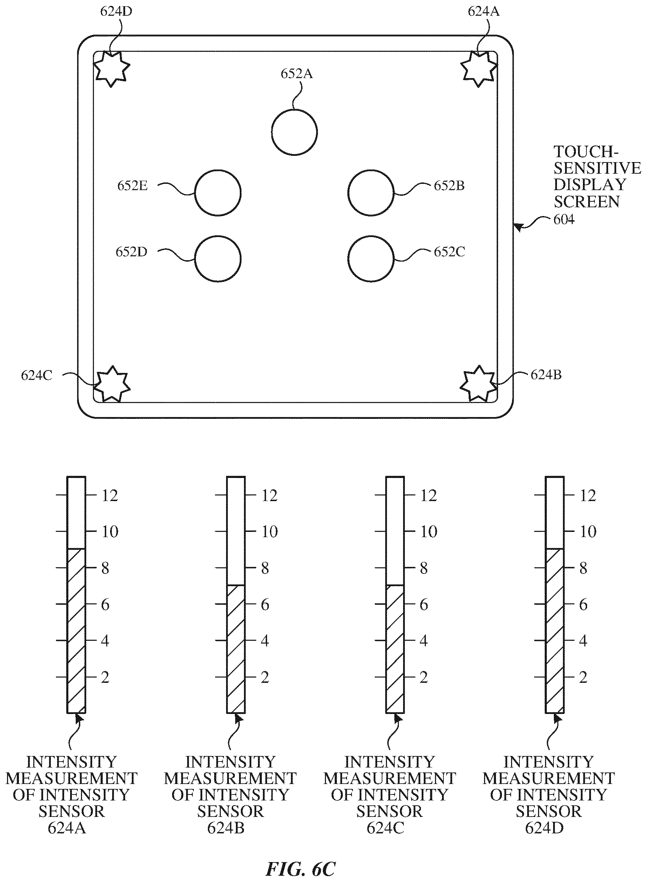

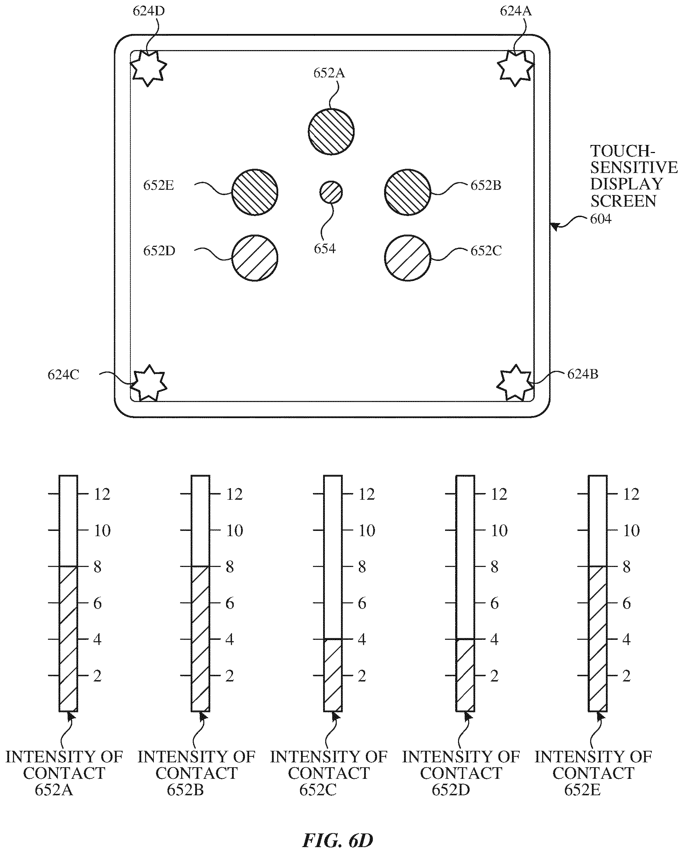

FIG. 6C illustrates detecting a plurality of contacts 652A-652E on touch-sensitive display screen 604 with a plurality of intensity sensors 624A-624D. FIG. 6C additionally includes intensity diagrams that show the current intensity measurements of the intensity sensors 624A-624D relative to units of intensity. In this example, the intensity measurements of intensity sensors 624A and 624D are each 9 units of intensity, and the intensity measurements of intensity sensors 624B and 624C are each 7 units of intensity. In some implementations, an aggregate intensity is the sum of the intensity measurements of the plurality of intensity sensors 624A-624D, which in this example is 32 intensity units. In some embodiments, each contact is assigned a respective intensity that is a portion of the aggregate intensity. FIG. 6D illustrates assigning the aggregate intensity to contacts 652A-652E based on their distance from the center of force 654. In this example, each of contacts 652A, 652B, and 652E are assigned an intensity of contact of 8 intensity units of the aggregate intensity, and each of contacts 652C and 652D are assigned an intensity of contact of 4 intensity units of the aggregate intensity. More generally, in some implementations, each contact j is assigned a respective intensity Ij that is a portion of the aggregate intensity, A, in accordance with a predefined mathematical function, Ij = A·(Dj/ΣDi), where Dj is the distance of the respective contact j to the center of force, and ΣDi is the sum of the distances of all the respective contacts (e.g., i=1 to last) to the center of force. The operations described with reference to FIGS. 6C-6D can be performed using an electronic device similar or identical to device 104, 200, 400, or 600. In some embodiments, a characteristic intensity of a contact is based on one or more intensities of the contact. In some embodiments, the intensity sensors are used to determine a single characteristic intensity (e.g., a single characteristic intensity of a single contact). It should be noted that the intensity diagrams are not part of a displayed user interface, but are included in FIGS. 6C-6D to aid the reader.

In some embodiments, a portion of a gesture is identified for purposes of determining a characteristic intensity. For example, a touch-sensitive surface receives a continuous swipe contact transitioning from a start location and reaching an end location, at which point the intensity of the contact increases. In this example, the characteristic intensity of the contact at the end location is based on only a portion of the continuous swipe contact, and not the entire swipe contact (e.g., only the portion of the swipe contact at the end location). In some embodiments, a smoothing algorithm is applied to the intensities of the swipe contact prior to determining the characteristic intensity of the contact. For example, the smoothing algorithm optionally includes one or more of: an unweighted sliding-average smoothing algorithm, a triangular smoothing algorithm, a median filter smoothing algorithm, and/or an exponential smoothing algorithm. In some circumstances, these smoothing algorithms eliminate narrow spikes or dips in the intensities of the swipe contact for purposes of determining a characteristic intensity.

The intensity of a contact on the touch-sensitive surface is, optionally, characterized relative to one or more intensity thresholds, such as a contact-detection intensity threshold, a light press intensity threshold, a deep press intensity threshold, and/or one or more other intensity thresholds. In some embodiments, the light press intensity threshold corresponds to an intensity at which the device will perform operations typically associated with clicking a button of a physical mouse or a trackpad. In some embodiments, the deep press intensity threshold corresponds to an intensity at which the device will perform operations that are different from operations typically associated with clicking a button of a physical mouse or a trackpad. In some embodiments, when a contact is detected with a characteristic intensity below the light press intensity threshold (e.g., and above a nominal contact-detection intensity threshold below which the contact is no longer detected), the device will move a focus selector in accordance with movement of the contact on the touch-sensitive surface without performing an operation associated with the light press intensity threshold or the deep press intensity threshold. Generally, unless otherwise stated, these intensity thresholds are consistent between different sets of user interface figures.

An increase of characteristic intensity of the contact from an intensity below the light press intensity threshold to an intensity between the light press intensity threshold and the deep press intensity threshold is sometimes referred to as a "light press" input. An increase of characteristic intensity of the contact from an intensity below the deep press intensity threshold to an intensity above the deep press intensity threshold is sometimes referred to as a "deep press" input. An increase of characteristic intensity of the contact from an intensity below the contact-detection intensity threshold to an intensity between the contact-detection intensity threshold and the light press intensity threshold is sometimes referred to as detecting the contact on the touch-surface. A decrease of characteristic intensity of the contact from an intensity above the contact-detection intensity threshold to an intensity below the contact-detection intensity threshold is sometimes referred to as detecting liftoff of the contact from the touch-surface. In some embodiments, the contact-detection intensity threshold is zero. In some embodiments, the contact-detection intensity threshold is greater than zero.

In some embodiments described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., an "up stroke" of the respective press input).

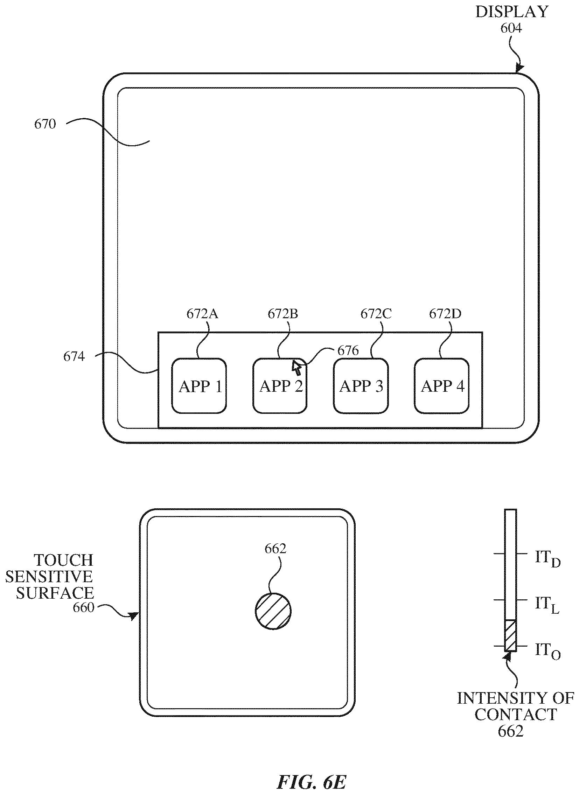

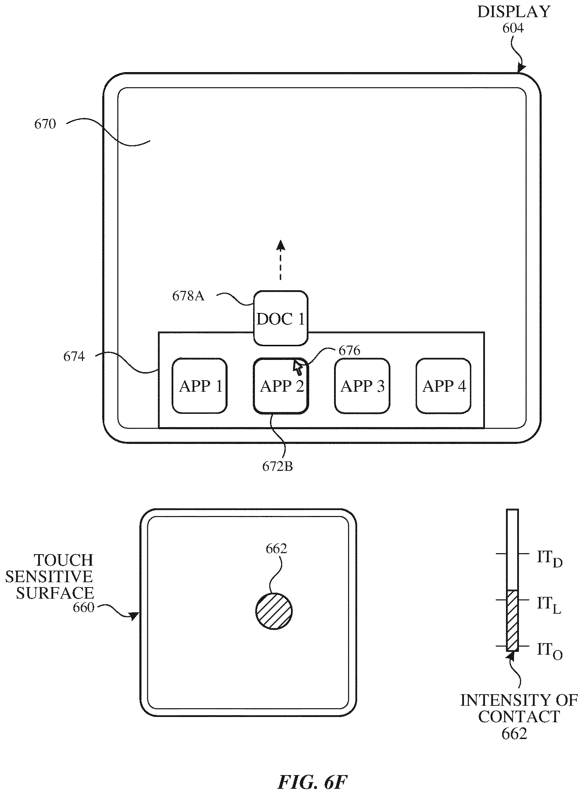

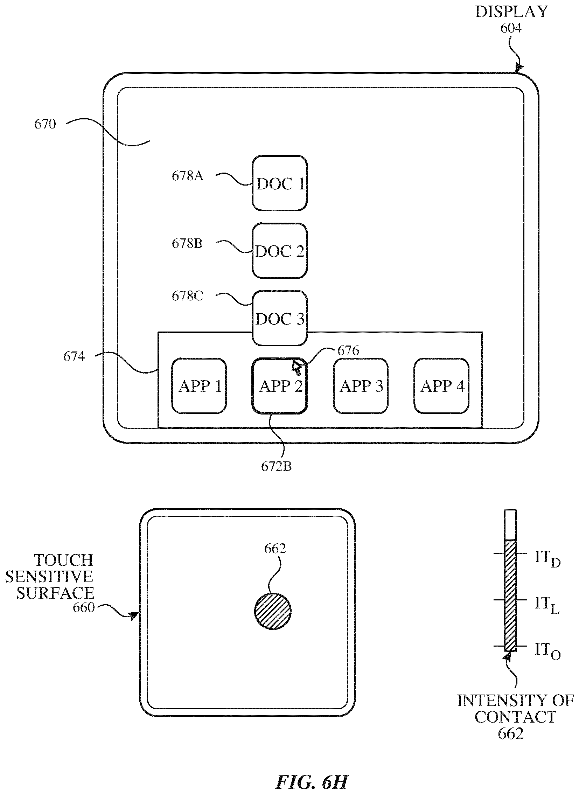

FIGS. 6E-6H illustrate detection of a gesture that includes a press input that corresponds to an increase in intensity of a contact 662 from an intensity below a light press intensity threshold (e.g., "IT_{L}") in FIG. 6E, to an intensity above a deep press intensity threshold (e.g., "IT_{D}") in FIG. 6H. The gesture performed with contact 662 is detected on touch-sensitive surface 660 while cursor 676 is displayed over application icon 672B corresponding to App 2, on a displayed user interface 670 that includes application icons 672A-672D displayed in predefined region 674. In some embodiments, the gesture is detected on touch-sensitive display 604. The intensity sensors detect the intensity of contacts on touch-sensitive surface 660. The device determines that the intensity of contact 662 peaked above the deep press intensity threshold (e.g., "IT_{D}"). Contact 662 is maintained on touch-sensitive surface 660. In response to the detection of the gesture, and in accordance with contact 662 having an intensity that goes above the deep press intensity threshold (e.g., "IT_{D}") during the gesture, reduced-scale representations 678A-678C (e.g., thumbnails) of recently opened documents for App 2 are displayed, as shown in FIGS. 6F-6H. In some embodiments, the intensity, which is compared to the one or more intensity thresholds, is the characteristic intensity of a contact. It should be noted that the intensity diagram for contact 662 is not part of a displayed user interface, but is included in FIGS. 6E-6H to aid the reader.

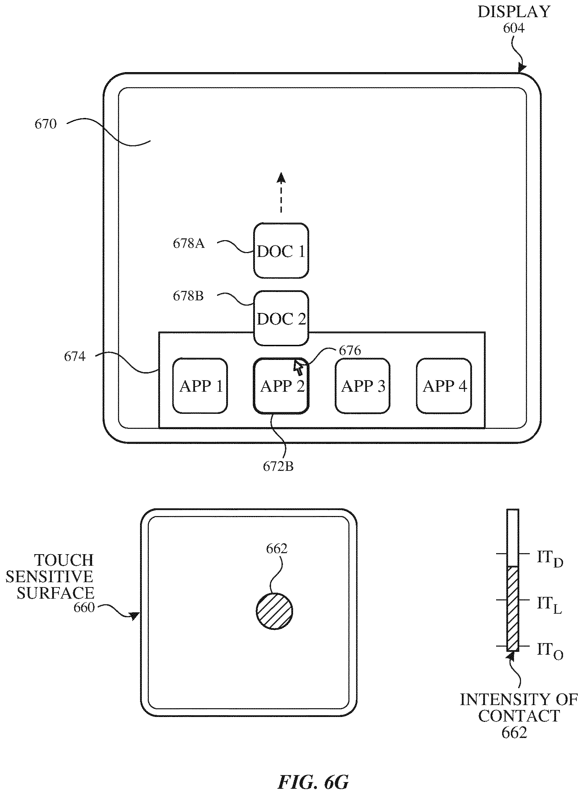

In some embodiments, the display of representations 678A-678C includes an animation. For example, representation 678A is initially displayed in proximity of application icon 672B, as shown in FIG. 6F. As the animation proceeds, representation 678A moves upward and representation 678B is displayed in proximity of application icon 672B, as shown in FIG. 6G. Then, representations 678A moves upward, 678B moves upward toward representation 678A, and representation 678C is displayed in proximity of application icon 672B, as shown in FIG. 6H. Representations 678A-678C form an array above icon 672B. In some embodiments, the animation progresses in accordance with an intensity of contact 662, as shown in FIGS. 6F-6G, where the representations 678A-678C appear and move upwards as the intensity of contact 662 increases toward the deep press intensity threshold (e.g., "IT_{D}"). In some embodiments, the intensity, on which the progress of the animation is based, is the characteristic intensity of the contact. The operations described with reference to FIGS. 6E-6H can be performed using an electronic device similar or identical to device 104, 200, 400, 600, or 800.

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90%, or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the descriptions of operations performed in response to a press input associated with a press-input intensity threshold or in response to a gesture including the press input are, optionally, triggered in response to detecting either: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, and/or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold.

As used herein, an "installed application" refers to a software application that has been downloaded onto an electronic device (e.g., devices 100, 200, 400, 600 and/or 800) and is ready to be launched (e.g., become opened) on the device. In some embodiments, a downloaded application becomes an installed application by way of an installation program that extracts program portions from a downloaded package and integrates the extracted portions with the operating system of the computer system.

As used herein, the terms "open application" or "executing application" refer to a software application with retained state information (e.g., as part of device/global internal state 157 and/or application internal state 192). An open or executing application is, optionally, any one of the following types of applications:
- an active application, which is currently displayed on a display screen of the device that the application is being used on;
- a background application (or background processes), which is not currently displayed, but one or more processes for the application are being processed by one or more processors; and
- a suspended or hibernated application, which is not running, but has state information that is stored in memory (volatile and non-volatile, respectively) and that can be used to resume execution of the application.

As used herein, the term "closed application" refers to software applications without retained state information (e.g., state information for closed applications is not stored in a memory of the device). Accordingly, closing an application includes stopping and/or removing application processes for the application and removing state information for the application from the memory of the device. Generally, opening a second application while in a first application does not close the first application. When the second application is displayed and the first application ceases to be displayed, the first application becomes a background application.

### 3. Digital Assistant System

FIG. 7A illustrates a block diagram of digital assistant system 700 in accordance with various examples. In some examples, digital assistant system 700 is implemented on a standalone computer system. In some examples, digital assistant system 700 is distributed across multiple computers. In some examples, some of the modules and functions of the digital assistant are divided into a server portion and a client portion, where the client portion resides on one or more user devices (e.g., devices 104, 122, 200, 400, 600, or 800) and communicates with the server portion (e.g., server system 108) through one or more networks, e.g., as shown in FIG. 1. In some examples, digital assistant system 700 is an implementation of server system 108 (and/or DA server 106) shown in FIG. 1. It should be noted that digital assistant system 700 is only one example of a digital assistant system, and that digital assistant system 700 can have more or fewer components than shown, can combine two or more components, or can have a different configuration or arrangement of the components. The various components shown in FIG. 7A are implemented in hardware, software instructions for execution by one or more processors, firmware, including one or more signal processing and/or application specific integrated circuits, or a combination thereof.

Digital assistant system 700 includes memory 702, one or more processors 704, input/output (I/O) interface 706, and network communications interface 708. These components can communicate with one another over one or more communication buses or signal lines 710.

In some examples, memory 702 includes a non-transitory computer-readable medium, such as high-speed random access memory and/or a non-volatile computer-readable storage medium (e.g., one or more magnetic disk storage devices, flash memory devices, or other non-volatile solid-state memory devices).

In some examples, I/O interface 706 couples input/output devices 716 of digital assistant system 700, such as displays, keyboards, touch screens, and microphones, to user interface module 722. I/O interface 706, in conjunction with user interface module 722, receives user inputs (e.g., voice input, keyboard inputs, touch inputs, etc.) and processes them accordingly. In some examples, e.g., when the digital assistant is implemented on a standalone user device, digital assistant system 700 includes any of the components and I/O communication interfaces described with respect to devices 200, 400, 600, or 800 in FIGS. 2A, 4, 6A-B, 8A-F respectively. In some examples, digital assistant system 700 represents the server portion of a digital assistant implementation, and can interact with the user through a client-side portion residing on a user device (e.g., devices 104, 200, 400, 600, or 800).

In some examples, the network communications interface 708 includes wired communication port(s) 712 and/or wireless transmission and reception circuitry 714. The wired communication port(s) receives and send communication signals via one or more wired interfaces, e.g., Ethernet, Universal Serial Bus (USB), FIREWIRE, etc. The wireless circuitry 714 receives and sends RF signals and/or optical signals from/to communications networks and other communications devices. The wireless communications use any of a plurality of communications standards, protocols, and technologies, such as GSM, EDGE, CDMA, TDMA, Bluetooth, Wi-Fi, VoIP, Wi-MAX, or any other suitable communication protocol. Network communications interface 708 enables communication between digital assistant system 700 with networks, such as the Internet, an intranet, and/or a wireless network, such as a cellular telephone network, a wireless local area network (LAN), and/or a metropolitan area network (MAN), and other devices.

In some examples, memory 702, or the computer-readable storage media of memory 702, stores programs, modules, instructions, and data structures including all or a subset of: operating system 718, communications module 720, user interface module 722, one or more applications 724, and digital assistant module 726. In particular, memory 702, or the computer-readable storage media of memory 702, stores instructions for performing the processes described below. One or more processors 704 execute these programs, modules, and instructions, and reads/writes from/to the data structures.

Operating system 718 (e.g., Darwin, RTXC, LINUX, UNIX, iOS, OS X, WINDOWS, or an embedded operating system such as VxWorks) includes various software components and/or drivers for controlling and managing general system tasks (e.g., memory management, storage device control, power management, etc.) and facilitates communications between various hardware, firmware, and software components.

Communications module 720 facilitates communications between digital assistant system 700 with other devices over network communications interface 708. For example, communications module 720 communicates with RF circuitry 208 of electronic devices such as devices 200, 400, and 600 shown in FIGS. 2A, 4, 6A-B, respectively. Communications module 720 also includes various components for handling data received by wireless circuitry 714 and/or wired communications port 712.

User interface module 722 receives commands and/or inputs from a user via I/O interface 706 (e.g., from a keyboard, touch screen, pointing device, controller, and/or microphone), and generate user interface objects on a display. User interface module 722 also prepares and delivers outputs (e.g., speech, sound, animation, text, icons, vibrations, haptic feedback, light, etc.) to the user via the I/O interface 706 (e.g., through displays, audio channels, speakers, touch-pads, etc.).

Applications 724 include programs and/or modules that are configured to be executed by one or more processors 704. For example, if the digital assistant system is implemented on a standalone user device, applications 724 include user applications, such as games, a calendar application, a navigation application, or an email application. If digital assistant system 700 is implemented on a server, applications 724 include resource management applications, diagnostic applications, or scheduling applications, for example.

Memory 702 also stores digital assistant module 726 (or the server portion of a digital assistant). In some examples, digital assistant module 726 includes the following sub-modules, or a subset or superset thereof: input/output processing module 728, speech-to-text (STT) processing module 730, natural language processing module 732, dialogue flow processing module 734, task flow processing module 736, service processing module 738, and speech synthesis processing module 740. Each of these modules has access to one or more of the following systems or data and models of the digital assistant module 726, or a subset or superset thereof: ontology 760, vocabulary index 744, user data 748, task flow models 754, service models 756, and ASR systems 758.

In some examples, using the processing modules, data, and models implemented in digital assistant module 726, the digital assistant can perform at least some of the following: converting speech input into text; identifying a user's intent expressed in a natural language input received from the user; actively eliciting and obtaining information needed to fully infer the user's intent (e.g., by disambiguating words, games, intentions, etc.); determining the task flow for fulfilling the inferred intent; and executing the task flow to fulfill the inferred intent.

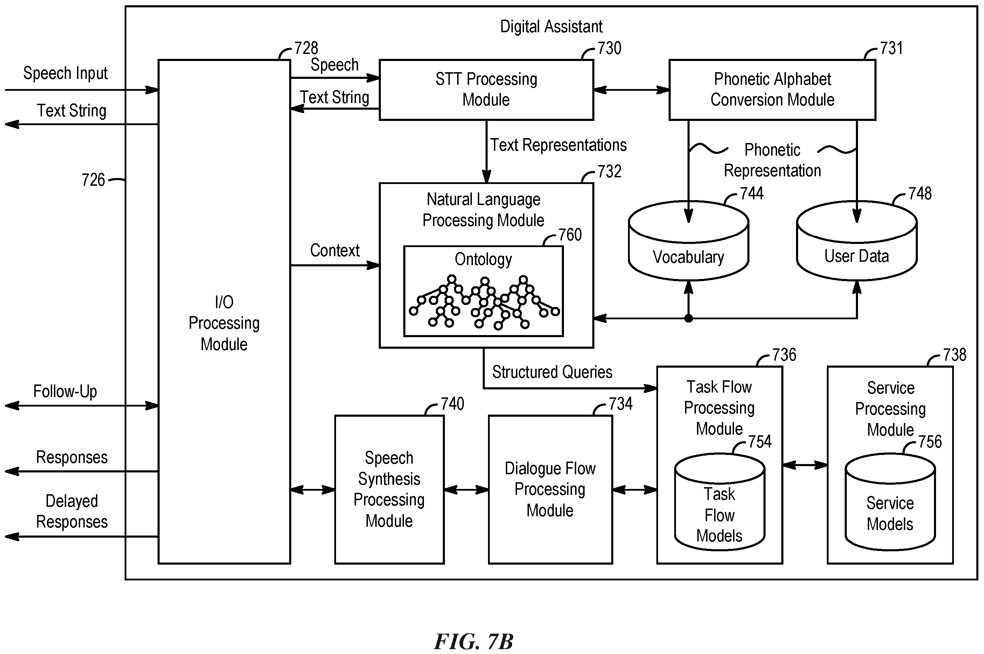

In some examples, as shown in FIG. 7B, I/O processing module 728 interacts with the user through I/O devices 716 in FIG. 7A or with a user device (e.g., devices 104, 200, 400, or 600) through network communications interface 708 in FIG. 7A to obtain user input (e.g., a speech input) and to provide responses (e.g., as speech outputs) to the user input. I/O processing module 728 optionally obtains contextual information associated with the user input from the user device, along with or shortly after the receipt of the user input. The contextual information includes user-specific data, vocabulary, and/or preferences relevant to the user input. In some examples, the contextual information also includes software and hardware states of the user device at the time the user request is received, and/or information related to the surrounding environment of the user at the time that the user request was received. In some examples, I/O processing module 728 also sends follow-up questions to, and receive answers from, the user regarding the user request. When a user request is received by I/O processing module 728 and the user request includes speech input, I/O processing module 728 forwards the speech input to STT processing module 730 (or speech recognizer) for speech-to-text conversions.

STT processing module 730 includes one or more ASR systems 758. The one or more ASR systems 758 can process the speech input that is received through I/O processing module 728 to produce a recognition result. Each ASR system 758 includes a front-end speech pre-processor. The front-end speech pre-processor extracts representative features from the speech input. For example, the front-end speech pre-processor performs a Fourier transform on the speech input to extract spectral features that characterize the speech input as a sequence of representative multi-dimensional vectors. Further, each ASR system 758 includes one or more speech recognition models (e.g., acoustic models and/or language models) and implements one or more speech recognition engines. Examples of speech recognition models include Hidden Markov Models, Gaussian-Mixture Models, Deep Neural Network Models, n-gram language models, and other statistical models. Examples of speech recognition engines include the dynamic time warping based engines and weighted finite-state transducers (WFST) based engines. The one or more speech recognition models and the one or more speech recognition engines are used to process the extracted representative features of the front-end speech pre-processor to produce intermediate recognitions results (e.g., phonemes, phonemic strings, and sub-words), and ultimately, text recognition results (e.g., words, word strings, or sequence of tokens). In some examples, the speech input is processed at least partially by a third-party service or on the user's device (e.g., device 104, 200, 400, or 600) to produce the recognition result. Once STT processing module 730 produces recognition results containing a text string (e.g., words, or sequence of words, or sequence of tokens), the recognition result is passed to natural language processing module 732 for intent deduction. In some examples, STT processing module 730 produces multiple candidate text representations of the speech input. Each candidate text representation is a sequence of words or tokens corresponding to the speech input. In some examples, each candidate text representation is associated with a speech recognition confidence score. Based on the speech recognition confidence scores, STT processing module 730 ranks the candidate text representations and provides the n-best (e.g., n highest ranked) candidate text representation(s) to natural language processing module 732 for intent deduction, where n is a predetermined integer greater than zero. For example, in one example, only the highest ranked (n=1) candidate text representation is passed to natural language processing module 732 for intent deduction. In another example, the five highest ranked (n=5) candidate text representations are passed to natural language processing module 732 for intent deduction.

More details on the speech-to-text processing are described in U.S. Utility Application Serial No. 13/236,942 for "Consolidating Speech Recognition Results," filed on September 20, 2011.

In some examples, STT processing module 730 includes and/or accesses a vocabulary of recognizable words via phonetic alphabet conversion module 731. Each vocabulary word is associated with one or more candidate pronunciations of the word represented in a speech recognition phonetic alphabet. In particular, the vocabulary of recognizable words includes a word that is associated with a plurality of candidate pronunciations. For example, the vocabulary includes the word "tomato" that is associated with the candidate pronunciations of 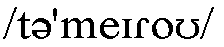 and 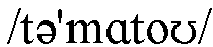 . Further, vocabulary words are associated with custom candidate pronunciations that are based on previous speech inputs from the user. Such custom candidate pronunciations are stored in STT processing module 730 and are associated with a particular user via the user's profile on the device. In some examples, the candidate pronunciations for words are determined based on the spelling of the word and one or more linguistic and/or phonetic rules. In some examples, the candidate pronunciations are manually generated, e.g., based on known canonical pronunciations.

In some examples, the candidate pronunciations are ranked based on the commonness of the candidate pronunciation. For example, the candidate pronunciation 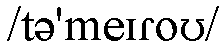 is ranked higher than 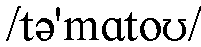 , because the former is a more commonly used pronunciation (e.g., among all users, for users in a particular geographical region, or for any other appropriate subset of users). In some examples, candidate pronunciations are ranked based on whether the candidate pronunciation is a custom candidate pronunciation associated with the user. For example, custom candidate pronunciations are ranked higher than canonical candidate pronunciations. This can be useful for recognizing proper nouns having a unique pronunciation that deviates from canonical pronunciation. In some examples, candidate pronunciations are associated with one or more speech characteristics, such as geographic origin, nationality, or ethnicity. For example, the candidate pronunciation 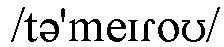 is associated with the United States, whereas the candidate pronunciation 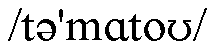 is associated with Great Britain. Further, the rank of the candidate pronunciation is based on one or more characteristics (e.g., geographic origin, nationality, ethnicity, etc.) of the user stored in the user's profile on the device. For example, it can be determined from the user's profile that the user is associated with the United States. Based on the user being associated with the United States, the candidate pronunciation 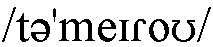 (associated with the United States) is ranked higher than the candidate pronunciation 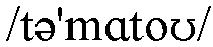 (associated with Great Britain). In some examples, one of the ranked candidate pronunciations is selected as a predicted pronunciation (e.g., the most likely pronunciation).

When a speech input is received, STT processing module 730 is used to determine the phonemes corresponding to the speech input (e.g., using an acoustic model), and then attempt to determine words that match the phonemes (e.g., using a language model). For example, if STT processing module 730 first identifies the sequence of phonemes 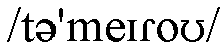 corresponding to a portion of the speech input, it can then determine, based on vocabulary index 744, that this sequence corresponds to the word "tomato."

**In** some examples, STT processing module 730 uses approximate matching techniques to determine words in an utterance. Thus, for example, the STT processing module 730 determines that the sequence of phonemes 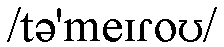 corresponds to the word "tomato," even if that particular sequence of phonemes is not one of the candidate sequence of phonemes for that word.

Natural language processing module 732 ("natural language processor") of the digital assistant takes the n-best candidate text representation(s) ("word sequence(s)" or "token sequence(s)") generated by STT processing module 730, and attempts to associate each of the candidate text representations with one or more "actionable intents" recognized by the digital assistant. An "actionable intent" (or "user intent") represents a task that can be performed by the digital assistant, and can have an associated task flow implemented in task flow models 754. The associated task flow is a series of programmed actions and steps that the digital assistant takes in order to perform the task. The scope of a digital assistant's capabilities is dependent on the number and variety of task flows that have been implemented and stored in task flow models 754, or in other words, on the number and variety of "actionable intents" that the digital assistant recognizes. The effectiveness of the digital assistant, however, also dependents on the assistant's ability to infer the correct "actionable intent(s)" from the user request expressed in natural language.

In some examples, in addition to the sequence of words or tokens obtained from STT processing module 730, natural language processing module 732 also receives contextual information associated with the user request, e.g., from I/O processing module 728. The natural language processing module 732 optionally uses the contextual information to clarify, supplement, and/or further define the information contained in the candidate text representations received from STT processing module 730. The contextual information includes, for example, user preferences, hardware, and/or software states of the user device, sensor information collected before, during, or shortly after the user request, prior interactions (e.g., dialogue) between the digital assistant and the user, and the like. As described herein, contextual information is, in some examples, dynamic, and changes with time, location, content of the dialogue, and other factors.

In some examples, the natural language processing is based on, e.g., ontology 760. Ontology 760 is a hierarchical structure containing many nodes, each node representing either an "actionable intent" or a "property" relevant to one or more of the "actionable intents" or other "properties." As noted above, an "actionable intent" represents a task that the digital assistant is capable of performing, i.e., it is "actionable" or can be acted on. A "property" represents a parameter associated with an actionable intent or a sub-aspect of another property. A linkage between an actionable intent node and a property node in ontology 760 defines how a parameter represented by the property node pertains to the task represented by the actionable intent node.

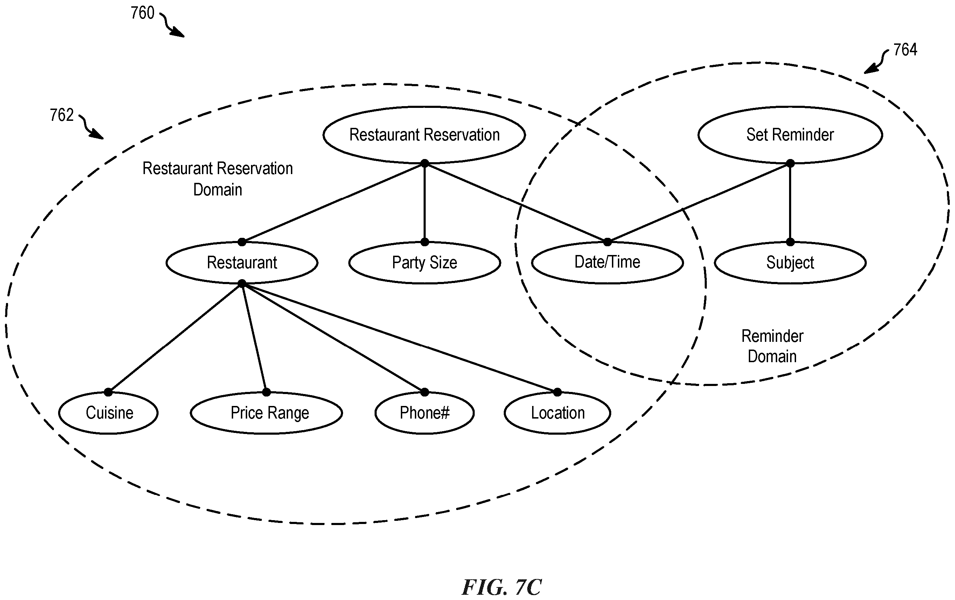

In some examples, ontology 760 is made up of actionable intent nodes and property nodes. Within ontology 760, each actionable intent node is linked to one or more property nodes either directly or through one or more intermediate property nodes. Similarly, each property node is linked to one or more actionable intent nodes either directly or through one or more intermediate property nodes. For example, as shown in FIG. 7C, ontology 760 includes a "restaurant reservation" node (i.e., an actionable intent node). Property nodes "restaurant," "date/time" (for the reservation), and "party size" are each directly linked to the actionable intent node (i.e., the "restaurant reservation" node).

In addition, property nodes "cuisine," "price range," "phone number," and "location" are sub-nodes of the property node "restaurant," and are each linked to the "restaurant reservation" node (i.e., the actionable intent node) through the intermediate property node "restaurant." For another example, as shown in FIG. 7C, ontology 760 also includes a "set reminder" node (i.e., another actionable intent node). Property nodes "date/time" (for setting the reminder) and "subject" (for the reminder) are each linked to the "set reminder" node. Since the property "date/time" is relevant to both the task of making a restaurant reservation and the task of setting a reminder, the property node "date/time" is linked to both the "restaurant reservation" node and the "set reminder" node in ontology 760.

An actionable intent node, along with its linked property nodes, is described as a "domain." In the present discussion, each domain is associated with a respective actionable intent, and refers to the group of nodes (and the relationships there between) associated with the particular actionable intent. For example, ontology 760 shown in FIG. 7C includes an example of restaurant reservation domain 762 and an example of reminder domain 764 within ontology 760. The restaurant reservation domain includes the actionable intent node "restaurant reservation," property nodes "restaurant," "date/time," and "party size," and sub-property nodes "cuisine," "price range," "phone number," and "location." Reminder domain 764 includes the actionable intent node "set reminder," and property nodes "subject" and "date/time." In some examples, ontology 760 is made up of many domains. Each domain shares one or more property nodes with one or more other domains. For example, the "date/time" property node is associated with many different domains (e.g., a scheduling domain, a travel reservation domain, a movie ticket domain, etc.), in addition to restaurant reservation domain 762 and reminder domain 764.

While FIG. 7C illustrates two example domains within ontology 760, other domains include, for example, "find a movie," "initiate a phone call," "find directions," "schedule a meeting," "send a message," and "provide an answer to a question," "read a list," "providing navigation instructions," "provide instructions for a task" and so on. A "send a message" domain is associated with a "send a message" actionable intent node, and further includes property nodes such as "recipient(s)," "message type," and "message body." The property node "recipient" is further defined, for example, by the sub-property nodes such as "recipient name" and "message address."

In some examples, ontology 760 includes all the domains (and hence actionable intents) that the digital assistant is capable of understanding and acting upon. In some examples, ontology 760 is modified, such as by adding or removing entire domains or nodes, or by modifying relationships between the nodes within the ontology 760.

In some examples, nodes associated with multiple related actionable intents are clustered under a "super domain" in ontology 760. For example, a "travel" super-domain includes a cluster of property nodes and actionable intent nodes related to travel. The actionable intent nodes related to travel includes "airline reservation," "hotel reservation," "car rental," "get directions," "find points of interest," and so on. The actionable intent nodes under the same super domain (e.g., the "travel" super domain) have many property nodes in common. For example, the actionable intent nodes for "airline reservation," "hotel reservation," "car rental," "get directions," and "find points of interest" share one or more of the property nodes "start location," "destination," "departure date/time," "arrival date/time," and "party size."

In some examples, each node in ontology 760 is associated with a set of words and/or phrases that are relevant to the property or actionable intent represented by the node. The respective set of words and/or phrases associated with each node are the so-called "vocabulary" associated with the node. The respective set of words and/or phrases associated with each node are stored in vocabulary index 744 in association with the property or actionable intent represented by the node. For example, returning to FIG. 7B, the vocabulary associated with the node for the property of "restaurant" includes words such as "food," "drinks," "cuisine," "hungry," "eat," "pizza," "fast food," "meal," and so on. For another example, the vocabulary associated with the node for the actionable intent of "initiate a phone call" includes words and phrases such as "call," "phone," "dial," "ring," "call this number," "make a call to," and so on. The vocabulary index 744 optionally includes words and phrases in different languages.

Natural language processing module 732 receives the candidate text representations (e.g., text string(s) or token sequence(s)) from STT processing module 730, and for each candidate representation, determines what nodes are implicated by the words in the candidate text representation. In some examples, if a word or phrase in the candidate text representation is found to be associated with one or more nodes in ontology 760 (via vocabulary index 744), the word or phrase "triggers" or "activates" those nodes. Based on the quantity and/or relative importance of the activated nodes, natural language processing module 732 selects one of the actionable intents as the task that the user intended the digital assistant to perform. In some examples, the domain that has the most "triggered" nodes is selected. In some examples, the domain having the highest confidence value (e.g., based on the relative importance of its various triggered nodes) is selected. In some examples, the domain is selected based on a combination of the number and the importance of the triggered nodes. In some examples, additional factors are considered in selecting the node as well, such as whether the digital assistant has previously correctly interpreted a similar request from a user.

User data 748 includes user-specific information, such as user-specific vocabulary, user preferences, user address, user's default and secondary languages, user's contact list, and other short-term or long-term information for each user. In some examples, natural language processing module 732 uses the user-specific information to supplement the information contained in the user input to further define the user intent. For example, for a user request "invite my friends to my birthday party," natural language processing module 732 is able to access user data 748 to determine who the "friends" are and when and where the "birthday party" would be held, rather than requiring the user to provide such information explicitly in his/her request.

It should be recognized that in some examples, natural language processing module 732 is implemented using one or more machine learning mechanisms (e.g., neural networks). In particular, the one or more machine learning mechanisms are configured to receive a candidate text representation and contextual information associated with the candidate text representation. Based on the candidate text representation and the associated contextual information, the one or more machine learning mechanisms are configured to determine intent confidence scores over a set of candidate actionable intents. Natural language processing module 732 can select one or more candidate actionable intents from the set of candidate actionable intents based on the determined intent confidence scores. In some examples, an ontology (e.g., ontology 760) is also used to select the one or more candidate actionable intents from the set of candidate actionable intents.

Other details of searching an ontology based on a token string are described in U.S. Utility Application Serial No. 12/341,743 for "Method and Apparatus for Searching Using An Active Ontology," filed December 22, 2008.

In some examples, once natural language processing module 732 identifies an actionable intent (or domain) based on the user request, natural language processing module 732 generates a structured query to represent the identified actionable intent. In some examples, the structured query includes parameters for one or more nodes within the domain for the actionable intent, and at least some of the parameters are populated with the specific information and requirements specified in the user request. For example, the user says "Make me a dinner reservation at a sushi place at 7." In this case, natural language processing module 732 is able to correctly identify the actionable intent to be "restaurant reservation" based on the user input. According to the ontology, a structured query for a "restaurant reservation" domain includes parameters such as {Cuisine}, {Time}, {Date}, {Party Size}, and the like. In some examples, based on the speech input and the text derived from the speech input using STT processing module 730, natural language processing module 732 generates a partial structured query for the restaurant reservation domain, where the partial structured query includes the parameters {Cuisine = "Sushi"} and {Time = "7pm"}. However, in this example, the user's utterance contains insufficient information to complete the structured query associated with the domain. Therefore, other necessary parameters such as {Party Size} and {Date} are not specified in the structured query based on the information currently available. In some examples, natural language processing module 732 populates some parameters of the structured query with received contextual information. For example, in some examples, if the user requested a sushi restaurant "near me," natural language processing module 732 populates a {location} parameter in the structured query with GPS coordinates from the user device.

In some examples, natural language processing module 732 identifies multiple candidate actionable intents for each candidate text representation received from STT processing module 730. Further, in some examples, a respective structured query (partial or complete) is generated for each identified candidate actionable intent. Natural language processing module 732 determines an intent confidence score for each candidate actionable intent and ranks the candidate actionable intents based on the intent confidence scores. In some examples, natural language processing module 732 passes the generated structured query (or queries), including any completed parameters, to task flow processing module 736 ("task flow processor"). In some examples, the structured query (or queries) for the m-best (e.g., m highest ranked) candidate actionable intents are provided to task flow processing module 736, where m is a predetermined integer greater than zero. In some examples, the structured query (or queries) for the m-best candidate actionable intents are provided to task flow processing module 736 with the corresponding candidate text representation(s).

Other details of inferring a user intent based on multiple candidate actionable intents determined from multiple candidate text representations of a speech input are described in U.S. Utility Application Serial No. 14/298,725 for "System and Method for Inferring User Intent From Speech Inputs," filed June 6, 2014.

Task flow processing module 736 is configured to receive the structured query (or queries) from natural language processing module 732, complete the structured query, if necessary, and perform the actions required to "complete" the user's ultimate request. In some examples, the various procedures necessary to complete these tasks are provided in task flow models 754. In some examples, task flow models 754 include procedures for obtaining additional information from the user and task flows for performing actions associated with the actionable intent.

As described above, in order to complete a structured query, task flow processing module 736 needs to initiate additional dialogue with the user in order to obtain additional information, and/or disambiguate potentially ambiguous utterances. When such interactions are necessary, task flow processing module 736 invokes dialogue flow processing module 734 to engage in a dialogue with the user. In some examples, dialogue flow processing module 734 determines how (and/or when) to ask the user for the additional information and receives and processes the user responses. The questions are provided to and answers are received from the users through I/O processing module 728. In some examples, dialogue flow processing module 734 presents dialogue output to the user via audio and/or visual output, and receives input from the user via spoken or physical (e.g., clicking) responses. Continuing with the example above, when task flow processing module 736 invokes dialogue flow processing module 734 to determine the "party size" and "date" information for the structured query associated with the domain "restaurant reservation," dialogue flow processing module 734 generates questions such as "For how many people?" and "On which day?" to pass to the user. Once answers are received from the user, dialogue flow processing module 734 then populates the structured query with the missing information, or pass the information to task flow processing module 736 to complete the missing information from the structured query.

Once task flow processing module 736 has completed the structured query for an actionable intent, task flow processing module 736 proceeds to perform the ultimate task associated with the actionable intent. Accordingly, task flow processing module 736 executes the steps and instructions in the task flow model according to the specific parameters contained in the structured query. For example, the task flow model for the actionable intent of "restaurant reservation" includes steps and instructions for contacting a restaurant and actually requesting a reservation for a particular party size at a particular time. For example, using a structured query such as: {restaurant reservation, restaurant = ABC Café, date = 3/12/2012, time = 7pm, party size = 5}, task flow processing module 736 performs the steps of: (1) logging onto a server of the ABC Café or a restaurant reservation system such as OPENTABLE^{®}, (2) entering the date, time, and party size information in a form on the website, (3) submitting the form, and (4) making a calendar entry for the reservation in the user's calendar.

In some examples, task flow processing module 736 employs the assistance of service processing module 738 ("service processing module") to complete a task requested in the user input or to provide an informational answer requested in the user input. For example, service processing module 738 acts on behalf of task flow processing module 736 to make a phone call, set a calendar entry, invoke a map search, invoke or interact with other user applications installed on the user device, and invoke or interact with third-party services (e.g., a restaurant reservation portal, a social networking website, a banking portal, etc.). In some examples, the protocols and application programming interfaces (API) required by each service are specified by a respective service model among service models 756. Service processing module 738 accesses the appropriate service model for a service and generates requests for the service in accordance with the protocols and APIs required by the service according to the service model.

For example, if a restaurant has enabled an online reservation service, the restaurant submits a service model specifying the necessary parameters for making a reservation and the APIs for communicating the values of the necessary parameter to the online reservation service. When requested by task flow processing module 736, service processing module 738 establishes a network connection with the online reservation service using the web address stored in the service model, and sends the necessary parameters of the reservation (e.g., time, date, party size) to the online reservation interface in a format according to the API of the online reservation service.

In some examples, natural language processing module 732, dialogue flow processing module 734, and task flow processing module 736 are used collectively and iteratively to infer and define the user's intent, obtain information to further clarify and refine the user intent, and finally generate a response (i.e., an output to the user, or the completion of a task) to fulfill the user's intent. The generated response is a dialogue response to the speech input that at least partially fulfills the user's intent. Further, in some examples, the generated response is output as a speech output. In these examples, the generated response is sent to speech synthesis processing module 740 (e.g., speech synthesizer) where it can be processed to synthesize the dialogue response in speech form. In yet other examples, the generated response is data content relevant to satisfying a user request in the speech input.

In examples where task flow processing module 736 receives multiple structured queries from natural language processing module 732, task flow processing module 736 initially processes the first structured query of the received structured queries to attempt to complete the first structured query and/or execute one or more tasks or actions represented by the first structured query. In some examples, the first structured query corresponds to the highest ranked actionable intent. In other examples, the first structured query is selected from the received structured queries based on a combination of the corresponding speech recognition confidence scores and the corresponding intent confidence scores. In some examples, if task flow processing module 736 encounters an error during processing of the first structured query (e.g., due to an inability to determine a necessary parameter), the task flow processing module 736 can proceed to select and process a second structured query of the received structured queries that corresponds to a lower ranked actionable intent. The second structured query is selected, for example, based on the speech recognition confidence score of the corresponding candidate text representation, the intent confidence score of the corresponding candidate actionable intent, a missing necessary parameter in the first structured query, or any combination thereof.

Speech synthesis processing module 740 is configured to synthesize speech outputs for presentation to the user. Speech synthesis processing module 740 synthesizes speech outputs based on text provided by the digital assistant. For example, the generated dialogue response is in the form of a text string. Speech synthesis processing module 740 converts the text string to an audible speech output. Speech synthesis processing module 740 uses any appropriate speech synthesis technique in order to generate speech outputs from text, including, but not limited, to concatenative synthesis, unit selection synthesis, diphone synthesis, domain-specific synthesis, formant synthesis, articulatory synthesis, hidden Markov model (HMM) based synthesis, and sinewave synthesis. In some examples, speech synthesis processing module 740 is configured to synthesize individual words based on phonemic strings corresponding to the words. For example, a phonemic string is associated with a word in the generated dialogue response. The phonemic string is stored in metadata associated with the word. Speech synthesis processing module 740 is configured to directly process the phonemic string in the metadata to synthesize the word in speech form.

In some examples, instead of (or in addition to) using speech synthesis processing module 740, speech synthesis is performed on a remote device (e.g., the server system 108), and the synthesized speech is sent to the user device for output to the user. For example, this can occur in some implementations where outputs for a digital assistant are generated at a server system. And because server systems generally have more processing power or resources than a user device, it is possible to obtain higher quality speech outputs than would be practical with client-side synthesis.

Additional details on digital assistants can be found in the U.S. Utility Application No. 12/987,982, entitled "Intelligent Automated Assistant," filed January 10, 2011, and U.S. Utility Application No. 13/251,088, entitled "Generating and Processing Task Items That Represent Tasks to Perform," filed September 30, 2011.

### 4. User Activity Shortcut Suggestions

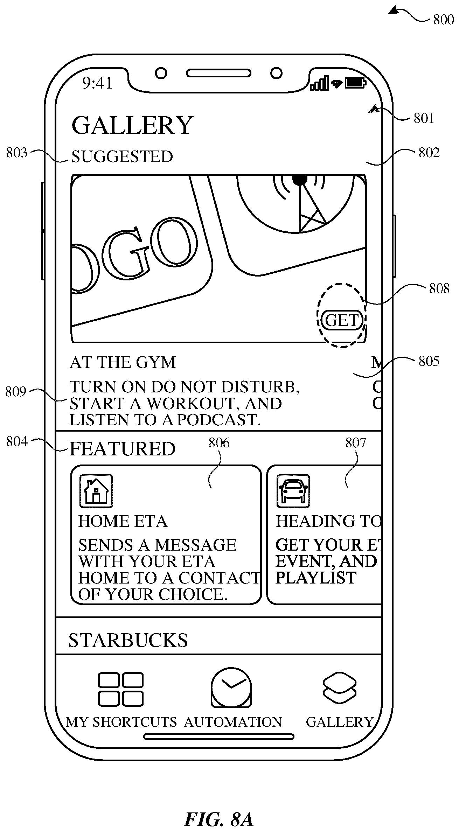

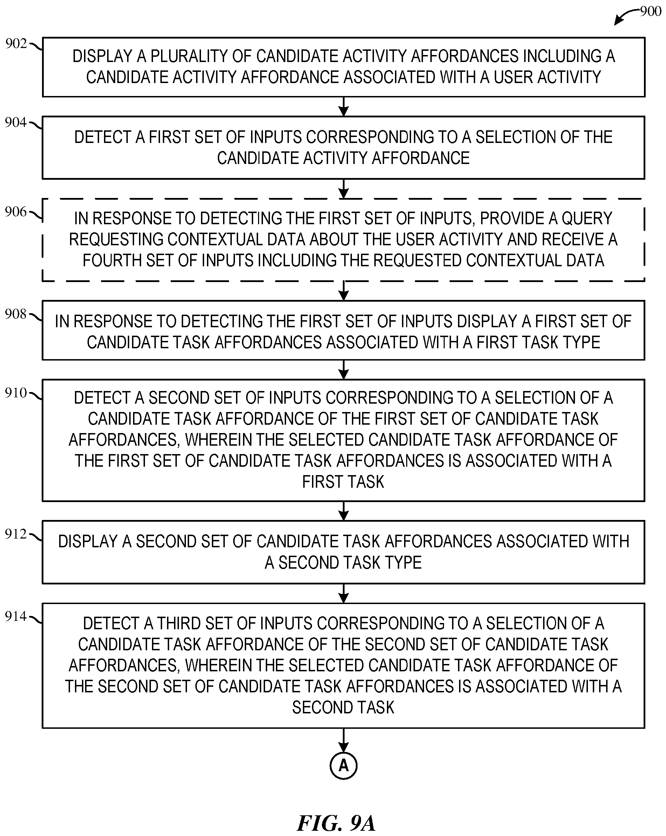

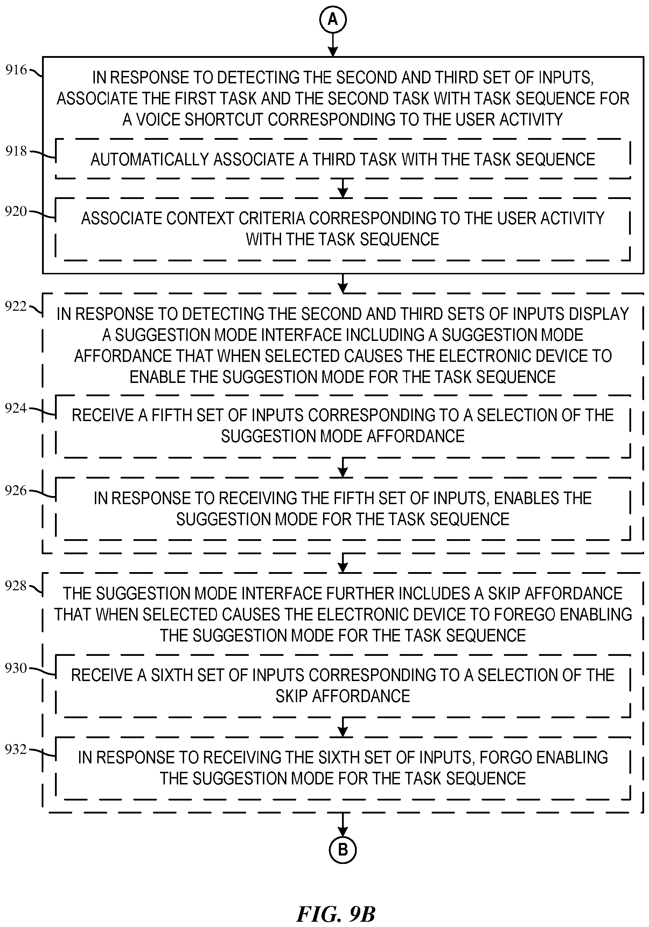

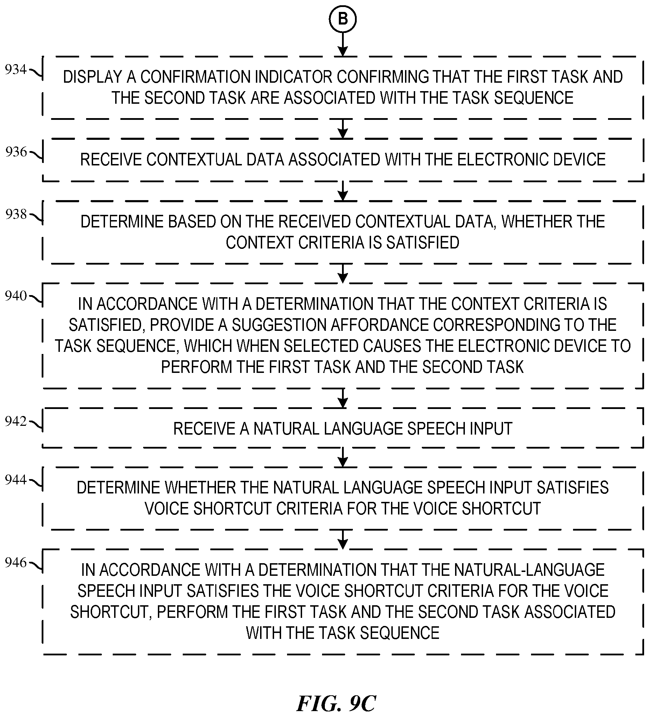

FIGS. 8A-8G illustrate exemplary user interfaces for associating tasks with a task sequence for a voice shortcut corresponding to a user activity, according to various examples. The user interfaces in these figures are used to illustrate the processes described below, including the process in FIGS. 9A-9C.

FIG. 8A illustrates an electronic device 800 (e.g., device 104, device 122, device 200, device 600, or device 700). In the non-limiting exemplary example illustrated in FIGS. 8A-8G, electronic device 800 is a smartphone. In other examples, electronic device 800 can be a different type of electronic device, such as a wearable device (e.g., a smartwatch). In some examples, electronic device 800 has a display 801, one or more input devices (e.g., touchscreen of display 801, a button, a microphone), and a wireless communication radio. In some examples. electronic device 800 includes a plurality of cameras. In some examples, electronic device 800 includes only one camera. In some examples, electronic device 800 includes one or more biometric sensors which, optionally, include a camera, such as an infrared camera, a thermographic camera, or a combination thereof.

In FIG. 8A, the electronic device 800 displays, on display 801, a settings interface 802 including a suggested portion 803 and a featured portion 804. In some examples, each of the suggested portion 803 and the featured portion 804 include one or more candidate activity affordances. Each of the candidate activity affordances are associated with one or more respective user activities in some examples.

As illustrated in FIG. 8A, the suggested portion 803 can include candidate activity affordance 805, which is associated with the user activity of a workout. Further, as illustrated in FIG. 8A, the suggested portion 803 can include an indicator 809 located, for instance, below candidate activity affordance 805. In some examples, the indicator 809 is included in candidate activity affordance 805. In some examples, the indicator 809 can include a description of the user activity, tasks associated with the user activity, a task sequence indicator (e.g., Home ETA), criteria associated with the user activity, or any combination thereof.

Similarly, the featured portion 804 can include candidate activity affordances 806, 807. As illustrated, candidate activity affordance 806 is associated with the user activity of returning home from work and candidate activity affordance 807 is associated with the user activity of going to work. In some examples, candidate activity affordances are associated with any number of user activities including but not limited to going to bed, getting ready for work, or attending an event (e.g., a sporting event, a concert, etc.).

In some examples, the candidate activity affordance 805 is an affordance that corresponds to a task sequence to be performed while the electronic device is determined to be at a particular location, for example at the gym. In some examples, the candidate shortcut affordance 805 is an affordance that corresponds to a task sequence to be performed while the electronic device is determined to be traveling to a particular location (e.g., going to work).

In some examples, the user activity associated with one or more candidate activity affordances is predetermined. Thus, in some examples, the user activity associated with a candidate activity affordance is not based on a context of the electronic device (e.g., location, time of day, day of week, previous usage of the electronic device by a user), but rather a finite list of activities. In the current invention, the electronic device determines one or more activities performed by a user of the electronic device, and a user activity associated with a candidate activity affordances may be one or more of the determined activities.

In some examples, candidate activity affordances are visually distinguishable from other affordances displayed by the electronic device in the user interface. For example, candidate activity affordance 805 is larger than other affordances displayed by the electronic device. In some examples, candidate activity affordance 805 is a different color, a different shape, or includes more detail when compared to other affordances displayed by the electronic device. In some examples, an application (e.g., third-party application) may specify the manner in which candidate activity affordance 805 is displayed. By way of example, candidate activity affordance 805 is larger than candidate activity affordance 806. Candidate activity affordance 805 may be displayed in this manner, for instance, based on a determination that the activity associated with candidate activity affordance 805 is an activity most relevant to a user of the electronic device. In some examples, the electronic device 800 may determine that the activity associated with candidate activity affordance 805 is an activity most relevant to a user of the electronic device 800 based on context data associated with the electronic device 800. In some examples, the electronic device 800 may determine that the activity associated with candidate activity affordance 805 is an activity most relevant to a user of the electronic device 800 based on previous usage of the electronic device 800.

In some examples, the settings interface 802 is an interface of a user-specific application, such as a first-party application customized for a user of the electronic device or a third-party application installed by the user. The settings interface 802 may, for instance, include user-specific content.

While displaying the settings interface 802, the electronic device 800 detects a set of inputs corresponding to a selection (e.g., activation) of candidate shortcut affordance 805. For example, as shown in FIG. 8A, the selection may be a tap gesture 808 on candidate shortcut affordance 805. As will be described in more detail below, in response to selection of the candidate activity affordance 805, the electronic device 800 initiates a process by which a user groups a plurality of tasks to be associated with a task sequence such that a user may cause the electronic device 800 to perform the task sequence using a single input (e.g., voice input, touch input). In some examples, the selection of candidate activity affordance 805 is a voice input provided by a user to electronic device 800. For example, the voice input "Create a shortcut for a workout," indicates to electronic device 800 that the user wishes to select candidate shortcut affordance 805.

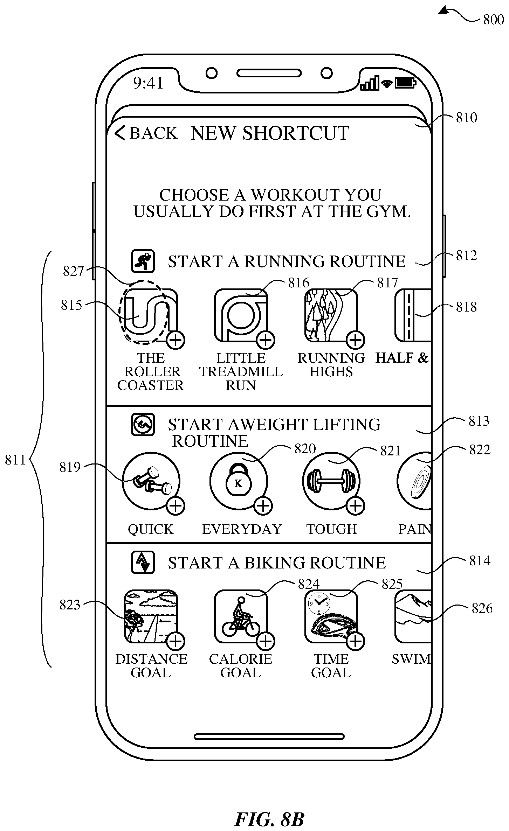

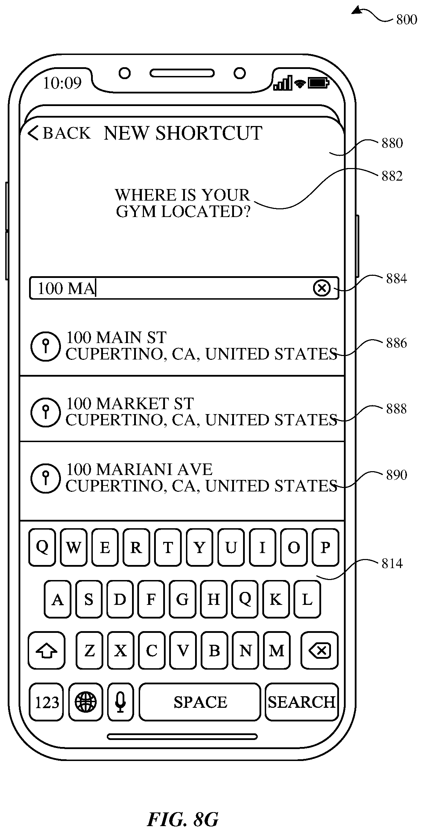

In response to detecting the set of inputs corresponding to selection of candidate activity affordance 805 (or, optionally, in response to receipt of the requested user-specific information as described with relation to FIG. 8G below), the electronic device 800 displays (e.g., replaces display of settings interface 802 (or query interface 880) with), on display 801, a task interface 810, as shown in FIG. 8B. In some examples, the task interface 810 includes a set of candidate task affordances 811 including a plurality of candidate task affordances 812, a plurality of candidate task affordances 813, and a plurality of candidate task affordances 814. In some examples, the set of candidate task affordances 811 is associated with a particular task type. For example, each candidate task affordance of the pluralities of candidate task affordances 812, 813, and 814 may be associated with respective tasks of a same type (e.g., tasks for a workout).

In some examples, the plurality of candidate task affordances 812 is associated with a particular task. In some examples, the plurality of candidate task affordances 812 includes at least candidate task affordances 815, 816, 817, and 818, each of which are associated with the same task. In some examples, each of candidate task affordances 815, 816, 817, and 818 are associated with the same task and a different parameter value for a parameter of the task. For example, as shown in FIG. 8B, each of candidate task affordances 815, 816, 817, and 818 correspond to a respective running routine (e.g., "The Roller Coaster," "Little Treadmill Run," "Running Highs," etc.).

In some examples, the plurality of candidate task affordances 813 are associated with a particular task that is different from the task associated with the plurality of candidate task affordances 812. In some examples, the plurality of candidate task affordances 813 includes at least candidate task affordances 819, 820, 821, and 822. In some examples, each of candidate task affordances 819, 820, 821, and 822 are associated with the same task and a different parameter value for a parameter of the task. For example, as shown in FIG. 8B, each of candidate task affordances 819, 820, 821, and 822 correspond to a respective weight lifting routine (e.g., "Quick," "Everyday," "Tough," etc.).

In some examples, the plurality of candidate task affordances 814 are associated with a particular task that is different from the tasks associated with the plurality of candidate task affordances 812 and the plurality of candidate task affordances 813. In some examples, the plurality of candidate task affordances 814 includes at least candidate task affordances 823, 824, 825, and 826. In some examples, each of candidate task affordances 823, 824, 825, and 826 are associated with the same task and a different parameter value for a parameter of the task. For example, as shown in FIG. 8B, each of candidate task affordances 823, 824, 825, and 826 correspond to a respective bicycling routine (e.g., "Distance Goal," "Calorie Goal," "Time Goal," etc.).

In some examples, candidate task affordances may have any shape including but not limited to a circle, square, rectangle, triangle, and/or any other desired geometric or non-geometric shape. By way of example, candidate task affordances 815-818 may be relatively rectangular in shape, candidate task affordances 819-822 may be relatively circular in shape, and candidate task affordances 823-826 may be relatively square in shape.

In some examples, as described above, each of the candidate task affordances 815-826 is associated with a task. Such tasks may be any task that may be performed by the electronic device, including but not limited to playback of audio (e.g., a podcast, music, etc.), playback of video, initiating a workout (e.g., running routine, weight lifting routine, or bicycling routine), initiating a communication session (e.g., sending a text message, sending an email, or placing a call), getting directions to a location, retrieving information (e.g., an article, book, news, weather, etc.), or setting an alarm.

In some examples, the one or more tasks associated with candidate task affordances are determined based on contextual data associated with the electronic device. In some examples, contextual data of the electronic device is indicative of a state (e.g., current state, previous state) or context (e.g., current context, previous context) of the electronic device. By way of example, contextual data may indicate various characteristics of the electronic device during a time at which a particular task was performed. For instance, for each task performed by the electronic device, contextual data may indicate a location of the electronic device, whether the electronic device was connected to a network (e.g., WiFi network), whether the electronic device was connected to one or more other devices (e.g., headphones), and/or a time, date, and/or weekday at which the task was performed. If the electronic device was connected to a network or device during performance of the task, the contextual data may further indicate a name and/or type of the network or device, respectively.

In some examples, the electronic device receives contextual data from applications during operation of the electronic device. Contextual data provided in this manner may be indicative of a task and, optionally, one or more parameters associated with the task. For example, electronic device 800 may have previously performed the task of a running routine (e.g., while the user was working out) and thus the task of a running routine can be associated with candidate task affordances 815, 816, 817, and 818. The running routine may be the same running routine previously performed by the device and/or other running routines (e.g., same task with different parameter(s)). In some examples, contextual data provided by an application further includes data indicative of the state of the electronic device while the task was performed, described above (e.g., location of the electronic device, whether the electronic device was connected to a network, etc.).

In some examples, one or more tasks associated with the candidate task affordances are predetermined tasks. For example, one or more of the candidate task affordances 815-826 may be associated with tasks that are displayed by default for a particular user activity, or may be displayed if less than a threshold number of tasks are determined based on context, as described. In some examples, for instance, the electronic device 800 may provide one or more affordances associated with a running routine task for the workout activity regardless of whether the user has previously initiated a running routine.

In some examples, electronic device 800 receives an indication of which tasks are most commonly performed by a plurality of users, and determines one or more of the tasks based on the indication. By way of example, the electronic device 800 may receive an indication that the most common types of workouts include running routines. Accordingly, the electronic device 800 determines that one of the tasks associated with the user activity of a workout is a running routine. In some examples, the electronic device 800 receives an indication of which tasks are most commonly performed by a plurality of users while participating in the selected user activity. For example, electronic device 800 may receive an indication that the most commonly performed tasks associated with the user activity of a workout includes playback of a podcast, playback of music, and/or playback of video. In some examples, electronic device 800 receives an indication of which tasks are most commonly performed by a plurality of users during a user activity in a particular context. For example, electronic device 800 may receive an indication that the most commonly performed tasks for a workout in the morning include opening a weather application, opening a calendar application, or starting a timer.

In some examples, one or more tasks associated with the candidate task affordances are system-level tasks (e.g., executing an application). For example, one or more tasks associated with the candidate task affordances may include tasks for starting an application for a running routine or starting an application for playing a podcast. In some examples, one or more tasks associated with the candidate task affordances are application-level tasks (e.g., executing a particular task within and/or using an application). For example, one or more tasks associated with the candidate task affordances includes tasks for starting a running routine called "The Roller Coaster."

While displaying the task interface 810, electronic device 800 detects a set of inputs corresponding to a selection of a candidate task affordance, such as the candidate task affordance 815 of the plurality of candidate task affordances 812. In some examples, the candidate task affordance 815 is selected using a touch input, a gesture, or a combination thereof. For example, candidate task affordance 815 can be selected with a tap gesture 827. In some examples, the candidate task affordance is selected using a voice input. For example, a user provides the voice input of "The Roller Coaster" indicating a selection of candidate task affordance 815.

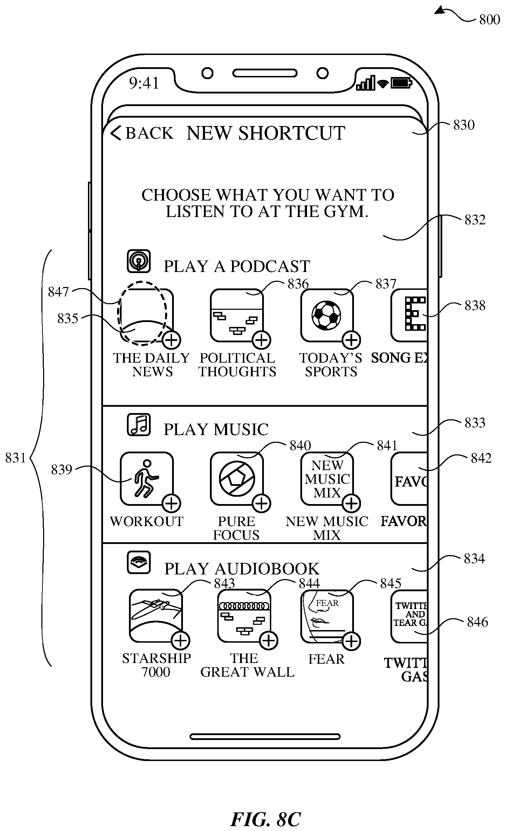

With reference to FIG. 8C, in some examples, in response to selection of the candidate task affordance 812, the electronic device 800 displays (e.g., replaces display of task interface 810), on display 801, a task interface 830.

As illustrated, in some examples, the task interface 830 includes a set of candidate task affordances 831 including a plurality of candidate task affordances 832, a plurality of candidate task affordances 833, and a plurality of candidate task affordances 834. In some examples, the set of candidate task affordances 831 is associated with a particular task type. In some examples, the set of candidate task affordances 831 is associated with a different task type than the set of candidate task affordances 811 included in task interface 810 (FIG. 8B). For example, each candidate task affordance of the pluralities of candidate task affordances 832, 833, and 834 may be associated with respective tasks of a same type (e.g., tasks for audio playback) different from the task type associated with the pluralities of candidate task affordance 812, 813, and 814 (e.g., tasks for a running routine).

In some examples, the plurality of candidate task affordances 832 is associated with a particular task. In some examples, the plurality of candidate task affordances 832 includes at least candidate task affordances 835, 836, 837, and 838, each of which are associated with the same task. In some examples, each of candidate task affordances 835, 836, 837, and 838 are associated with the same task and a different parameter value for a parameter of the task. For example, as shown in FIG. 8C, each of candidate task affordances 835, 836, 837, and 838 correspond to playing a respective podcast (e.g., "The Daily News," "Political Thoughts," "Today's Sports," etc.).

In some examples, the plurality of candidate task affordances 833 are associated with a particular task that is different from the task associated with the plurality of candidate task affordances 832. In some examples, the plurality of candidate task affordances 833 includes at least candidate task affordances 839, 840, 841, and 842. In some examples, each of candidate task affordances 839, 840, 841, and 842 are associated with the same task and a different parameter value for a parameter of the task. For example, as shown in FIG. 8C, each of candidate task affordances 839, 840, 841, and 842 correspond to playing a respective playlist (e.g., "Workout," "Pure Focus," "New Music Mix," etc.).

In some examples, the plurality of candidate task affordances 834 are associated with a particular task that is different from the tasks associated with the plurality of candidate task affordances 832 and the plurality of candidate task affordances 833. In some examples, the plurality of candidate task affordances 834 includes at least candidate task affordances 843, 844, 845, and 846. In some examples, each of candidate task affordances 843, 844, 845, and 846 are associated with the same task and a different parameter value for a parameter of the task. For example, as shown in FIG. 8C, each of candidate task affordances 843, 844, 845, and 846 correspond to playing a respective audio book (e.g., "Starship 7000," "The Great Wall," "Fear," etc.).

In some examples, as described above, each of the candidate task affordances 835-846 is associated with a task. The tasks may include any task that may be performed by the electronic device, including but not limited to playback of audio (e.g., a podcast, music, etc.), playback of video, initiating a workout (e.g., a running routine, weight lifting routine, or biking routine), initiating a communication session (e.g., sending a text message, sending an email, or placing a call), getting directions to a location, retrieving information (e.g., an article, book, news, weather, etc.), or setting an alarm.

In some examples, one or more tasks are determined and candidate task affordances are displayed for each of the determined tasks. As discussed above with relation to FIG. 8B, in some examples one or more tasks associated with the candidate task affordances are tasks that were previously performed with electronic device 800, are predetermined, and/or are determined based on an indication of which tasks are most commonly performed by a plurality of users. Further, as discussed above with relation to FIG. 8B, in some examples, one or more tasks associated with candidate task affordances are determined based on context data associated with the electronic device.

While displaying the task interface 830 the, electronic device 800 detects a set of inputs corresponding to a selection of a candidate task affordance, such as the candidate task affordance 835 of the plurality of candidate task affordances 832. In some examples, the candidate task affordance 835 is selected using a touch input, a gesture, or a combination thereof. For example, candidate task affordance 835 is selected with a tap gesture 847. In some examples, the candidate task affordance is selected using a voice input. For example, a user provides the voice input of "The Daily News" indicating a selection of candidate task affordance 835.

As illustrated in FIGS. 8B-8C, in some examples, each of the sets of candidate task affordances 811, 831, are displayed in respective interfaces (e.g., task interfaces 810, 830). In another example, a subset of the set of candidate task affordances 811 (e.g., the plurality of task affordances 812) and a subset of the set of candidate task affordances 831 (e.g., the plurality of task affordances 832) are displayed in respective interfaces (e.g., task interfaces 810, 830).In other examples, the set of candidate task affordances 811 and the set of candidate task affordances 831 are displayed in the same user interface In another example, a subset of the set of candidate task affordances 811 (e.g., the plurality of task affordances 812) is displayed in the same user interface as a subset of the set of candidate task affordances 831 (e.g., the plurality of task affordances 832).

As illustrated in FIGS. 8B-8C, in some examples each of the sets of candidate task affordances 811, 831 are associated with different task types. By way of example, the set of candidate task affordances 811 are associated with tasks for a workout and the set of candidate task affordances 831 are associated with tasks for audio playback. In other examples, each of the sets of candidate task affordances 811, 831 are associated with the same task type. For example, the sets of candidate task affordances 811, 831 may both be associated with the task type of playing audio. In another example, the sets of candidate task affordances 811, 831 may both be associated with the task type of workouts.

In some examples, task interface 830 may be displayed by the electronic device 800 in response to detecting the set of inputs (e.g., tap gesture 808) corresponding to a selection of candidate activity affordance 805 (e.g., replaces display of task interface 802).

In response to detecting the set of inputs (e.g., tap gesture 847) corresponding to a selection of candidate task affordance 835 and one or more other inputs (e.g., tap gesture 827), the electronic device 800 associates the tasks corresponding to the selected candidate task affordances with a task sequence for a voice shortcut corresponding to the user activity. For example, the task sequence for a workout may be associated with the task of a running routine "The Roller Coaster" corresponding to the selected candidate task affordance 815 and the task of playing the podcast "The Daily News" corresponding to the selected candidate task affordance 835.

In some examples, the voice shortcut is a candidate phrase (e.g., "at the gym") associated with the user activity. As an example, for a task sequence pertaining to a workout, the electronic device 800 assigns a voice shortcut "at the gym" to the task sequence. As another example, for a task sequence pertaining to commuting home, the electronic device 800 assigns a voice shortcut "on my way home." As yet another example, for a task sequence pertaining to commuting to work, the electronic device 800 assigns a voice shortcut "going to work."

In some examples, the voice shortcut is predetermined (e.g., the electronic device 800 provides the phrase to initiate the selected tasks). In some examples, the user may specify the voice shortcut. Methods for generating a voice shortcut can be found in U.S. Provisional Application No. 62/679,972 filed June 3, 2018 and entitled "ACCELERATED TASK PERFORMANCE," U.S. Application No. 16/146,381 filed September 28, 2018 and entitled "ACCELERATED TASK PERFORMANCE," U.S. Application No. 16/146,883 filed September 28, 2018 and entitled "ACCELERATED TASK PERFORMANCE," U.S. Application No. 16/146,963 filed September 28, 2018 and entitled "ACCELERATED TASK PERFORMANCE," and U.S. Application No. 16/146,978 filed September 28, 2018 and entitled "ACCELERATED TASK PERFORMANCE".

In some examples, the electronic device 800 performs the task sequence in response to determining that voice shortcut criteria associated with the voice shortcut is met. By way of example, the electronic device 800 may determine that a speech input "at the gym" is received and that this input meets the voice shortcut criteria associated with the voice shortcut corresponding to the user activity of a workout. Thus, electronic device 800 may perform the task sequence corresponding to the user activity of a workout. In some examples, determining that voice shortcut criteria associated with the voice shortcut is met includes determining whether a natural-language speech input satisfies voice shortcut criteria.

In some examples, tasks other than those selected by the user are automatically associated with the task sequence for the voice shortcut corresponding to the user activity. In some examples, a user activity may be associated with one or more tasks such that when a task sequence is generated for the user activity, the one or more tasks are automatically associated with the task sequence for the user activity. For example, for the user activity of a workout, the electronic device 800 may associate the task of enabling a do not disturb mode with the task sequence for the voice shortcut "at the gym," without any selection by the user. In some examples, automatically associated tasks can be removed from a task sequence by a user. For example, the user may indicate that the do not disturb mode is not to be enabled when initiating a task sequence for a workout.

As discussed above, in some examples, each of the sets of candidate task affordances 811, 831 are associated with the same task type and thus the tasks associated with the task sequence may be of the same type. In some examples, tasks of the same type are associated with the task sequence in the order in which they were selected. In some examples, tasks of the same type are associated with the task sequence in a user-specified order.

In some examples the set of user inputs corresponds to a selection of multiple candidate task affordances from the same interface and the tasks associated with the selected candidate task affordances are associated with the task sequence for the user activity. For example, the electronic device 800 may detect that a user has provided an input selecting the candidate task affordance 815 and the candidate task affordance 819 which are both associated with a task of the workout task type. Thus, the tasks associated with the candidate task affordances 815 and 819 are associated with the task sequence for the user activity of a workout.

In some examples, the set of user inputs corresponds to a selection of more than two candidate task affordances and the tasks associated with the selected candidate task affordances are associated with the task sequence for the user activity. For example, the electronic device 800 may detect that a user has provided an input selecting the candidate task affordance 815 and the candidate task affordance 819 from task interface 810 and that a user has provided an input selecting the candidate task affordance 835 and the candidate task affordance 839 from task interface 830. Thus, the tasks associated with the candidate task affordances 815, 819, 935, and 839 are associated with the task sequence for the user activity of a workout.

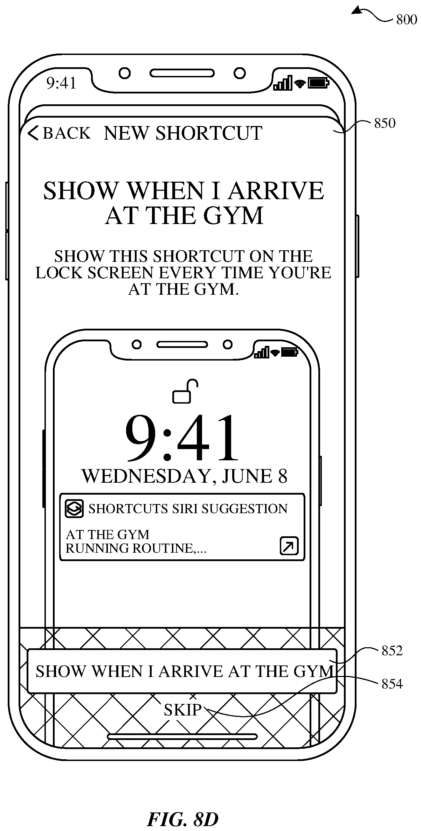

With reference to FIG. 8D, in some examples, after detecting the set of user inputs corresponding to a selection of candidate task affordance 835, the electronic device 800 displays (e.g., replaces display of task interface 830), on display 801, a suggestion mode interface including a suggestion mode affordance and a skip affordance. By way of example, as illustrated in FIG. 8D, the electronic device 800 displays a suggestion mode interface 850. The suggestion mode interface 850 includes the suggestion mode affordance 852 and the skip affordance 854.

In some examples, the suggestion mode affordance 852 is associated with enabling a suggestion mode for a user activity. In some examples, the skip affordance 854 is associated with forgoing enabling a suggestion mode for the user activity. In some examples, the suggestion mode for the user activity determines whether a suggestion should be provided for the user activity when context criteria associated with the user activity is met. For example, when the suggestion mode for the user activity is enabled and context criteria associated with the user activity is met, the suggestion for the user activity will be provided. In another example, when the suggestion mode for the user activity is not enabled and context criteria associated with the user activity is met, the suggestion for the user activity will not be provided.

In some examples, while displaying the suggestion mode interface 850, the electronic device 800 detects a set of inputs corresponding to the selection of the suggestion mode affordance 852. In some examples, selecting the suggestion mode affordance 852 causes the electronic device 800 to enable a suggestion mode for the task sequence. In some examples, the suggestion mode affordance 852 is selected using a touch input, a gesture, or a combination thereof. In some examples, the suggestion mode affordance 852 is selected with a voice input.

In some examples, while displaying the suggestion mode interface 850, the electronic device 800 detects a set of inputs corresponding to the selection of the skip affordance 854. In some examples, selection of the skip affordance 854 causes the electronic device to forgo enabling the suggestion mode for the task sequence. In some examples, the skip affordance 854 is selected using a touch input, a gesture, or a combination thereof. In some examples, the skip affordance 854 is selected with a voice input.

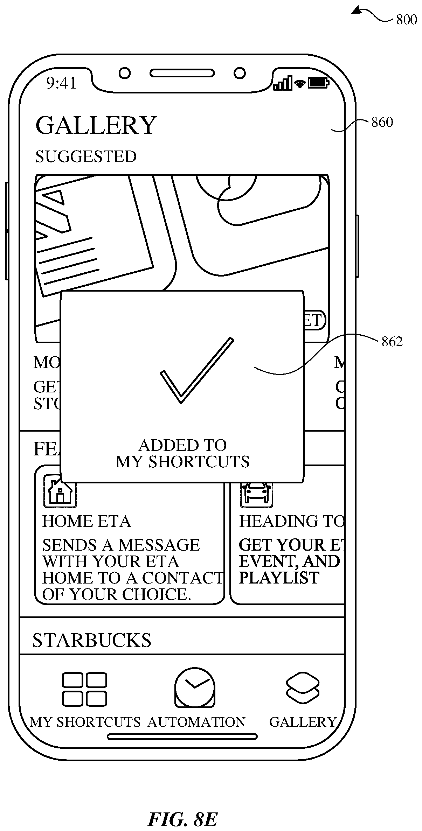

With reference to FIG. 8E, in some examples, in response to selection of the suggestion mode affordance 852 or the skip affordance 854, the electronic device 800 displays (e.g., replaces display of suggestion mode interface 850) a confirmation interface 860. Confirmation interface 860 includes confirmation indicator 862 confirming association of the selected tasks with the task sequence for the user activity.

In some examples, as shown in FIG. 8E, the confirmation indicator does not indicate the voice shortcut (e.g., the confirmation indicator 862 does not specify the voice shortcut associated with the newly generated task sequence). In some examples, the confirmation indicator 862 indicates the voice shortcut. For example, for a task sequence corresponding to a workout user activity, the confirmation indicator 862 may specify the phrase '''At the gym' added to my shortcuts."

In some examples, the suggestion mode is automatically enabled and the electronic device forgoes displaying the suggestion mode interface 850. Thus, in some examples, electronic device 800 displays (e.g., replaces display of task interface 830), confirmation interface 860 without displaying the suggestion mode interface 850.

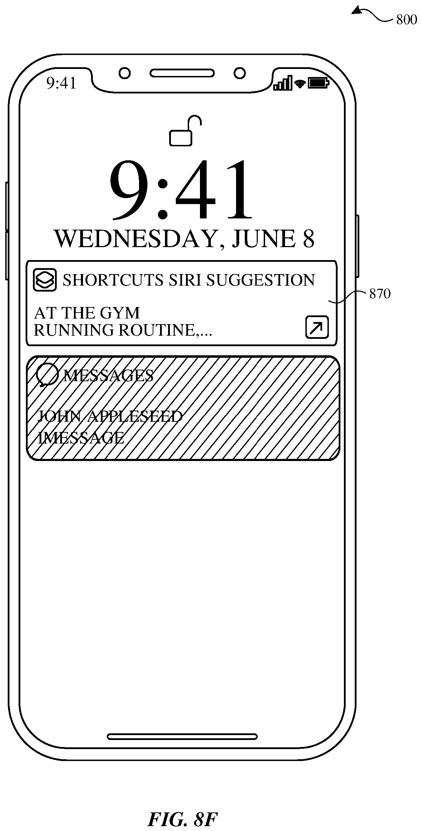

With reference to FIG. 8F, in some examples, the electronic device 800 determines whether a user is engaging (or will be engaging) in a particular user activity. In some examples, the electronic device 800 determines whether a user is engaging in a particular user activity based on context criteria. In some examples, the context criteria is a set of requirements that may or may not be satisfied based on contextual data associated with the electronic device 800. In some examples, the electronic device 800 associates the context criteria with the user activity as part of the process of associating tasks with the task sequence for the user activity. For example, when the electronic device 800 determines that the selected user activity is a workout, the electronic device 800 may determine that context criteria associated with the user activity of a workout may include that the electronic device 800 is located at the user's gym. In some examples, the context criteria is based on the response to the query requesting criteria, discussed further below with respect to FIG. 8G.

In some examples, the electronic device determines current contextual data of the electronic device 800 and compares it to context criteria for a user activity. In some examples, in response to determining that current contextual data of the electronic device 800 matches the context criteria for a user activity, the electronic device 800 provides (e.g., displays) a suggestion affordance 870 corresponding to the task sequence. In some examples, suggestion affordance 870 is selectively displayed based on the suggestion mode for the user activity. By way of example, the electronic device 800 provides the suggestion affordance 870 when the suggestion mode is enabled and forgoes displaying the suggestion affordance 870 when the suggestion mode for the user activity is not enabled. For example, electronic device 800 may determine that the electronic device is located at the user's gym and that the context criteria for the task sequence associated with "at the gym" is met but will not display suggestion affordance 870 because the suggestion mode for the task sequence is not enabled.

In some examples, the suggestion affordance 870 is visually distinguishable from other affordances displayed by the electronic device in the user interface. For example, the suggestion affordance 870 may be a different size (e.g., larger) than other affordances displayed by the electronic device 800. In some examples, the suggestion affordance is a different color, and/or a different shape. In some examples, the suggestion affordance indicates the voice shortcut. For example, the suggestion affordance corresponding to the voice shortcut of "at the gym" includes the text "at the gym." In some examples, the suggestion affordance specifies one or more of tasks included in the sequence of tasks.

In some examples, while displaying the suggestion affordance 870, the electronic device 800 detects a selection 872 of the suggestion affordance. For example, selection 872 of the suggestion affordance 870 is a touch input (e.g., tap gesture) on the suggestion affordance. In response to detecting the selection of the suggestion affordance 870, the task sequence associated with the voice shortcut is performed. For example, in response to detecting selection 872 of the suggestion affordance 870, the electronic device 800 performs a task sequence including tasks of starting the running routine "The Roller Coaster" and playing the podcast "The Daily News".

In some examples, after performing the task sequence, the electronic device 800 provides a confirmation indicating whether the tasks of the task sequence were successfully performed. In some examples, the confirmation is displayed on display 801 of electronic device 800. In some examples, the confirmation is provided as an audible output.

As described, in some examples, the context criteria includes a requirement that the electronic device be location at a particular location to provide a suggestion. For instance, to initiate a suggestion for a workout, the device may be required to be near a location of a gym of the user. In some examples, requisite information (e.g., the address of the user's gym) may not yet be known to the electronic device 800 prior to performing the process for creating a task sequence, as described with reference to FIGS. 8A-8F. Accordingly, as shown in FIG. 8G, in some examples, the electronic device 800 may query the user for user-specific information, for instance, using a query interface 880. In some examples, the query interface 880 includes one or more queries, such as the query specified by query indicator 882. In some examples, the query interface 880 is displayed in response to detecting a set of inputs corresponding to selection of candidate activity affordance (e.g., tap gesture 808 selecting candidate activity affordance 805). Accordingly, in some examples, the electronic device displays the query interface after displaying the settings interface 802 and prior to displaying the task interface 810. In this manner, the electronic device 800 receives contextual data associated with the user activity before determining which tasks are to be included in the task sequence.

In some examples, query interface 880 includes query indicator 882 and input field 884. The query indicator 882 requests input from the user, such as an input indicating user-specific information. By way of example, query indicator 882 may include a query requesting a location of a gym of the user (e.g., "Where is your gym located?").

While displaying query interface 880, electronic device 800 detects a set of inputs indicative of the requested user-specific information. For example, in response to query indicator 882 "Where is your gym located?" the user provides the address of their gym. As illustrated in FIG. 8G, for instance, the user inputs "100 MA." In some examples, the partial string provided by the user is used to determine one or more candidate entries 886, 888, and 890, from which the user may, optionally, select. In some examples the candidates 886, 888, and 890 may be updated after entry of each character into input field 884.

While description is made herein with respect to generating a task sequence having a first task and a second task, in other examples, any number and/or combination of tasks may be used to generate a task sequence. Further, a same task and/or parameter may be included in any number of task sequences, allowing for a high degree of personalization and flexibility for a user.

FIGS. 9A-9C is a flow diagram illustrating a process for associating tasks with a task sequence for a voice shortcut corresponding to a user activity, according to various examples. Method 900 is performed at a device (e.g., device 104, device 122, device 200, device 600, device 700, device 800) with a display, one or more input devices (e.g., a touchscreen, a mic, a camera), and a wireless communication radio (e.g., a Bluetooth connection, WiFi connection, a mobile broadband connection such as a 4G LTE connection). In some embodiments, the display is a touch-sensitive display. In some embodiments, the display is not a touch sensitive display. In some embodiments, the electronic device includes a plurality of cameras. In some embodiments, the electronic device includes only one camera. In some examples, the device includes one or more biometric sensors which, optionally, include a camera, such as an infrared camera, a thermographic camera, or a combination thereof. Some operations in method 900 are, optionally, combined, the orders of some operations are, optionally, changed, and some operations are, optionally, omitted.

As described below, associating the first task and the second task with a task sequence for the voice shortcut corresponding to the user activity in response to detecting the second set of inputs and the third set of inputs allows a user to accurately and efficiently generate user-specific voice shortcuts to perform tasks during the user activity on the electronic device. For example, allowing a user to associate tasks with a task sequence for a voice shortcut in this manner allows a user to perform multiple tasks during a user activity by providing a simple voice shortcut, thereby increasing the efficiency of executing tasks with the electronic device. Thus, associating tasks with a task sequence for a voice shortcut in the manner described provides for more efficient use of the electronic device (e.g., by allowing the user to execute many tasks at once without requiring interacting with several different user interfaces), which, additionally, reduces power usage and improves battery life of the device by enabling the user to use the device more quickly and efficiently.

**In** this example, the electronic device (e.g., 104, 200, 600, 700, 800) displays a plurality of candidate activity affordances (e.g., 805, 806, 807) including a candidate activity affordance (e.g., 805, 806, 807) associated with a user activity at 902.

The electronic device detects a first set of inputs (e.g., 808) corresponding to a selection of the candidate activity affordance at 904.

In response to detecting the first set of inputs, at 906 the electronic device provides a query (e.g., 882) requesting contextual data about the user activity and receives a fourth set of inputs (e.g., 884) including the requested contextual data.

In response to detecting the first set of inputs, at 908 the electronic device displays a first set of candidate task affordances (e.g., 811, 812, 813, 814) associated with a first task type. In some examples, the first set of candidate task affordances includes a first plurality of candidate task affordances (e.g., 812, 813, 814) corresponding to a first task and a second plurality of candidate task affordances (e.g., 812, 813, 814) corresponding to a second task. In some examples a first candidate task affordance (e.g., 815, 816, 817, 818, 819, 820, 821, 822, 823, 824, 825, 826) of the first plurality of candidate task affordances is associated with the first task and a first parameter for the first task. In some examples, a second candidate task affordance (e.g., 815, 816, 817, 818, 819, 820, 821, 822, 823, 824, 825, 826) of the first plurality of candidate task affordances is associated with the first task and a second parameter for the first task.

In some examples, the electronic device determines one or more tasks performed in a context that matches the contextual data associated with the user activity and provides the first set of candidate task affordances including one or more candidate task affordances associated with the one or more tasks performed in the context that matches contextual data associated with the user activity.

In some examples, the electronic device determines one or more tasks based on a received indication of tasks that are most commonly requested by a plurality of user while engaged in the user activity and provides the first set of candidate task affordances including one or more candidate task affordances associated with the one or more tasks determined based on the indication of tasks that are most commonly requested by a plurality of users while engaged in the user activity.

The electronic device, at 910, detects a second set of inputs (e.g., 827) corresponding to a selection of a candidate task affordance (e.g., 815, 816, 817, 818, 819, 820, 821, 822, 823, 824, 825, 826) of the first set of candidate task affordances, wherein the selected candidate task affordance of the first set of candidate task affordances is associated with a first task.

The electronic device displays a second set of candidate task affordances (e.g., 831, 832, 833, 834) associated with a second task type at 912. In some examples, the first set of candidate task affordances and the second set of candidate task affordances are displayed on a first user interface (e.g., 810, 830). In some examples, the first set of candidate task affordance are displayed on the first user interface and the electronic device, in response to detecting the second set of inputs, displays a second user interface (e.g., 810, 830) different from the first user interface, wherein the second set of candidate task affordances is displayed on the second user interface.

At 914, the electronic device detects a third set of inputs (e.g., 847) corresponding to a selection of a candidate task affordance (e.g., 835, 836, 837, 838, 839, 840, 841, 842, 843, 844, 845, 846) of the second set of candidate task affordances, wherein the selected candidate task affordance of the second set of candidate task affordances is associated with a second task.

At 916, in response to detecting the second and third set of inputs, the electronic device associates the first task and the second task with a task sequence for a voice shortcut corresponding to the user activity. At 918, associating the first task and the second task with the task sequence for the voice shortcut corresponding to the user activity includes automatically associating a third task with the task sequence.

Associating the first task and the second task with the task sequence for the voice shortcut corresponding to the user activity includes associating context criteria corresponding to the user activity with the task sequence at 920. In some examples, the context criteria corresponding to the user activity is determined based on contextual data associated with the user activity. In some examples, the context criteria corresponding to the user activity is determined based on a set of inputs (e.g., 884) including the requested context data.

In response to detecting the second and third sets of inputs the electronic device displays a suggestion mode interface (e.g., 850) including a suggestion mode affordance (e.g., 852) that when selected causes the electronic device to enable the suggestion mode for the task sequence at 922. At 924, a the electronic device receives a fifth set of inputs corresponding to a selection of the suggestion mode affordance, and at 926, in response to receiving the fifth set of inputs, the electronic device enables the suggestion mode for the task sequence.

At 928, the suggestion mode interface further includes a skip affordance (e.g., 854) that when selected causes the electronic device to forego enabling the suggestion mode for the task sequence. At 930, the electronic device receives a sixth set of inputs corresponding to a selection of the skip affordance and at 932, in response to receiving the sixth set of inputs, the electronic device forgoes enabling the suggestion mode for the task sequence.

The electronic device displays a confirmation indicator (e.g., 860) confirming that the first task and the second task are associated with the task sequence at 934.

At 936, the electronic device receives contextual data associated with the electronic device and at 938, the electronic device determines, based on the received contextual data, whether the context criteria is satisfied. In accordance with a determination that the context criteria is satisfied, the electronic device provides a suggestion affordance (e.g., 872) corresponding to the task sequence at 940, which when selected causes the electronic device to perform the first task and the second task.

At 942, the electronic device receives a natural language speech input, and at 944, the electronic device determines whether the natural language speech input satisfies voice shortcut criteria for the voice shortcut. In accordance with a determination that the natural-language speech input satisfies the voice shortcut criteria for the voice shortcut, the electronic device performs the first task and the second task associated with the task sequence at 946.

Note that details of the processes described above with respect to process 900 (e.g., FIGS. 9A-9C) are also applicable in an analogous manner to the methods described below. For example, process 900 optionally includes one or more of the characteristics of the various methods described with reference to method 1000. For example, determining a task sequence corresponding to a user activity in method 1000 can be applied to determining a task sequence corresponding to a user activity as described in method 900. For brevity, these details are not repeated below.

The operations in the methods described above are, optionally, implemented by running one or more functional modules in an information processing apparatus such as general purpose processors (e.g., as described with respect to FIGS. 2A, 4, and 6A) or application specific chips. Further, the operations described above with reference to FIGS. 8A-8G are, optionally, implemented by components depicted in FIGS. 2A-B. For example, displaying operation 902, detecting operation 904, displaying operation 908, detecting operation 910, displaying operation 912, detecting operation 914, and associating operation 916 are, optionally, implemented by event sorter 270, event recognizer 280, and event handler 290. Event monitor 271 in event sorter 270 detects a contact on touch-sensitive surface 604 (FIG. 6A), and event dispatcher module 274 delivers the event information to application 236-1 (FIG 2B). A respective event recognizer 280 of application 236-1 compares the event information to respective event definitions 286, and determines whether a first contact at a first location on the touch-sensitive surface corresponds to a predefined event or sub-event, such as selection of an object on a user interface. When a respective predefined event or sub-event is detected, event recognizer 280 activates an event handler 290 associated with the detection of the event or sub-event. Event handler 290 optionally utilizes or calls data updater 276 or object updater 277 to update the application internal state 292. In some embodiments, event handler 290 accesses a respective GUI updater 278 to update what is displayed by the application. Similarly, it would be clear to a person having ordinary skill in the art how other processes can be implemented based on the components depicted in FIGS. 2A-2B.

FIG. 10 illustrates a process 1000 for associating tasks with a task sequence for a voice shortcut corresponding to a user activity, according to various examples. Process 1000 is performed, for example, using one or more electronic devices implementing a digital assistant. In some examples, process 1000 is performed using a client-server system (e.g., system 100), and the blocks of process 1000 are divided up in any manner between the server (e.g., DA server 106) and a client device. In other examples, the blocks of process 1000 are divided up between the server and multiple client devices (e.g., a mobile phone and a smart watch). Thus, while portions of process 1000 are described herein as being performed by particular devices of a client-server system, it will be appreciated that process 1000 is not so limited. In other examples, process 1000 is performed using only a client device (e.g., user device 104) or only multiple client devices. In process 1000, some blocks are, optionally, combined, the order of some blocks is, optionally, changed, and some blocks are, optionally, omitted. In some examples, additional steps may be performed in combination with the process 1000.

Generally, operations of process 1000 may be implemented to associate tasks with a task sequence for a voice shortcut corresponding to a user activity. As described in further detail below, a first user input indicative of a user activity may be received by an electronic device, and in particular by a digital assistant of an electronic device. Contextual data associated with the electronic device is then determined. Based on the user activity and the contextual data a first set of candidate tasks and a second set of candidate tasks different than the first set of candidate tasks are determined. An output indicating the first set of candidate task and the second set of candidate tasks is provided and a set of user inputs identifying a first candidate task of the first set of candidate tasks and a second candidate task of the second set of candidate tasks is received. The first candidate task and the second candidate task may then be associated with a task sequence for a voice shortcut corresponding to the user activity.

At block 1010, a user input indicative of a user activity is received (e.g., at electronic device 800). In some examples, the user input indicative of a user activity is directed to a digital assistant (e.g., the digital assistant of electronic device 800). In some examples, the user input indicative of a user activity is a voice input. In some examples, the user input indicative of a user activity is an input on a touch-sensitive surface of an electronic device. In some examples, the user input is a selection of an affordance from a plurality of affordances displayed on the display of the electronic device. In some examples, each of the affordances of the plurality of affordances corresponds to a respective user activity. In some examples, the user activity is an activity performed by a user, for instance, as part of a daily routine. For example, the user activity may be the activity of a workout, commuting home or commuting to work. In some examples, the user activity is predetermined.

As an example, the electronic device may display a plurality of affordances, each associated with a different user activity. For instance, one of the plurality of affordances may be associated with the activity of a workout and another of the plurality of affordances may be associated with the activity of commuting home. The electronic device may then receive a user input selecting the affordance associated with a workout either by a user tapping the affordance, or by the user providing a voice input such as "create a voice shortcut for a workout."

In some examples, the user input is received from another device, such as a device communicatively coupled to the electronic device (e.g., smart watch). In some examples, the user input is provided over an ad-hoc connection between the electronic device and the other device. In other examples, the user input is provided over a multi-hop network, such as the Internet.

At block 1020, contextual data associated with the user activity is determined. In some examples, contextual data associated with the user activity is based on contextual data associated with the electronic device. In some examples, contextual data associated with the electronic device is indicative of a state or context of the electronic device. By way of example, contextual data may indicate various characteristics of the electronic device during a time at which a particular task was performed. For instance, for each task performed by the electronic device, contextual data may indicate a location of the electronic device, whether the electronic device was connected to a network (e.g., WiFi network), whether the electronic device was connected to one or more other devices (e.g., headphones), and/or a time, date, and/or weekday at which the task was performed. If the electronic device was connected to a network or device during performance of the task, the contextual data may further indicate a name and/or type of the network or device, respectively

In some examples, the electronic device receives contextual data from applications during operation of the electronic device. In some examples, an application provides contextual data for a task while performing a task or after performing a task. Contextual data provided in this manner may be indicative of a task and, optionally, one or more parameters associated with the task. In some examples, contextual data provided by an application further includes data indicative of the state of the electronic device while the task was performed, described above (e.g., location of the electronic device, whether the electronic device was connected to a network, etc.).

In some examples, a second user input identifying contextual data associated the user activity is received. In some examples, the second user input identifying the contextual data associated with the user activity is received in response to the user device providing a query requesting contextual data associated with the user activity. For example, as described above with relation to FIG. 8G, the electronic device 800 may provide the query on a display 801 and receive a user input including the address of the user's gym in response.

In some examples, the electronic device displays the query requesting contextual data associated with the user activity in a user interface including the query, as shown in FIG. 8G. In some examples, the electronic device provides the query requesting contextual data associated with the user activity as an audio output. For example, the electronic device may provide the query requesting contextual data "what is the address of your gym?" as an audible output to the user. In some examples, the query requesting contextual data is predetermined based on the type of user activity. For example, when the user activity is a workout, the electronic device provides a query requesting the address of the user's gym. In some examples, the query requesting contextual data is determined based on contextual data related to the user activity available to the electronic device. For example, when the user activity is a workout, the electronic device may determine that the address of the user's gym cannot be determined based on prior instances of workouts because, for instance, the electronic device has performed workout tasks in several different locations. Thus the electronic device will query the user to determine the address of the gym corresponding to the user activity of a workout.

In the current invention, the contextual data associated with the user activity is based on prior instances of the user activity. For example, the electronic device determines that the user goes to the same address at 8AM every morning and executes the tasks of starting a running routine and playing a podcast. Based on the executed tasks, the electronic device may determine that the user is likely engaged in the user activity of a workout and thus associate the address at which the electronic device is located should be associated with the user activity of a workout.

In some examples, the contextual data associated with the user activity is based on a user-specific setting. For example, when a user initially sets up the electronic device, the user may provide the digital assistant of the electronic device with the address of the user's gym, which may be stored as a user-specific setting. Thus, the electronic device may determine that the contextual data associated with the user activity of a workout is the address of the user's gym based on the user-specific setting.

At block 1030, a first set of candidate tasks and a second set of candidate tasks different than the first set of candidate tasks is determined based on the user activity and the contextual data. In the current invention, the first set of candidate tasks and the second set of candidate tasks are determined based on the user activity (e.g., a workout) and the context of the user while the user is engaged in the user activity (e.g., the time the user engages in a workout).

In some examples, one or more tasks of the first set of candidate tasks and/or one or more tasks of the second candidate tasks include tasks that were previously performed in a context that matches the contextual data associated with the user activity. For example, when the contextual data associated with the user activity of "a workout" includes the address of the user's gym (e.g., "100 Main St. Cupertino, California"), it is determined that when the electronic device was located at 100 Main St. Cupertino, California the electronic device started a running routine and a weight lifting routine. Thus, the tasks of starting a running routine and a weight lifting routine are included in the first set of candidate tasks. Similarly, it is determined that when the electronic device was located at 100 Main St. Cupertino, California the electronic device played a podcast and a music playlist. Thus the tasks of playing a podcast and a music playlist are included in the second set of candidate tasks.

In some examples, the first set of candidate tasks and the second set of candidate tasks include, for instance, tasks for playback of audio (e.g., a podcast, music, etc.), playback of video, initiating a workout (e.g., a running routine, weight lifting routine, or biking routine), initiating a commination session (e.g., sending a text message, sending an email, or placing a call), getting directions to a location, retrieving information (e.g., an article, book, news, weather, etc.), or setting an alarm.

In some examples, the tasks previously performed with the electronic device in a context that matches the contextual data associated with the user activity are the tasks that were performed most frequently in the context that matches the contextual data associated with the user activity. In some examples, the tasks previously performed with the electronic device in a context that matches the contextual data associated with the user activity are the tasks that were performed most recently in the context that matches the contextual data associated with the user activity.

In some examples, one or more tasks of the first set of candidate tasks and/or one or more tasks of the second set of candidate tasks are predetermined. In some examples, tasks are included by default for a particular user activity, or are included if less than a threshold number of tasks are determined based on context, as described. In some examples, for instance, the first set of candidate tasks may include a running routine task for the workout activity regardless of whether the user has previously initiated a running routine.

In some examples, as described above with relation to FIG. 8B, one or more of the candidate tasks are determined based on a received indication of tasks that are most commonly requested by a plurality of users.

In some examples, as described above with relation to FIG. 8B, one or more of the candidate tasks are system-level tasks (e.g., executing an application) and/or one or more of the candidate tasks are application-level tasks (e.g., executing a particular task within and/or using an application).

In some examples, the first set of candidate tasks includes tasks of a first task type. In some examples, the first set of candidate tasks includes tasks for starting a workout. Tasks for starting a workout include, but are not limited to, starting a running routine, starting a biking routine, starting a circuit, and starting a weight lifting routine. In some examples, the first set of candidate tasks includes tasks for media playback. Tasks for media playback include, but are not limited to, playing a podcast, playing a music playlist, playing an audio book, and playing a video. In some examples, the first set of candidate tasks includes tasks for providing communications. Tasks for providing communications include, but are not limited to, making a phone call, sending a text message, sending a voice message, and sending an instant message. In some examples, the first set of candidate tasks includes tasks for getting directions, getting news, getting the forecast, etc.

In some examples, the second set of candidate tasks includes tasks of a second task type different than the first task type. In some examples, the first set of candidate tasks includes tasks for starting a workout and the second set of candidate tasks includes tasks for media playback. In some examples, the first set of candidate tasks includes tasks for media playback and the second set of candidate tasks includes tasks for providing communications. In some examples, the first set of candidate tasks includes tasks for media playback and the second set of candidate tasks includes tasks for starting a workout.

In some examples, the first set of candidate tasks and the second set of candidate tasks includes tasks of the first task type. For example, the first set of candidate tasks and the second set of candidate tasks may both include tasks for starting a workout. As another example, the first set of candidate tasks and the second set of candidate tasks may both include tasks for media playback. As yet another example, the first set of candidate tasks and the second set of candidate tasks may both include tasks for providing communications.

In some examples, the first task type and the second task type are predetermined. For example, when the user activity is a workout, the first task type may be predetermined to be tasks for starting a workout and the second task type may be predetermined to be tasks for media playback.

In some examples, the first task type and the second task type are based on the contextual data associated with the user activity. In some examples, the first task type and the second task type are based on tasks previously performed by the electronic device in a context that matches the contextual data associated with the user activity. For example, the electronic device determines that the electronic device has performed tasks of starting a running routine and playing a podcast when located at the address of the user's gym. Thus, the electronic device determines that the first task type includes tasks for starting a workout and the second task type includes tasks for media playback.

At block 1040, an output indicating the first set of candidate tasks and the second candidate tasks is provided. In some examples, the output indicating the first set of candidate tasks and the second candidate tasks is provided on a display of the user device. In some examples, the first set of candidate tasks and the second candidate tasks are provided in the same user interface of the display of the user device. In some examples, the first set of candidate tasks and the second set of candidate tasks are provided in different user interfaces of the display of the user device, as shown in FIGS. 8B and 8C. In some examples, the output indicating the first set of candidate tasks and the second set of candidate tasks is provided via an audio output.

In some examples, the output indicating the first set of candidate tasks and the second set of candidate tasks includes a query to select tasks of the first set of candidate tasks and the second set of candidate tasks. For example, the audio output may include the query "which workout do you usually do first at the gym?" followed by the first set of candidate tasks and the query "what do you want to listen to at the gym" followed by the second set of candidate tasks. In another example, the query may be displayed in the user interface with the first set of candidate tasks and the second set of candidate tasks, as shown in FIGS. 8B and 8C.

At block 1050, a set of user inputs identifying a first candidate task of the first set of candidate tasks and a second candidate task of the second set of candidate tasks is received. In some examples, a user input of the set of user inputs is a voice input. For example, in response to the queries above, the user may provide "I want to do 'The Roller Coaster' and listen to 'The Daily News,''' indicating that the user has chosen a workout of a running routine called "The Roller Coaster" and would like to listen to the podcast called "The Daily News" when at the gym. In some examples, a user input of the set of user inputs is an input on the touch-sensitive surface of the electronic device (e.g., as described with reference to FIGS. 8B and 8C). In some examples, the set of user inputs includes both voice inputs and inputs on the touch-sensitive surface of the electronic device.

In some examples, the first user input and the second user input are received while displaying different user interfaces. In some examples, the first user input and the second user input are received while displaying the same user interface.

In some examples, the first set of candidate tasks is provided before the second set of candidate tasks and a the first user input is received after providing the first set of candidate tasks and before providing the second set of candidate tasks. Similarly, in some examples, the second set of candidate tasks is provided before the first set of candidate tasks and, the second user input is received after providing the second set of candidate tasks and before providing the first set of candidate tasks.

At block 1060, the first candidate task and the second candidate task are associated with a task sequence for a voice shortcut corresponding to the user activity (e.g., as described above with reference to FIGS. 8A-8G). For example, the tasks of starting the running routine "The Roller Coaster" and playing the podcast "The Daily News" are associated with the task sequence for the voice shortcut "at the gym" that corresponds to the user activity of working out.

In some examples, the voice shortcut is a candidate phrase (e.g., "at the gym') associated with the user activity. As an example, for a task sequence pertaining to a workout, the electronic device assigns a voice shortcut "at the gym" to the task sequence. As another example, for a task sequence pertaining to commuting home, the electronic device assigns a voice shortcut "on my way home." As yet another example, for a task sequence pertaining to commuting to work, the electronic device assigns a voice shortcut "going to work."

In some examples, the voice shortcut is predetermined (e.g., the electronic device provides the phrase to initiate the selected tasks). In some examples, the user may specify the voice shortcut. Methods for generating a voice shortcut can be found in U.S. Provisional Application No. 62/679,972 filed June 3, 2018 and entitled "ACCELERATED TASK PERFORMANCE," U.S. Application No. 16/146,381 filed September 28, 2018 and entitled "ACCELERATED TASK PERFORMANCE," U.S. Application No. 16/146,883 filed September 28, 2018 and entitled "ACCELERATED TASK PERFORMANCE," U.S. Application No. 16/146,963 filed September 28, 2018 and entitled "ACCELERATED TASK PERFORMANCE," and U.S. Application No. 16/146,978 filed September 28, 2018 and entitled "ACCELERATED TASK PERFORMANCE".

In some examples, associating the first candidate task and the second candidate task with a task sequence for a voice shortcut corresponding to the user activity further comprises automatically associating a third task with the task sequence (e.g., as described above with reference to FIGS. 8A-8G).

In some examples, the electronic device prompts the user to confirm whether to associate any automatically associated tasks with the task sequence for the voice shortcut. In some examples, the electronic device receives a user input confirming the association of automatically associated tasks and the electronic device associates these tasks with the task sequence. In other examples, the electronic device receives a user input that forgoing confirmation of the association and the electronic device forgoes associating the automatically associated tasks with the task sequence.

In some examples, each of the sets of candidate tasks are associated with the same task type and thus the tasks associated with the task sequence may be of the same type (e.g., as described above with reference to FIGS. 8A-8G). Further, in some examples, the set of user inputs corresponds to a selection of more than two candidate tasks and the selected candidate tasks are associated with the task sequence for the user activity.

In some examples, associating the first candidate task and the second task with the task sequence for the voice shortcut includes determining if a suggestion notification mode is enabled. In some examples, determining if the suggestion notification mode is enabled is based on a user input indicating if the suggestion notification should be provided to the user. In some examples, as shown in FIG. 8D, a suggestion mode interface is provided on the touch-sensitive surface of the electronic device, requesting whether to provide a suggestion notification or not. In some examples, a prompt is provided audibly requesting whether to provide a suggestion notification or not. For example, the electronic device provides the audible output "would you like to receive a suggestion notification 'at the gym,' when arriving at your gym?" In some examples, the user input indicating if the suggestion notification should be provided to the user is received in response to the prompt requesting whether to provide a suggestion notification or not. In some examples, determining if the suggestion notification should be provided to the user is based on a user-specific setting. For example, if the user has previously indicated that they do not want to receive any suggestion notifications, or have enabled a do not disturb mode of the electronic device, then no suggestion notification will be provided. In some examples, a user input indicating that a suggestion notification mode should not be enabled is received, and the suggestion notification mode is not enabled.

In some examples, associating the first candidate task and the second candidate task with the task sequence for the voice shortcut further includes associating context criteria with the task sequence (e.g., as described above with reference to FIGS. 8A-8G). In some examples, the context criteria includes the contextual data associated with the user activity. In some examples, the context criteria corresponding to the user activity is determined based on a user input identifying contextual data associated with the user activity.

In some examples, a confirmation that the first candidate task and the second candidate task are associated with the task sequence for the voice shortcut is provided (e.g., as described above with reference to FIGS. 8E). In some examples, the confirmation is provided as an audible output. For example, the electronic device may provide the audible output "At the gym added to my shortcuts," after associating the tasks of the running routine "The Roller Coaster" and playing the podcast "The Daily News" with the user activity of a workout.

In some examples, the electronic device receives current contextual data associated with the electronic device. When current contextual data is received the electronic device, in some examples, determines, based on the received contextual data, whether context criteria associated with the task sequence for the user activity is satisfied. In some examples, determining whether context criteria is satisfied includes determining whether the current contextual data associated with the electronic device matches the context criteria.

In some examples, in accordance with a determination that the context criteria is satisfied, a suggestion notification corresponding to the task sequence for the user activity is provided (e.g., as described above with reference to FIGS. 8F). In some examples, the suggestion notification is provided as an audible output of the electronic device. In some examples, the suggestion notification includes text indicating the first candidate task and second candidate task included in the task sequence. In some examples, the suggestion notification is provided when a suggestion notification mode for the task sequence is enabled. In some examples, the suggestion notification is not provided when the suggestion notification mode for the task sequence is not enabled.

In some examples, while providing the suggestion notification corresponding to the task sequence, a user input indicating a selection of the suggestion notification is received. In some examples, the user input indicating a selection of the suggestion notification is a spoken input including the voice shortcut for the task sequence. For example, the user may say "At the gym," indicating to the electronic device that the user wishes to execute the task sequence corresponding to the user activity of a workout. In some examples, the user input indicating a selection of the suggestion notification is an input on the touch-sensitive surface of the electronic device. For example, the user input indicating a selection of the suggestion notification may be a tap gesture on the suggestion notification.

In some examples, in response to receiving the user input indicating a selection of the suggestion notification, the first candidate task and the second candidate task associated with the task sequence are performed. In some examples, tasks automatically associated with the task sequence are also performed in response to receiving the user input indicating a selection of the suggestion notification.

In some examples, the electronic device performs the task sequence in response to determining that voice shortcut criteria associated with the voice shortcut is met. By way of example, the electronic device may determine that a speech input "at the gym" is received and that this input meets the voice shortcut criteria associated with the voice shortcut corresponding to the user activity of a workout. Thus, electronic device may perform the task sequence corresponding to the user activity of a workout. In some examples, determining that voice shortcut criteria associated with the voice shortcut is met includes determining whether a natural-language speech input satisfies voice shortcut criteria. Additional description of voice shortcut criteria can be found in U.S. Provisional Application No. 62/679,972 filed June 3, 2018 and entitled "ACCELERATED TASK PERFORMANCE," U.S. Application No. 16/146,381 filed September 28, 2018 and entitled "ACCELERATED TASK PERFORMANCE," U.S. Application No. 16/146,883 filed September 28, 2018 and entitled "ACCELERATED TASK PERFORMANCE," U.S. Application No. 16/146,963 filed September 28, 2018 and entitled "ACCELERATED TASK PERFORMANCE," and U.S. Application No. 16/146,978 filed September 28, 2018 and entitled "ACCELERATED TASK PERFORMANCE".

In some examples, determining whether the natural-language speech input satisfies voice shortcut criteria includes determining whether the natural-language speech input, or a text representation of the natural-language speech input, matches any of one or more predetermined phrases (e.g., voice shortcuts) associated with various user activities. In some examples, determining whether the natural-language speech input matches predetermined phrases includes determining whether the natural-language speech input exactly matches one or more predetermined phrases. In other examples, determining whether the natural-language speech input matches predetermined phrases includes determining whether a similarity between the natural-language speech input and each predetermined phrase exceeds a similarity threshold. In some examples, determining whether the natural-language speech input matches predetermined phrases includes determining whether a comparison between a text representation of the natural-language speech input and one or more predetermined phrases satisfies one or more rule-based conditions. Additional description of determining whether the natural-language speech input matches predetermined phrases can be found in U.S. Provisional Application No. 62/843,697, filed May 6, 2019 and entitled "INTERPRETING SPOKEN REQUESTS".

In some examples, performing the task sequence includes preloading one or more applications associated with the first candidate task and the second candidate task with parameters associated with the voice shortcut.

In some examples, after performing the task sequence, an output indicating whether the tasks associated with the task sequence were successfully performed is provided. In some examples, the output indicating whether the tasks were successfully performed is displayed on the touch-sensitive surface of the electronic device. In some examples, the output indicating whether the tasks were successfully performed is provided as an audible output. In some examples, the output is a notification that at least one of the first candidate task and the second candidate task was performed. For example, the task sequence associated with the voice shortcut "at the gym" includes the task of starting a running routine "The Roller Coaster." Thus, after the task of starting the running routine is performed, a notification including the text "starting the running routine 'The Roller Coaster,'" is provided. In some examples the output is a notification that a task was not performed. In some examples, the output is audio playback associated with one of the at least two tasks. For example, the task sequence associated with the voice shortcut "at the gym" includes the task of playing the podcast "The Daily News." Thus, performing the task includes providing audio playback of the podcast "The Daily News." In some examples, the output is a display associated with the task. For example, the task sequence for the voice shortcut "at the gym" includes the task of starting a weight lifting routine. Thus, performing the task includes providing on the touch-sensitive surface of the electronic device a display of steps of the weight lifting routine.

The operations described above with reference to FIG. 10 are optionally implemented by components depicted in FIGs. 1-4, 6A-B, 7A-C, and 8A-G. For example, the operations of process 900 may be implemented by electronic device 800. It would be clear to a person having ordinary skill in the art how other processes are implemented based on the components depicted in FIGS. 1-4, 6A-B, 7A-C, and 8A-G.

In accordance with some implementations, a computer-readable storage medium (e.g., a non-transitory computer readable storage medium) is provided, the computer-readable storage medium storing one or more programs for execution by one or more processors of an electronic device, the one or more programs including instructions for performing any of the methods or processes described herein.

In accordance with some implementations, an electronic device (e.g., a portable electronic device) is provided that comprises means for performing any of the methods or processes described herein.

In accordance with some implementations, an electronic device (e.g., a portable electronic device) is provided that comprises a processing unit configured to perform any of the methods or processes described herein.

In accordance with some implementations, an electronic device (e.g., a portable electronic device) is provided that comprises one or more processors and memory storing one or more programs for execution by the one or more processors, the one or more programs including instructions for performing any of the methods or processes described herein.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to associate tasks with voice shortcuts corresponding to user activities. The present disclosure contemplates that in some instances, this gathered data may include personal information data that uniquely identifies or can be used to contact or locate a specific person. Such personal information data can include demographic data, location-based data, telephone numbers, email addresses, twitter IDs, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to deliver suggestions and perform tasks based on the user's activities and established routine. Accordingly, use of such personal information data enables users to efficiently and proactively execute multiple tasks associated with an activity. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of determining contextual data of the user, the present technology can be configured to allow users to select to "opt in" or "opt out" of participation in the collection of personal information data during registration for services or anytime thereafter. In another example, users can select to limit the length of time contextual data is maintained or entirely prohibit the development of a contextual profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, tasks can be selected and delivered to users by inferring preferences based on non-personal information data or a bare minimum amount of personal information, such as the content being requested by the device associated with a user, other non-personal information available to the contextual systems, or publicly available information.

## Claims

1. A method for generating user-specific task sequences, the method comprising:
at an electronic device (800) with a display (801) and a touch-sensitive surface: determining contextual data,
determining a user activity performed by a user of the electronic device, based on the determined contextual data matching contextual data associated with prior instances of the user activity;
displaying a plurality of candidate activity affordances (805, 806, 807) including a candidate activity affordance associated with the determined user activity;
detecting a first set of inputs (808) corresponding to a selection of the candidate activity affordance;
in response to detecting the first set of inputs, displaying a first plurality of candidate task affordances (811) associated with a first task type, wherein the first plurality of candidate task affordances are determined based on the determined user activity and the determined contextual data;
detecting a second set of inputs (827) corresponding to a selection of a candidate task affordance (815) of the first plurality of candidate task affordances, wherein the selected candidate task affordance of the first plurality of candidate task affordances is associated with a first task;
in response to detecting the second set of inputs, displaying a second plurality of candidate task affordances (831) associated with a second task type different from the first task type, wherein the second plurality of candidate task affordances are determined based on the determined user activity and the determined contextual data;
detecting a third set of inputs (847) corresponding to a selection of a second candidate task affordance (835) of the second plurality of candidate task affordances, wherein the selected second candidate task affordance of the second plurality of candidate task affordances is associated with a second task;
in response to detecting the second and third sets of inputs, associating the first task and the second task with a task sequence for a voice shortcut corresponding to the determined user activity;
receiving a natural-language speech input;
determining whether the natural-language speech input satisfies voice shortcut criteria for the voice shortcut; and
in accordance with a determination that the natural-language speech input satisfies the voice shortcut criteria for the voice shortcut, causing the electronic device to perform the task sequence, wherein performing the task sequence includes performing the first task and performing the second task.

2. The method of claim 1, further comprising:
in response to detecting the first set of inputs:
providing a query requesting contextual data associated with the determined user activity; and
receiving a fourth set of inputs including the requested contextual data.

3. The method of claim 1, wherein the first plurality of candidate task affordances includes a third plurality of candidate task affordances corresponding to a first task and a fourth plurality of candidate task affordances corresponding to a second task.

4. The method of claim 3, wherein a first candidate task affordance of the third plurality of candidate task affordances is associated with the first task and a first parameter for the first task.

5. The method of claim 3, wherein a second candidate task affordance of the third plurality of candidate task affordances is associated with the first task and a second parameter for the first task.

6. The method of any of claims 1-5, wherein the first plurality of candidate task affordances and the second plurality of candidate task affordances are displayed on a first user interface.

7. The method of any of claims 1-5, wherein the first plurality of candidate task affordances are displayed on a first user interface, the method further comprising:
in response to detecting the second set of inputs, displaying a second user interface different from the first user interface, the second user interface including the second plurality of candidate task affordances.

8. The method of any of claims 1-5, further comprising:
determining one or more tasks performed in a context that matches the contextual data associated with the determined user activity; and
providing the first plurality of candidate task affordances including one or more candidate task affordances associated with the one or more tasks performed in the context that matches the contextual data associated with the determined user activity.

9. The method of any of claims 1-5, further comprising:
determining one or more tasks based on a received indication of tasks that are most commonly requested by a plurality of users while engaged in the determined user activity; and
providing the first plurality of candidate task affordances including one or more candidate task affordances associated with the one or more tasks determined based on the indication of tasks that are most commonly requested by a plurality of users while engaged in the determined user activity.

10. The method of any of claims 1-5, wherein associating the first task and the second task with the voice shortcut corresponding to the determined user activity further comprises automatically associating a third task with the task sequence for the voice shortcut, wherein the third task is to be performed as part of the task sequence in accordance with a determination that the natural-language speech input satisfies the voice shortcut criteria for the voice shortcut.

11. The method of claim 2, wherein associating the first task and the second task with the task sequence for the voice shortcut corresponding to the user activity further comprises associating context criteria corresponding to the user activity with the task sequence.

12. The method of claim 11, wherein the context criteria corresponding to the user activity is determined based on the contextual data associated with the determined user activity.

13. The method of any of claims 11-12, wherein the context criteria corresponding to the determined user activity is determined based on the fourth set of inputs including the requested contextual data.

14. The method of any of claims 12-13, further comprising:
in response to detecting the second and third sets of inputs displaying a suggestion mode interface including a suggestion mode affordance that when selected causes the electronic device to enable the suggestion mode for the task sequence;
receiving a fifth set of inputs corresponding to a selection of the suggestion mode affordance; and
in response to receiving the fifth set of inputs, enabling the suggestion mode for the task sequence.

15. The method of claim 14, wherein the suggestion mode interface further includes a skip affordance that when selected causes the electronic device to forego enabling the suggestion mode for the task sequence, the method further comprising:
receiving a sixth set of inputs corresponding to a selection of the skip affordance; and
in response to receiving the sixth set of inputs, forgoing enabling the suggestion mode for the task sequence.

16. The method of claim 11-15, further comprising:
receiving contextual data associated with the electronic device;
determining, based on the received contextual data, whether the context criteria is satisfied;
in accordance with a determination that the context criteria is satisfied, providing a suggestion affordance corresponding to the task sequence, which when selected causes the electronic device to perform the first task and the second task.

17. The method of any of claims 1-15, further comprising displaying a confirmation indicator confirming that the first task and the second task are associated with the task sequence.

18. An electronic device (800), comprising:
one or more processors;
a memory; and
one or more programs, wherein the one or more programs are stored in the memory and configured to be executed by the one or more processors, the one or more programs including instructions for performing the methods of any one of claims 1-17.

19. A computer-readable storage medium storing one or more programs, the one or more programs comprising instructions, which when executed by one or more processors of a first electronic device, cause the first electronic device to perform the methods of any one of claims 1-17.

## Patentansprüche

1. Verfahren zum Erzeugen benutzerspezifischer Aufgabensequenzen, wobei das Verfahren umfasst:
an einer elektronischen Vorrichtung (800) mit einer Anzeige (801) und einer berührungsempfindlichen Oberfläche:
Bestimmen von Kontextdaten,
Bestimmen einer Benutzeraktivität, die durch einen Benutzer der elektronischen Vorrichtung durchgeführt wird, basierend auf den bestimmten Kontextdaten, die mit Kontextdaten, die mit früheren Instanzen der Benutzeraktivität verbunden sind, übereinstimmen;
Anzeigen einer Vielzahl von Kandidatenaktivitätsangeboten (805, 806, 807), einschließlich eines Kandidatenaktivitätsangebots, das mit der bestimmten Benutzeraktivität verbunden ist;
Erfassen eines ersten Satzes von Eingaben (808), der einer Auswahl des Kandidatenaktivitätsangebots entspricht;
als Reaktion auf das Erfassen des ersten Satzes von Eingaben, Anzeigen einer ersten Vielzahl von Kandidatenaufgabenangeboten (811), die mit einer ersten Aufgabenart verbunden ist, wobei die erste Vielzahl von Kandidatenaufgabenangeboten basierend auf der bestimmten Benutzeraktivität und den bestimmten Kontextdaten bestimmt wird;
Erfassen eines zweiten Satzes von Eingaben (827), der einer Auswahl eines Kandidatenaufgabenangebots (815) der ersten Vielzahl von Kandidatenaufgabenangeboten entspricht, wobei das ausgewählte Kandidatenaufgabenangebot der ersten Vielzahl von Kandidatenaufgabenangeboten mit einer ersten Aufgabe verbunden ist;
als Reaktion auf das Erfassen des zweiten Satzes von Eingaben, Anzeigen einer zweiten Vielzahl von Kandidatenaufgabenangeboten (831), die mit einer zweiten Aufgabenart verbunden ist, die sich von der ersten Aufgabenart unterscheidet, wobei die zweite Vielzahl von Kandidatenaufgabenangeboten basierend auf der bestimmten Benutzeraktivität und den bestimmten Kontextdaten bestimmt wird;
Erfassen eines dritten Satzes von Eingaben (847), der einer Auswahl eines zweiten Kandidatenaufgabenangebots (835) der zweiten Vielzahl von Kandidatenaufgabenangeboten entspricht, wobei das ausgewählte zweite Kandidatenaufgabenangebot der zweiten Vielzahl von Kandidatenaufgabenangeboten mit einer zweiten Aufgabe verbunden ist;
als Reaktion auf das Erfassen des zweiten und des dritten Satzes von Eingaben, Verbinden der ersten Aufgabe und der zweiten Aufgabe mit einer Aufgabensequenz für eine Sprachverknüpfung, die der bestimmten Benutzeraktivität entspricht;
Empfangen einer Spracheingabe in natürlicher Sprache;
Bestimmen, ob die Spracheingabe in natürlicher Sprache Sprachverknüpfungskriterien für die Sprachverknüpfung erfüllt; und
gemäß einer Bestimmung, dass die Spracheingabe in natürlicher Sprache die Sprachverknüpfungskriterien für die Sprachverknüpfung erfüllt, Bewirken, dass die elektronische Vorrichtung die Aufgabensequenz durchführt, wobei das Durchführen der Aufgabensequenz das Durchführen der ersten Aufgabe und das Durchführen der zweiten Aufgabe umfasst.

2. Verfahren nach Anspruch 1, ferner umfassend:
als Reaktion auf das Erfassen des ersten Satzes von Eingaben:
Bereitstellen einer Abfrage, die Kontextdaten anfordert, die mit der bestimmten Benutzeraktivität verbunden sind; und
Empfangen eines vierten Satzes von Eingaben, einschließlich der angeforderten Kontextdaten.

3. Verfahren nach Anspruch 1, wobei die erste Vielzahl von Kandidatenaufgabenangeboten eine dritte Vielzahl von Kandidatenaufgabenangeboten, die einer ersten Aufgabe entsprechen, und eine vierte Vielzahl von Kandidatenaufgabenangeboten einschließt, die einer zweiten Aufgabe entsprechen.

4. Verfahren nach Anspruch 3, wobei ein erstes Kandidatenaufgabenangebot der dritten Vielzahl von Kandidatenaufgabenangeboten mit der ersten Aufgabe und einem ersten Parameter für die erste Aufgabe verbunden ist.

5. Verfahren nach Anspruch 3, wobei ein zweites Kandidatenaufgabenangebot der dritten Vielzahl von Kandidatenaufgabenangeboten mit der ersten Aufgabe und einem zweiten Parameter für die erste Aufgabe verbunden ist.

6. Verfahren nach einem der Ansprüche 1 bis 5, wobei die erste Vielzahl von Kandidatenaufgabenangeboten und die zweite Vielzahl von Kandidatenaufgabenangeboten auf einer ersten Benutzeroberfläche angezeigt werden.

7. Verfahren nach einem der Ansprüche 1 bis 5, wobei die erste Vielzahl von Kandidatenaufgabenangeboten auf einer ersten Benutzeroberfläche angezeigt werden, wobei das Verfahren ferner umfasst:
als Reaktion auf das Erfassen des zweiten Satzes von Eingaben, Anzeigen einer zweiten Benutzeroberfläche, die sich von der ersten Benutzeroberfläche unterscheidet, wobei die zweite Benutzeroberfläche die zweite Vielzahl von Kandidatenaufgabenangeboten einschließt.

8. Verfahren nach einem der Ansprüche 1 bis 5, ferner umfassend:
Bestimmen einer oder mehrerer Aufgaben, die in einem Kontext durchgeführt werden, der mit Kontextdaten übereinstimmt, die mit der bestimmten Benutzeraktivität verbunden sind; und
Bereitstellen der ersten Vielzahl von Kandidatenaufgabenangeboten, einschließlich des einen oder der mehreren Kandidatenaufgabenangebote, die mit der einen oder den mehreren Aufgaben verbunden sind, die in dem Kontext durchgeführt werden, der mit den Kontextdaten übereinstimmt, die mit der bestimmten Benutzeraktivität verbunden sind.

9. Verfahren nach einem der Ansprüche 1 bis 5, ferner umfassend:
Bestimmen einer oder mehrerer Aufgaben basierend auf einer empfangenen Angabe von Aufgaben, die durch eine Vielzahl von Benutzern, während sie mit der bestimmten Benutzeraktivität beschäftigt ist, am häufigsten angefordert werden; und
Bereitstellen der ersten Vielzahl von Kandidatenaufgabenangeboten, einschließlich eines oder mehrerer Kandidatenaufgabenangebote, die mit der einen oder den mehreren Aufgaben verbunden sind, die basierend auf der Angabe der Aufgaben bestimmt werden, die durch eine Vielzahl von Benutzern, während sie mit der bestimmten Benutzeraktivität beschäftigt ist, am häufigsten angefordert werden.

10. Verfahren nach einem der Ansprüche 1 bis 5, wobei das Verbinden der ersten Aufgabe und der zweiten Aufgabe mit der Sprachverknüpfung, die der bestimmten Benutzeraktivität entspricht, ferner das automatische Verbinden einer dritten Aufgabe mit der Aufgabensequenz für die Sprachverknüpfung umfasst, wobei die dritte Aufgabe als Teil der Aufgabensequenz gemäß einer Bestimmung durchzuführen ist, dass die Spracheingabe in natürlicher Sprache die Sprachverknüpfungskriterien für die Sprachverknüpfung erfüllt.

11. Verfahren nach Anspruch 2, wobei das Verbinden der ersten Aufgabe und der zweiten Aufgabe mit der Aufgabensequenz für die Sprachverknüpfung, die der Benutzeraktivität entspricht, ferner das Verbinden von Kontextkriterien, die der Benutzeraktivität entsprechen, mit der Aufgabensequenz umfasst.

12. Verfahren nach Anspruch 11, wobei die Kontextkriterien, die der Benutzeraktivität entsprechen, basierend auf den Kontextdaten, die mit der bestimmten Benutzeraktivität verbunden sind, bestimmt werden.

13. Verfahren nach einem der Ansprüche 11 bis 12, wobei die Kontextkriterien, die der bestimmten Benutzeraktivität entsprechen, basierend auf dem vierten Satz von Eingaben, einschließlich der angeforderten Kontextdaten, bestimmt werden.

14. Verfahren nach einem der Ansprüche 12 bis 13, ferner umfassend:
als Reaktion auf das Erfassen des zweiten und dritten Satzes von Eingaben, Anzeigen einer Vorschlagsmodusschnittstelle, einschließlich eines Vorschlagsmodusangebots, das, wenn es ausgewählt wird, bewirkt, dass die elektronische Vorrichtung den Vorschlagsmodus für die Aufgabensequenz aktiviert;
Empfangen eines fünften Satzes von Eingaben, der einer Auswahl des Vorschlagsmodusangebots entspricht; und
als Reaktion auf das Empfangen des fünften Satzes von Eingaben, Aktivieren des Vorschlagsmodus für die Aufgabensequenz.

15. Verfahren nach Anspruch 14, wobei die Vorschlagsmodusschnittstelle ferner ein Sprungangebot einschließt, das, wenn es ausgewählt wird, bewirkt, dass die elektronische Vorrichtung auf die Aktivierung des Vorschlagsmodus für die Aufgabensequenz verzichtet, wobei das Verfahren ferner umfasst:
Empfangen eines sechsten Satzes von Eingaben, der einer Auswahl des Sprungangebots entspricht; und
als Reaktion auf das Empfangen des sechsten Satzes von Eingaben, Verzichten auf die Aktivierung des Vorschlagsmodus für die Aufgabensequenz.

16. Verfahren nach Anspruch 11 bis 15, ferner umfassend:
Empfangen von Kontextdaten, die mit der elektronischen Vorrichtung verbunden sind;
Bestimmen, basierend auf den empfangenen Kontextdaten, ob die Kontextkriterien erfüllt sind;
gemäß einer Bestimmung, dass die Kontextkriterien erfüllt sind, Bereitstellen eines Vorschlagsangebots, das der Aufgabensequenz entspricht, das, wenn es ausgewählt wird, bewirkt, dass die elektronische Vorrichtung die erste Aufgabe und die zweite Aufgabe durchführt.

17. Verfahren nach einem der Ansprüche 1 bis 15, ferner umfassend das Anzeigen eines Bestätigungsindikators, der bestätigt, dass die erste Aufgabe und die zweite Aufgabe mit der Aufgabensequenz verbunden sind.

18. Elektronische Vorrichtung (800), umfassend:
einen oder mehrere Prozessoren;
einen Speicher; und
ein oder mehrere Programme, wobei das eine oder die mehreren Programme in dem Speicher gespeichert und konfiguriert sind, um durch den einen oder die mehreren Prozessoren ausgeführt zu werden, wobei das eine oder die mehreren Programme Anweisungen zum Durchführen der Verfahren nach einem der Ansprüche 1 bis 17 einschließen.

19. Computerlesbares Speichermedium, das ein oder mehrere Programme speichert, wobei das eine oder die mehreren Programme Anweisungen umfassen, die, wenn sie durch einen oder mehrere Prozessoren einer ersten elektronischen Vorrichtung ausgeführt werden, bewirken, dass die erste elektronische Vorrichtung die Verfahren nach einem der Ansprüche 1 bis 17 durchführt.

## Revendications

1. Procédé permettant de générer des séquences de tâches spécifiques à l'utilisateur, le procédé comprenant :
au niveau d'un dispositif électronique (800) avec un affichage (801) et une surface tactile :
la détermination de données contextuelles,
la détermination d'une activité d'utilisateur mise en œuvre par un utilisateur du dispositif électronique, en fonction de données contextuelles déterminées concordant avec des données contextuelles associées à des instances antérieures de l'activité d'utilisateur ;
l'affichage d'une pluralité d'affordances d'activité candidates (805, 806, 807) comportant une affordance d'activité candidate associée à l'activité d'utilisateur déterminée ;
la détection d'un premier ensemble d'entrées (808) correspondant à une sélection de l'affordance d'activité candidate ;
en réponse à la détection du premier ensemble d'entrées, l'affichage d'une première pluralité d'affordances de tâche candidates (811) associées à un premier type de tâche, dans lequel la première pluralité d'affordances de tâche candidates sont déterminées en fonction de l'activité d'utilisateur déterminée et des données contextuelles déterminées ;
la détection d'un deuxième ensemble d'entrées (827) correspondant à une sélection d'une affordance de tâche candidate (815) de la première pluralité d'affordances de tâche candidates, dans lequel l'affordance de tâche candidate sélectionnée de la première pluralité d'affordances de tâche candidates est associée à une première tâche ;
en réponse à la détection du deuxième ensemble d'entrées, l'affichage d'une deuxième pluralité d'affordances de tâche candidates (831) associée à un second type de tâche différent du premier type de tâche, dans lequel la deuxième pluralité d'affordances de tâche candidates sont déterminées en fonction de l'activité d'utilisateur déterminée et des données contextuelles déterminées ;
la détection d'un troisième ensemble d'entrées (847) correspondant à une sélection d'une seconde affordance de tâche candidate (835) de la deuxième pluralité d'affordances de tâche candidates, dans lequel la seconde affordance de tâche candidate sélectionnée de la deuxième pluralité d'affordances de tâche candidates est associée à une deuxième tâche ;
en réponse à la détection des deuxième et troisième ensembles d'entrées, l'association de la première tâche et de la deuxième tâche à une séquence de tâches pour un raccourci vocal correspondant à l'activité d'utilisateur déterminée ;
la réception d'une entrée de parole en langage naturel ;
le fait de déterminer si l'entrée de parole en langage naturel respecte des critères de raccourci vocal pour le raccourci vocal ; et
conformément à une détermination que l'entrée de parole en langage naturel respecte les critères de raccourci vocal pour le raccourci vocal, le fait d'amener le dispositif électronique à mettre en œuvre la séquence de tâches, dans lequel la mise en œuvre de la séquence de tâches comporte la mise en œuvre de la première tâche et la mise en œuvre de la deuxième tâche.

2. Procédé selon la revendication 1, comprenant en outre :
en réponse à la détection du premier ensemble d'entrées :
la fourniture d'une requête demandant des données contextuelles associées à l'activité d'utilisateur déterminée ; et
la réception d'un quatrième ensemble d'entrées comportant les données contextuelles demandées.

3. Procédé selon la revendication 1, dans lequel la première pluralité d'affordances de tâche candidates comporte une troisième pluralité d'affordances de tâche candidates correspondant à une première tâche et une quatrième pluralité d'affordances de tâche candidates correspondant à une deuxième tâche.

4. Procédé selon la revendication 3, dans lequel une première affordance de tâche candidate de la troisième pluralité d'affordances de tâche candidates est associée à la première tâche et à un premier paramètre pour la première tâche.

5. Procédé selon la revendication 3, dans lequel une seconde affordance de tâche candidate de la troisième pluralité d'affordances de tâche candidates est associée à la première tâche et à un second paramètre pour la première tâche.

6. Procédé selon l'une quelconque des revendications 1 à 5, dans lequel la première pluralité d'affordances de tâche candidates et la deuxième pluralité d'affordances de tâche candidates sont affichées sur une première interface utilisateur.

7. Procédé selon l'une quelconque des revendications 1 à 5, dans lequel la première pluralité d'affordances de tâche candidates sont affichées sur une première interface utilisateur, le procédé comprenant en outre :
en réponse à la détection du deuxième ensemble d'entrées, l'affichage d'une seconde interface utilisateur différente de la première interface utilisateur, la seconde interface utilisateur comportant la deuxième pluralité d'affordances de tâche candidates.

8. Procédé selon l'une quelconque des revendications 1 à 5, comprenant en outre :
la détermination d'une ou plusieurs tâches mises en œuvre dans un contexte qui concorde avec les données contextuelles associées à l'activité d'utilisateur déterminée ; et
la fourniture de la première pluralité d'affordances de tâche candidates comportant une ou plusieurs affordances de tâche candidates associées à la ou aux tâches mises en œuvre dans le contexte qui concorde avec les données contextuelles associées à l'activité d'utilisateur déterminée.

9. Procédé selon l'une quelconque des revendications 1 à 5, comprenant en outre :
la détermination d'une ou plusieurs tâches en fonction d'une indication reçue de tâches qui sont le plus habituellement demandées par une pluralité d'utilisateurs alors qu'ils participent à l'activité d'utilisateur déterminée ; et
la fourniture de la première pluralité d'affordances de tâche candidates comportant une ou plusieurs affordances de tâche candidates associées à la ou aux tâches déterminées en fonction de l'indication de tâches qui sont le plus habituellement demandées par une pluralité d'utilisateurs alors qu'ils participent à l'activité d'utilisateur déterminée.

10. Procédé selon l'une quelconque des revendications 1 à 5, dans lequel l'association de la première tâche et de la deuxième tâche au raccourci vocal correspondant à l'activité d'utilisateur déterminée comprend en outre l'association automatique d'une troisième tâche à la séquence de tâches pour le raccourci vocal, dans lequel la troisième tâche doit être mise en œuvre dans le cadre de la séquence de tâches conformément à une détermination que l'entrée de parole en langage naturel respecte les critères de raccourci vocal pour le raccourci vocal.

11. Procédé selon la revendication 2, dans lequel l'association de la première tâche et de la deuxième tâche à la séquence de tâches pour le raccourci vocal correspondant à l'activité d'utilisateur comprend en outre l'association de critères de contexte correspondant à l'activité d'utilisateur à la séquence de tâches.

12. Procédé selon la revendication 11, dans lequel les critères de contexte correspondant à l'activité d'utilisateur sont déterminés en fonction des données contextuelles associées à l'activité d'utilisateur déterminée.

13. Procédé selon l'une quelconque des revendications 11 à 12, dans lequel les critères de contexte correspondant à l'activité d'utilisateur déterminée sont déterminés en fonction du quatrième ensemble d'entrées comportant les données contextuelles demandées.

14. Procédé selon l'une quelconque des revendications 12 à 13, comprenant en outre :
en réponse à la détection des deuxième et troisième ensembles d'entrées l'affichage d'une interface de mode de suggestion comportant une affordance de mode de suggestion qui lorsqu'elle est sélectionnée amène le dispositif électronique à activer le mode de suggestion pour la séquence de tâches ;
la réception d'un cinquième ensemble d'entrées correspondant à une sélection de l'affordance de mode de suggestion ; et
en réponse à la réception du cinquième ensemble d'entrées, l'activation du mode de suggestion pour la séquence de tâches.

15. Procédé selon la revendication 14, dans lequel l'interface de mode de suggestion comporte en outre une affordance d'abandon qui lorsqu'elle est sélectionnée amène le dispositif électronique à renoncer à l'activation du mode de suggestion pour la séquence de tâches, le procédé comprenant en outre :
la réception d'un sixième ensemble d'entrées correspondant à une sélection de l'affordance d'abandon ; et
en réponse à la réception du sixième ensemble d'entrées, le fait de renoncer à l'activation du mode de suggestion pour la séquence de tâches.

16. Procédé selon la revendication 11 à 15, comprenant en outre :
la réception de données contextuelles associées au dispositif électronique ;
le fait de déterminer, en fonction des données contextuelles reçues, si les critères de contexte sont respectés ;
conformément à une détermination que les critères de contexte sont respectés, la fourniture d'une affordance de suggestion correspondant à la séquence de tâches, qui lorsqu'elle est sélectionnée amène le dispositif électronique à mettre en œuvre la première tâche et la deuxième tâche.

17. Procédé selon l'une quelconque des revendications 1 à 15, comprenant en outre l'affichage d'un indicateur de confirmation confirmant que la première tâche et la deuxième tâche sont associées à la séquence de tâches.

18. Dispositif électronique (800), comprenant :
un ou plusieurs processeurs ;
une mémoire ; et
un ou plusieurs programmes, dans lequel le ou les programmes sont stockés dans la mémoire et configurés pour être exécutés par le ou les processeurs, le ou les programmes comportant des instructions permettant de mettre en œuvre les procédés selon l'une quelconque des revendications 1 à 17.

19. Support de stockage lisible par ordinateur stockant un ou plusieurs programmes, le ou les programmes comprenant des instructions, qui lorsqu'elles sont exécutées par un ou plusieurs processeurs d'un premier dispositif électronique, amènent le premier dispositif électronique à mettre en œuvre les procédés selon l'une quelconque des revendications 1 à 17.
